# EUROPÄISCHE PATENTSCHRIFT

(11) **EP 2 361 291 B1**
(45) Veröffentlichungstag und Bekanntmachung des Hinweises auf die Patenterteilung: **06.11.2013**
(21) Anmeldenummer: 09801939.1
(22) Anmeldetag: 17.12.2009
(51) Int. Cl.: C09K 19/30, C09K 19/44, C09K 19/04

(54) **FLÜSSIGKRISTALLINES MEDIUM**
LIQUID CRYSTAL MEDIUM
MILIEU CRISTAL LIQUIDE

(30) Priorität: 22.12.2008 DE 102008064171
(43) Veröffentlichungstag der Anmeldung: 31.08.2011
(60) Teilanmeldung: 13004561.0
(73) Patentinhaber: Merck Patent GmbH, 64293 Darmstadt (DE)
(72) Erfinder: KLASEN-MEMMER, Melanie, 67259 Heuchelheim (DE); BREMER, Matthias, 64295 Darmstadt (DE); SCHNEIDER, Konstantin, 65520 Bad Camberg (DE); PAULUTH, Detlef, 64372 Ober-Ramstadt (DE)
(86) Internationale Anmeldenummer: PCT/EP2009/009079
(87) Internationale Veröffentlichungsnummer: WO 2010/072370

(56) Entgegenhaltungen:
- EP-A1- 1 958 999
- EP-A2- 0 474 062
- EP-A2- 1 106 671
- JP-A- 11 228 966
- JP-A- 11 236 567
- US-A- 6 066 268
- US-A1- 2005 230 661
- US-A1- 2006 198 967
- US-A1- 2006 198 968
- US-A1- 2008 011 984
- US-A1- 2008 273 160

## Beschreibung

Die Erfindung betrifft ein flüssigkristallines Medium mit negativer dielektrischer Anisotropie, welches mindestens eine Verbindung der Formel I, 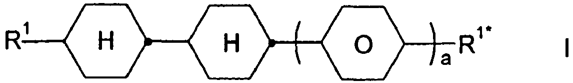 worin
- R¹ und R^{1*}: jeweils unabhängig voneinander einen Alkylrest mit 1-6 C-Atomen, und
- a: 1
bedeuten,
enthält,
und
zusätzlich eine oder mehrere Verbindungen ausgewählt aus der Gruppe der Verbindungen der Formel IIC, 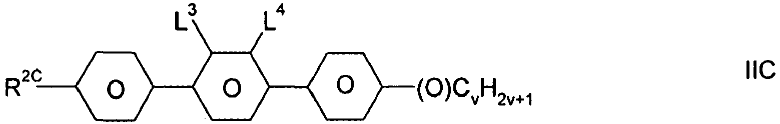 worin
- R^{2C}: H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 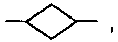 -C≡C-, -CF₂O-, -OCF₂-, -OC-O- oder -O-CO- so ersetzt sein können, dass O-Atome nicht direkt miteinander verknüpft sind,
- L³⁻⁴: jeweils unabhängig voneinander F oder Cl, und
- v: 1 bis 6
bedeuten,
oder
zusätzlich eine oder mehrere Verbindungen der Formeln L-1 bis L-11, 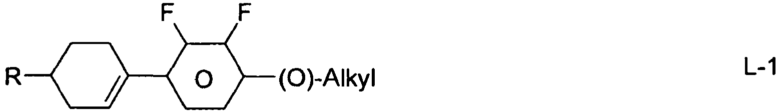 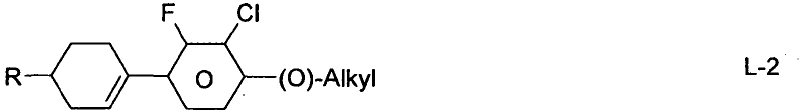 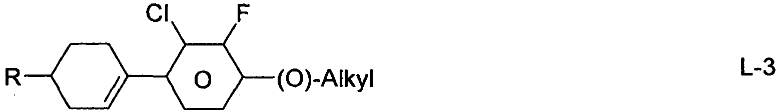 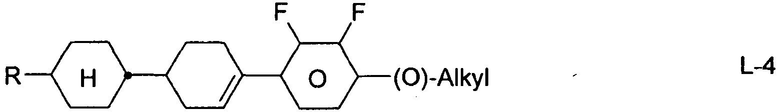 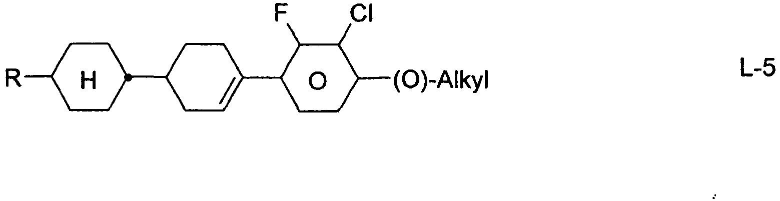 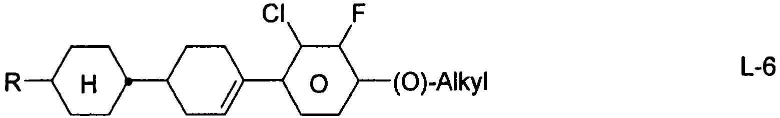 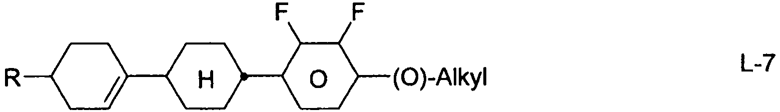 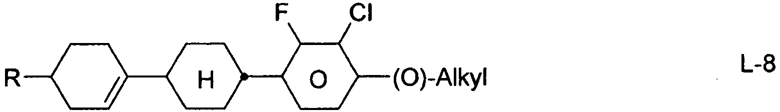 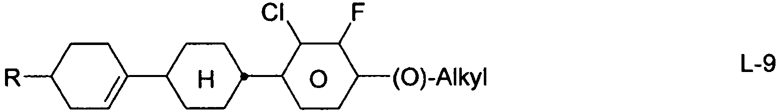 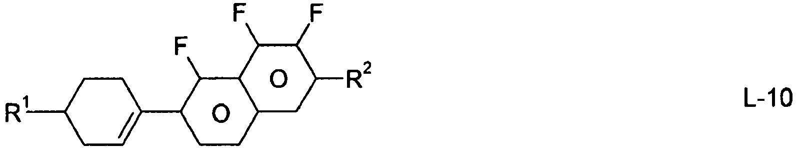 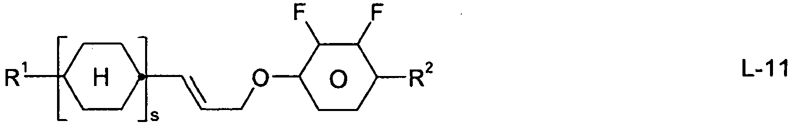 worin
- R, R¹ und R²: jeweils unabhängig voneinander die für R^{2C} in Anspruch 1 angegebenen Bedeutungen haben und Alkyl ein Alkylrest mit 1-6 C-Atomen, und
- s: 1 oder 2
bedeuten,
enthält.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Besonders für Fernsehanwendungen ist das Erreichen niedriger Schaltzeiten sehr wichtig. Um diese zu erreichen, werden als dielektrisch neutrale Verbindungen bei ECB- bzw. VA-Anwendungen, insbesondere Verbindungen der Formeln 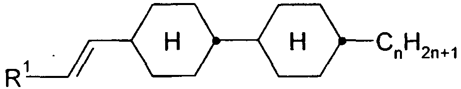 wobei R¹ = H oder CH₃ 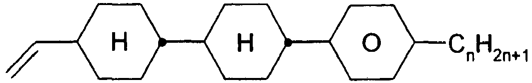 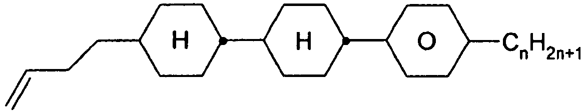 verwendet, da diese sich durch besonders niedrige Rotationsviskositäten und sehr gute Löslichkeiten auszeichnen.

Bei LCD-Fernsehanwendungen kommt es häufig zu sogenannten Reliability-Problemen, wie beispielsweise dem Image Sticking, d. h., einem scheinbaren "Einbrennen" des Bildes, wenn das Display über längere Zeit hinweg angesteuert wurde.

Dieses Problem tritt häufig erst nach längeren Laufzeiten der Fernsehgeräte auf. Als Ursache wird häufig die lange Bestrahlungszeit mit dem sogenannten Backlight (Hintergrundbeleuchtung) bei gleichzeitig erhöhten Betriebstemperaturen angesehen, die zu noch nicht geklärten Prozessen im Display, beispielsweise einer Wechselwirkung zwischen Orientierungsschicht und einer Flüssigkristall-Mischung führen kann. Auf Seiten der Flüssigkristall-Mischung wird in den häufig verwendeten neutralen Alkenyl-Verbindungen, die beispielsweise oben angeführt sind, die Ursache für das Auftreten von Image Sticking Problemen gesehen.

Der Erfindung liegt die Aufgabe zugrunde, Flüssigkristall-Mischungen, insbesondere für Monitor- und TV-Anwendungen, welche auf dem ECB- oder auf dem IPS- oder FFS-Effekt beruhen, bereitzustellen, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig niedrige Schaltzeiten aufweisen und gleichzeitig ein verbessertes Reliability-Verhalten, insbesondere kein oder ein deutlich verringertes Image-Sticking nach langen Laufzeiten aufweisen.

Überraschenderweise wurde nun gefunden, dass diese Aufgabe gelöst werden kann, wenn man in diesen Anzeigeelementen nematische Flüssigkristallmischungen gemäß Anspruch 1 verwendet, die mindestens eine Verbindung der Formel I 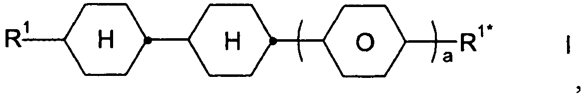 worin
- R¹ und R^{1*}: jeweils unabhängig voneinander einen Alkylrest mit 1 bis 6 C-Atomen, und
- a: 1
bedeuten,
enthalten.

Der Einsatz der Verbindungen der Formel I in VA-Mischungen ist beispielsweise bekannt aus der EP 0 474 062 B1, U.S. 6,066,268, JP H11-228966, JP H11-236567, EP 1 106 671 B1, U.S. 2005/0230661, EP 1 958 999 A1, US 2006/198968 A1, US 2008/273160 A1, US 2008/011984 A1, US 2006/198967 A1. Im Gegensatz zum Stand der Technik zeichnet sich das erfindungsgemäße Mischungskonzept mit negativer dielektrischer Anisotropie trotz der Abwesenheit von neutralen Alkenylverbindungen durch geringe Schaltzeiten bei gleichzeitig guter Tieftemperaturstabilität aus.

Gegenstand der Erfindung ist somit ein flüssigkristallines Medium gemäß Anspruch 1, welches mindestens eine Verbindung der Formel I enthält.

Die erfindungsgemäßen Mischungen zeigen vorzugsweise sehr breite nematische Phasenbereiche mit Klärpunkten ≥ 60 °C, vorzugsweise ≥ 65 °C, insbesondere ≥ 70 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten und niedrige Schaltzeiten. Die erfindungsgemäßen Mischungen zeichnen sich weiterhin dadurch aus, dass zusätzlich zur Verbesserung der Rotationsviskosität γ₁ eine Erhöhung der elastischen Konstanten K₃₃ zur Verbesserung der Schaltzeiten zu beobachten ist, und sie ein verbessertes Reliability-Verhalten zeigen.

Einige bevorzugte Ausführungsformen der erfindungsgemäßen Mischungen werden im Folgenden genannt:
a) R¹ und R^{1*} in der Formel I bedeutet geradkettiges Alkyl, insbesondere C₂H₅, n-C₃H₇, n-C₄H₉, ferner n-C₅H₁₁, n-C₆H₁₃. Besonders bevorzugt bedeutet R¹ n-C₃H₇ und R^{1*} CH₃, C₂H₅ oder n-C₃H₇.
b) Flüssigkristallines Medium, welches ein, zwei, drei, vier oder mehr, vorzugsweise ein, zwei oder drei, Verbindungen der Formel I enthält,
c) Flüssigkristallines Medium, wobei der Anteil an Verbindungen der Formel I im Gesamtgemisch ≥ 3, vorzugsweise ≥ 10 Gew.%, besonders bevorzugt ≥ 15 Gew.%, beträgt. Insbesondere bevorzugt sind flüssigkristalline Medien, die 3-50 %, vorzugsweise 25-35 %, einer oder mehrerer Verbindungen der Formel I enthalten. Verbindungen der Formel I* mit a = 0 sind vorzugsweise in Mengen von 15-35 % in der Mischung enthalten. Verbindungen der Formel I mit a = 1 sind vorzugsweise in Mengen von 3-30 % in der Mischung enthalten.
d) Bevorzugte Verbindungen der Formel I und der Formel I* sind die Verbindungen der Formeln I-1, I-2 und I*-3 bis I*-6,

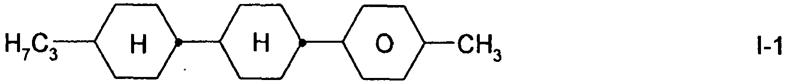

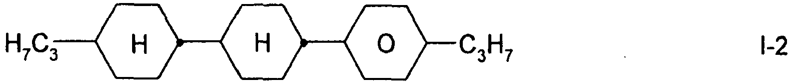

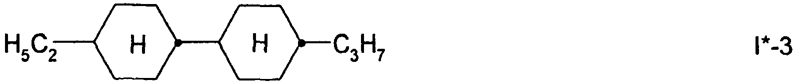

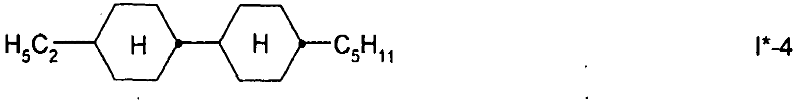

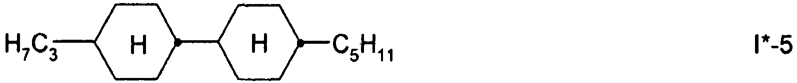

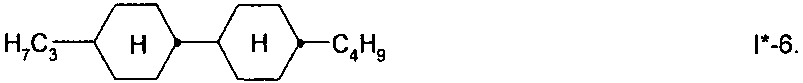

Erfindungsgemäße Mischungen enthalten vorzugsweise die Verbindungen der Formel I-1 und/oder I-2, vorzugsweise in Mengen von 5-30 %.

Besonders bevorzugt enthält das erfindungsgemäße Medium die Dreikern-Verbindungen der Formel I-1 und/oder der Formel I-2 in Kombination mit einer oder mehreren Zweikern-Verbindungen der Formeln I*-3 bis I*-6. Vorzugsweise beträgt der Gesamtanteil der Verbindungen der Formel I-1 und/oder I-2 in Kombination mit einer oder mehreren Verbindungen ausgewählt aus den Zweikernverbindungen der Formeln I*-3 bis I*-6 5-40 %, ganz besonders bevorzugt 15-35 %.

Ganz besonders bevorzugte Mischungen enthalten die Verbindungen I-1 und I*-3:

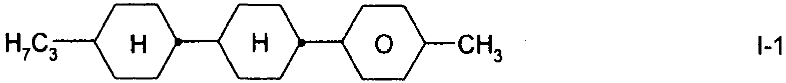

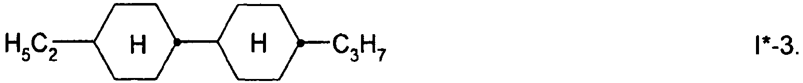

Vorzugsweise sind die Verbindungen I-1 und I*-3 in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten die Verbindungen I-2 und I*-3:

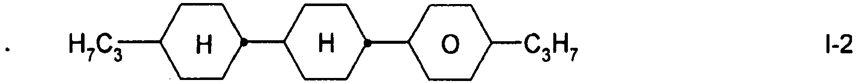

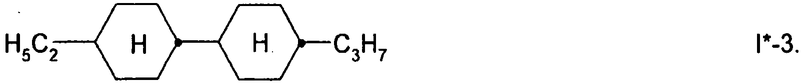

Vorzugsweise sind die Verbindungen I-2 und I*-3 in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten folgende drei Verbindungen:

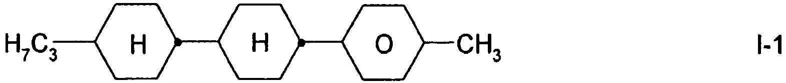

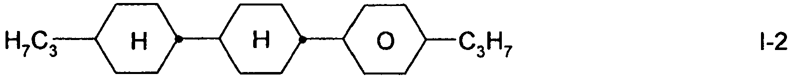

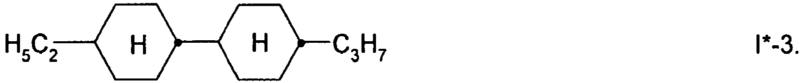

Vorzugsweise sind die Verbindungen I-1, I-2 und I*-3 in der Mischung in einer Konzentration von 15-35 %, besonders bevorzugt von 15-25 % und insbesondere bevorzugt von 18-22 % bezogen auf die Gesamtmischung, enthalten.

e) Flüssigkristallines Medium, welches zusätzlich eine oder mehrere Verbindungen ausgewählt aus der Gruppe der Verbindungen der Formeln IIA, IIB und IIC enthält, 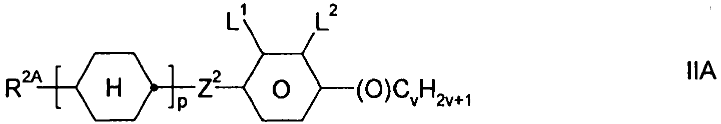 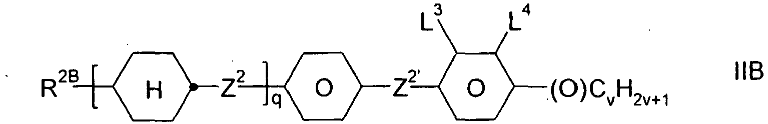 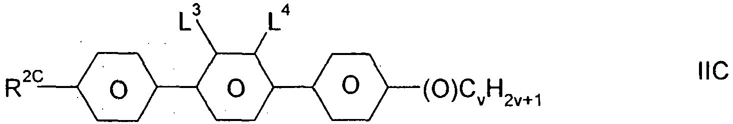 worin
- R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 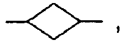 -C≡C-, -CF₂O-, -OCF₂-, -OC-O- oder -O-CO- so ersetzt sein können, dass O-Atome nicht direkt miteinander verknüpft sind, L¹⁻⁴ jeweils unabhängig voneinander F oder Cl,
- Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
- p: 1 oder 2,
- q: 0 oder 1, und
- v: 1 bis 6
bedeuten.

In den Verbindungen der Formeln IIA und IIB können Z² gleiche oder unterschiedliche Bedeutungen haben. In den Verbindungen der Formel IIB können Z² und Z^{2'} gleiche oder verschiedene Bedeutungen aufweisen.

In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄-Brücke.

Sofern in der Formel IIB Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner CᵥH₂ᵥ₊₁. In den Verbindungen der Formel IIC bedeutet (O)CᵥH₂ᵥ₊₁ vorzugsweise CᵥH₂ᵥ₊₁. In den Verbindungen der Formel IIC bedeuten L³ und L⁴ vorzugsweise jeweils F.

Bevorzugte Verbindungen der Formeln IIA, IIB und IIC werden nachfolgend genannt: 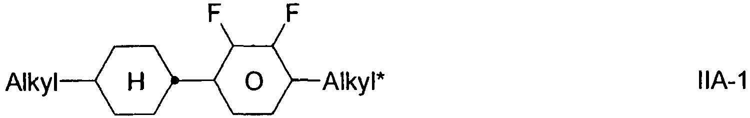 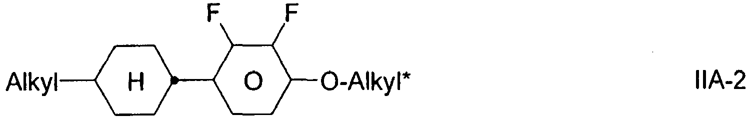 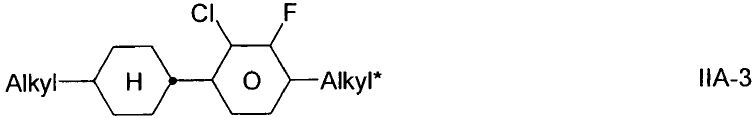 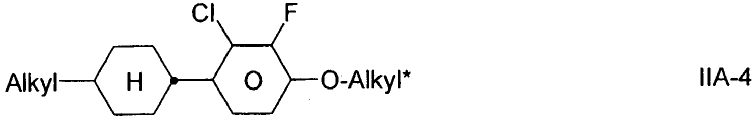 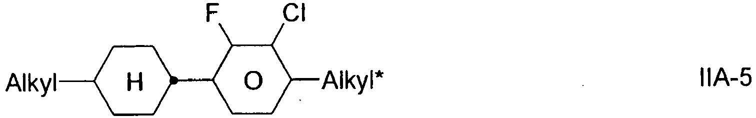 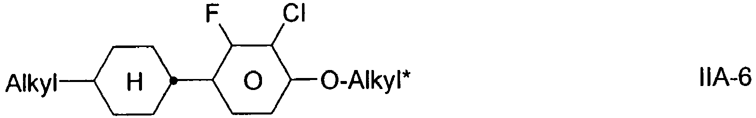 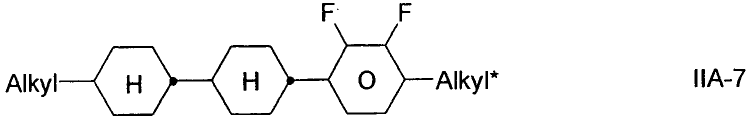 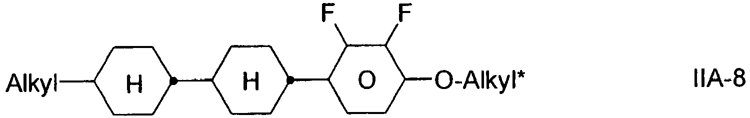 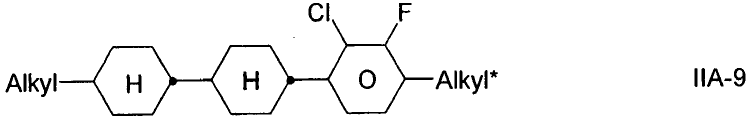 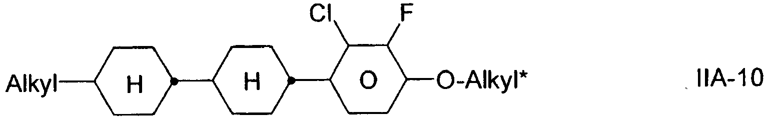 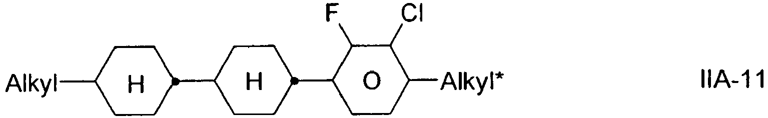 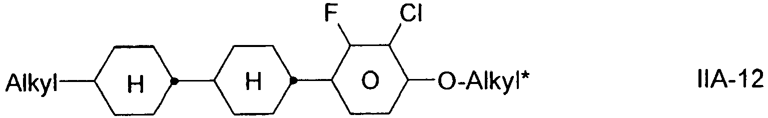 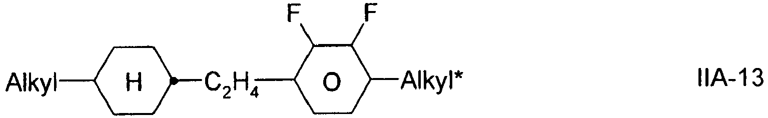 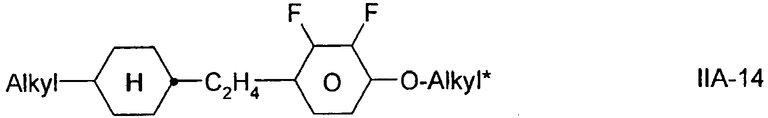 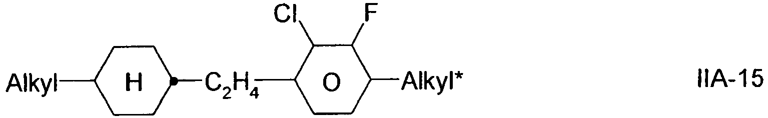 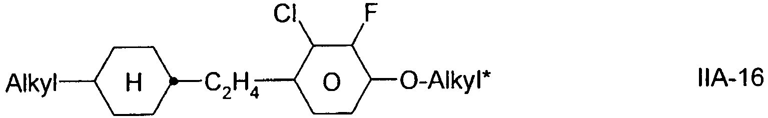 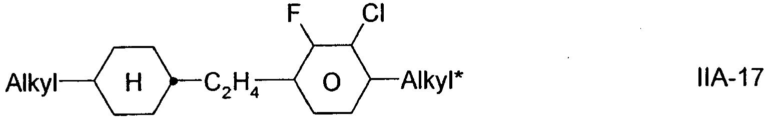 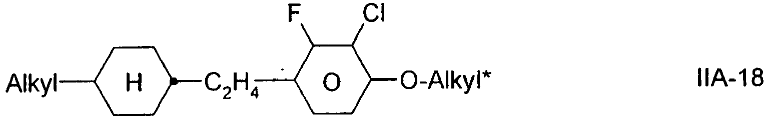 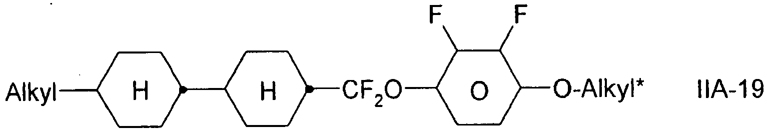 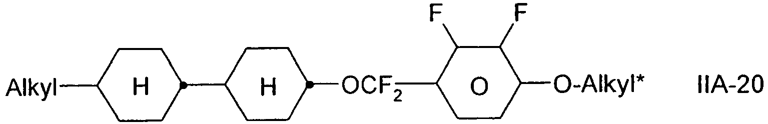 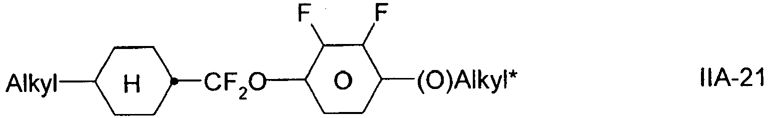 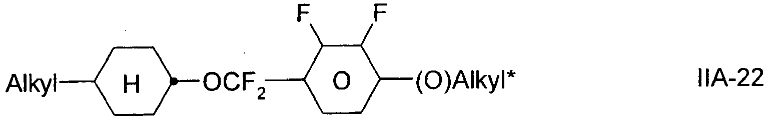 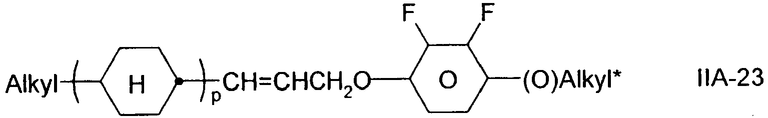 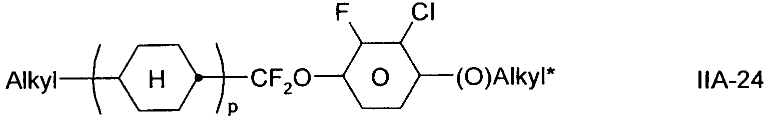 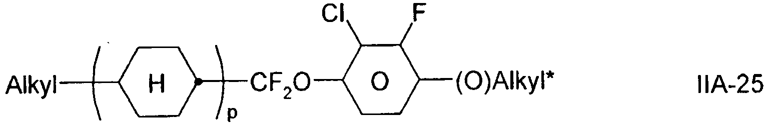 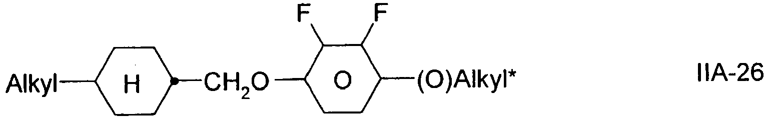 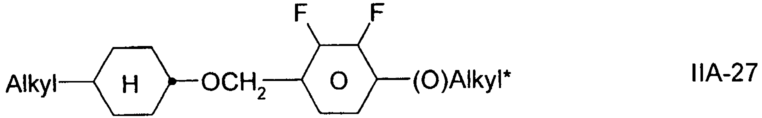 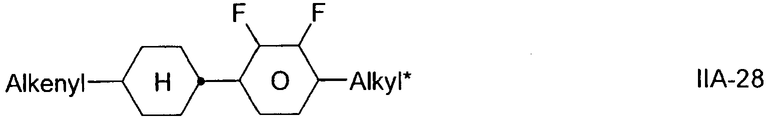 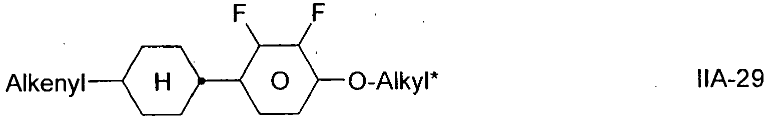 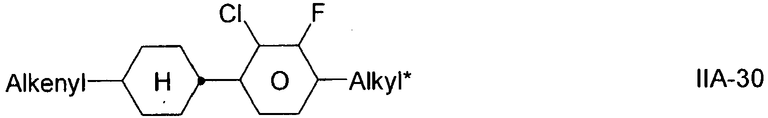 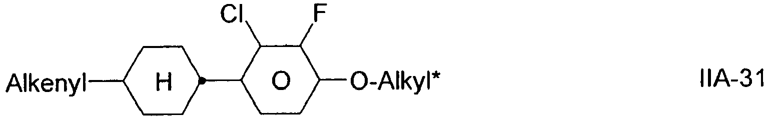 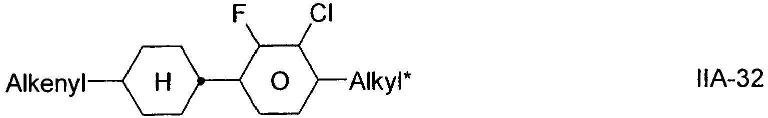 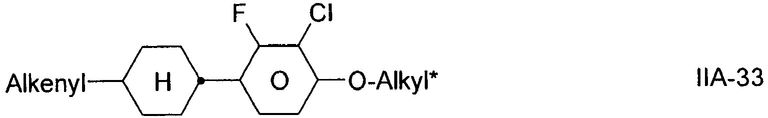 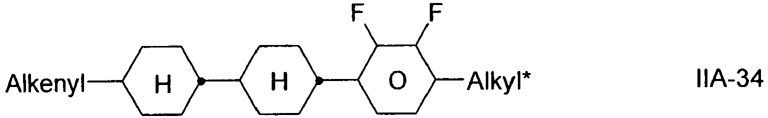 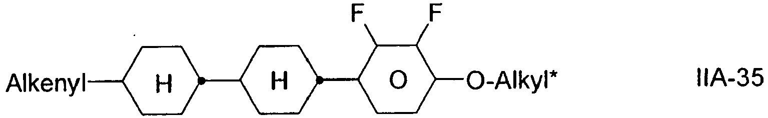 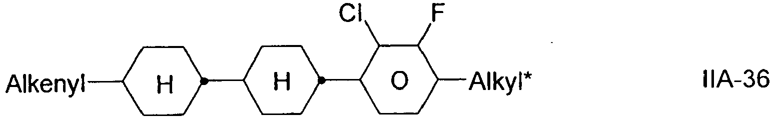 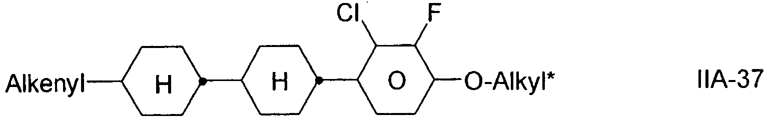 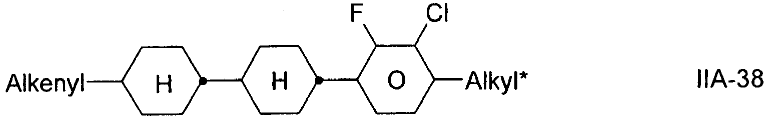 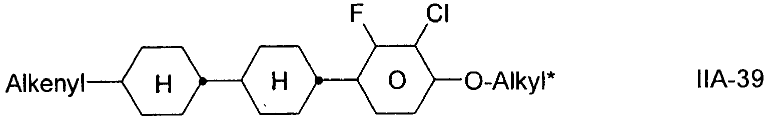 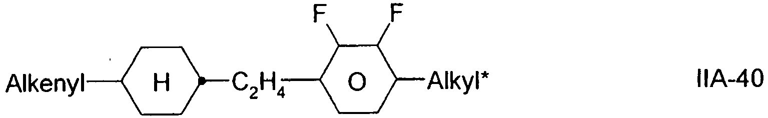 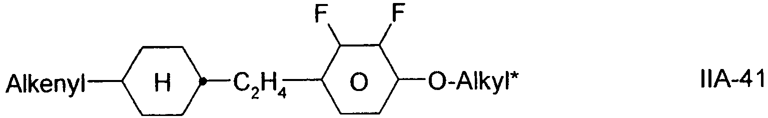 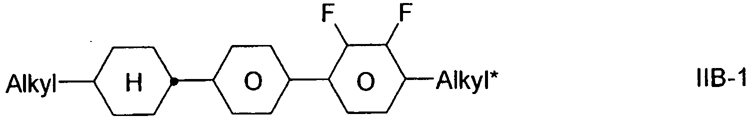 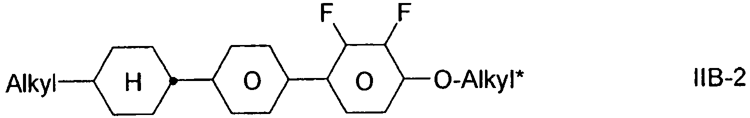 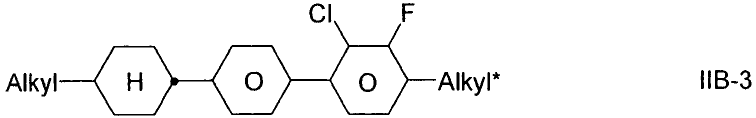 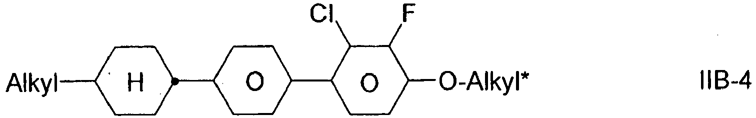 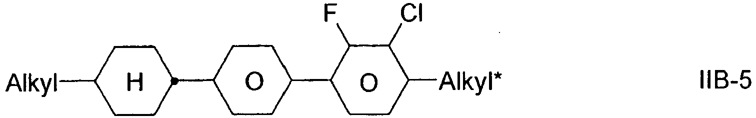 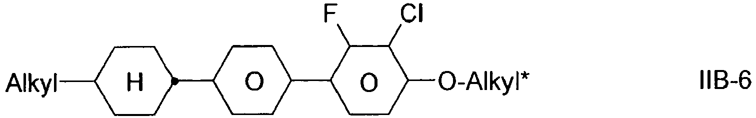 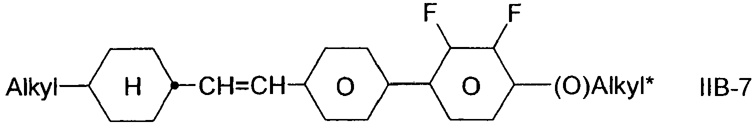 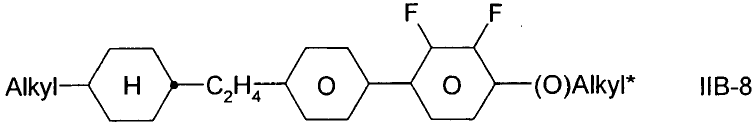 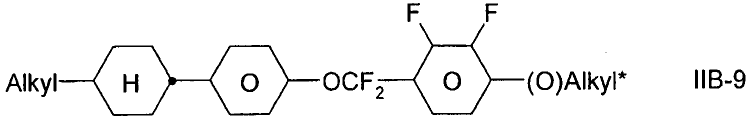 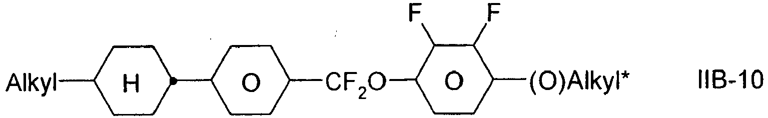 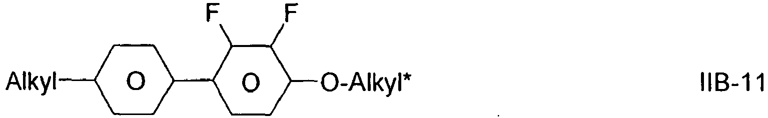 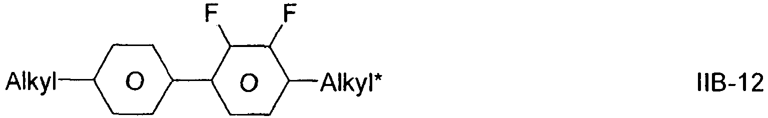 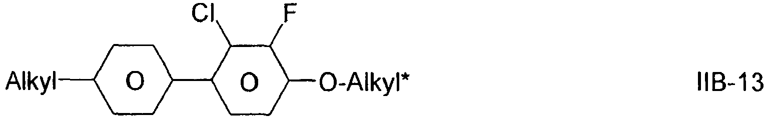 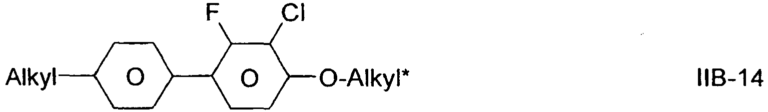 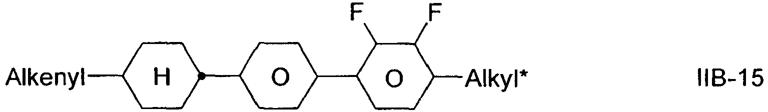 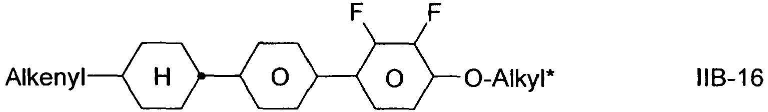 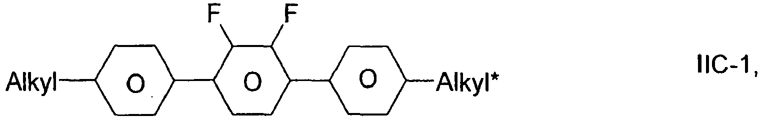 worin Alkyl und Alkyl* jeweils unabhängig voneinander einen geradkettigen Alkylrest mit 1-6 C-Atomen bedeuten.

Besonders bevorzugte erfindungsgemäße Mischungen enthalten eine oder mehrere Verbindungen der Formeln IIA-2, IIA-8, IIA-14, IIA-29, IIA-35, IIB-2, IIB-11, IIB-16 und IIC-1.

Vorzugsweise beträgt der Anteil an Verbindungen der Formeln IIA und/oder IIB im Gesamtgemisch mindestens 20 Gew.%.

Besonders bevorzugte erfindungsgemäße Medien enthalten eine Verbindung der Formel IIC-1, 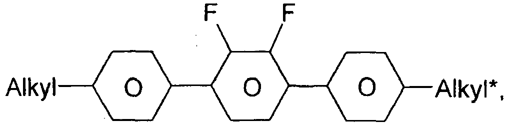 worin Alkyl und Alkyl*' die oben angegebenen Bedeutungen haben, vorzugsweise in Mengen von > 3 Gew.%, insbesondere > 5 Gew.% und besonders bevorzugt von 5-25 Gew.%.
f) Flüssigkristallines Medium, welches zusätzlich eine oder mehrere Verbindungen der Formel III 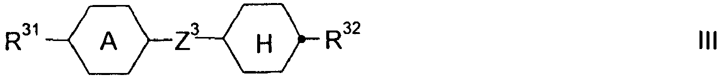 enthält,
   worin
   - R³¹ und R³²: jeweils unabhängig voneinander einen geradkettigen Alkyl-, Alkoxyalkyl- oder Alkoxyrest mit bis zu 12 C-Atomen, und 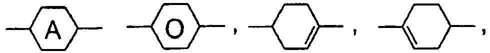 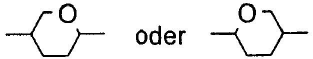
   - Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-
bedeuten.

Bevorzugte Verbindungen der Formel III werden nachfolgend genannt, 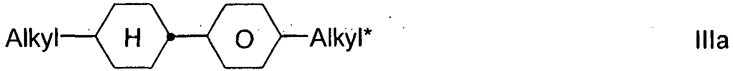 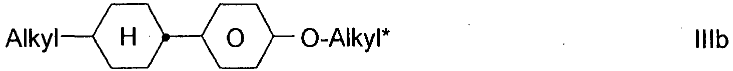 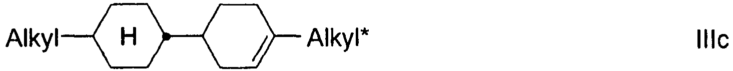 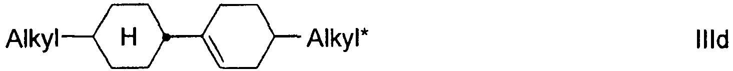 worin
- Alkyl und Alkyl*: jeweils unabhängig voneinander einen geradkettigen Alkylrest mit 1-6 C-Atomen
bedeuten.

Vorzugsweise enthält das erfindungsgemäße Medium mindestens eine Verbindung der Formel IIIa und/oder Formel IIIb.

Der Anteil an Verbindungen der Formel III im Gesamtgemisch beträgt vorzugsweise mindestens 5 Gew.%.
g) Flüssigkristallines Medium enthaltend zusätzlich eine Verbindung der Formel 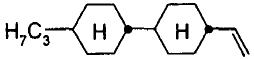 und / oder 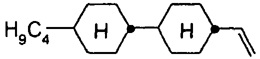 und / oder 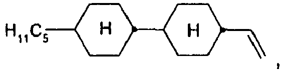 vorzugsweise in Gesamtmengen von < 20 Gew.%, insbesondere von <10 Gew.%. Weiterhin bevorzugt sind erfindungsgemäße Mischungen enthaltend die Verbindung 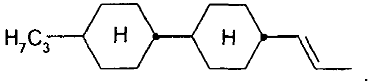
h) Flüssigkristallines Medium, welches zusätzlich eine oder mehrere Vierkernverbindungen der Formeln, 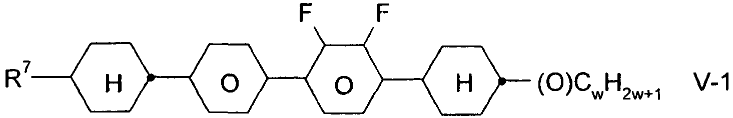 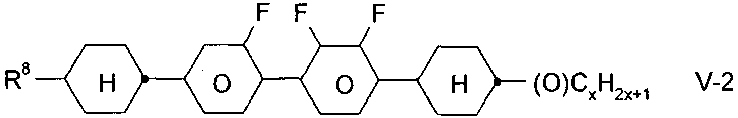 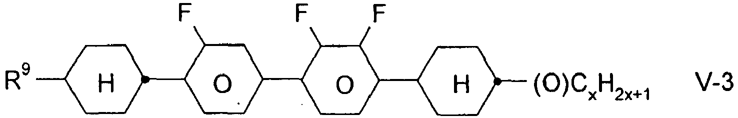 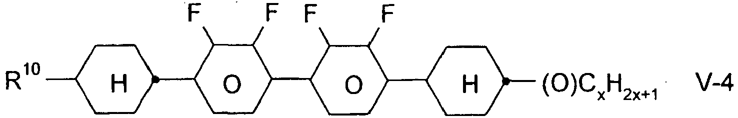 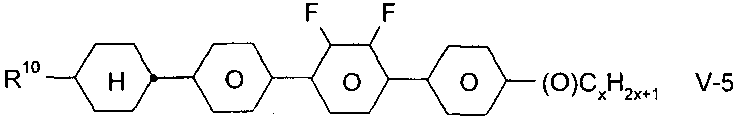 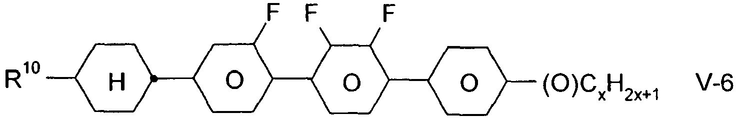 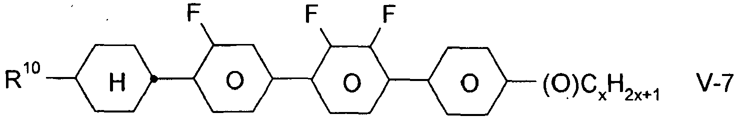 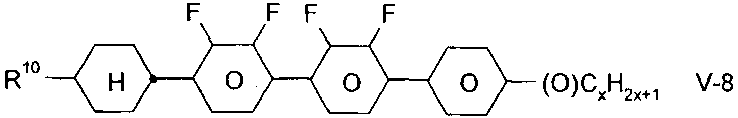 worin
   - R⁷⁻¹⁰: jeweils unabhängig voneinander eine der in Anspruch 2 für R^{2A} angegebenen Bedeutung haben, und
   w und x jeweils unabhängig voneinander 1 bis 6 bedeuten,
   enthält.
i) Flüssigkristallines Medium, welches zusätzlich eine oder mehrere Verbindungen der Formeln Y-1 bis Y-6 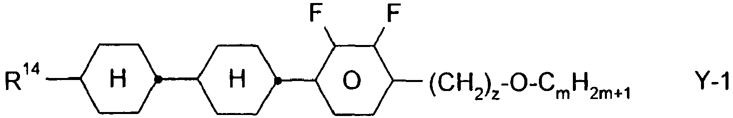 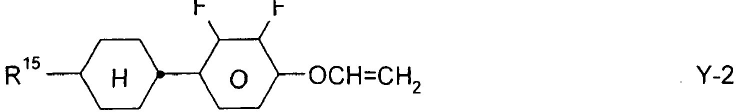 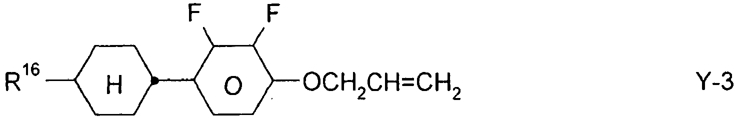 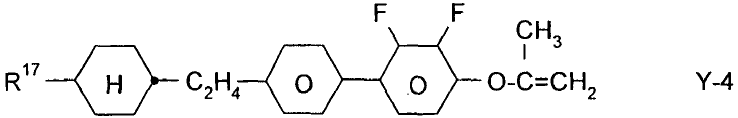 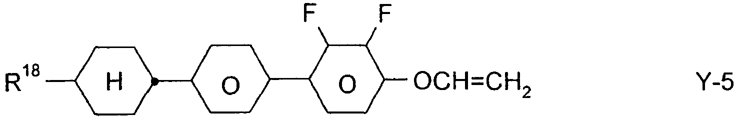 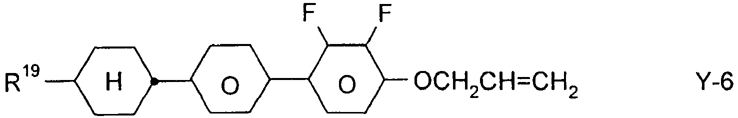 enthält,
   worin R¹⁴-R¹⁹ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formel Y-1, vorzugsweise in Mengen von ≥ 5 Gew.%.
j) Flüssigkristallines Medium enthaltend zusätzlich ein oder mehrere fluorierte Terphenyle der Formeln T-1 bis T-20, 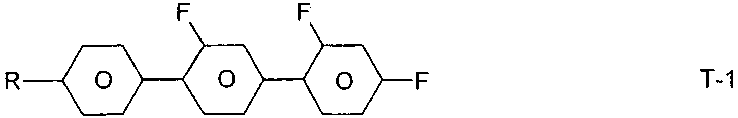 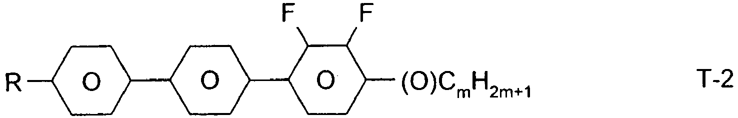 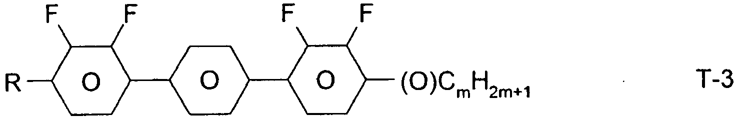 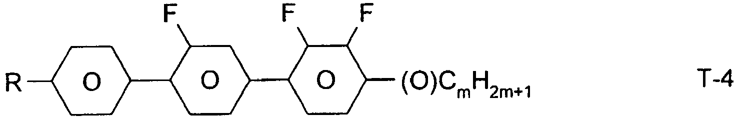 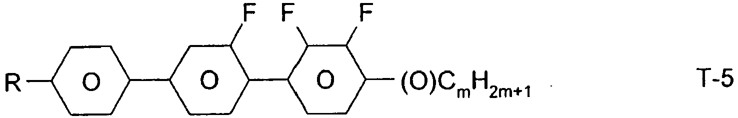 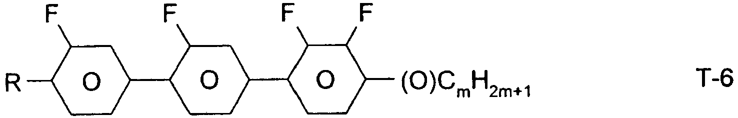 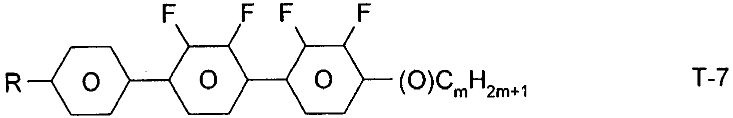 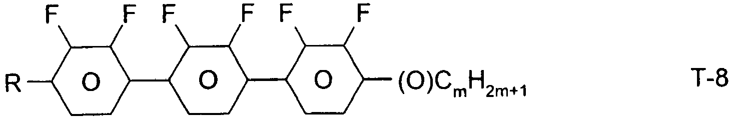 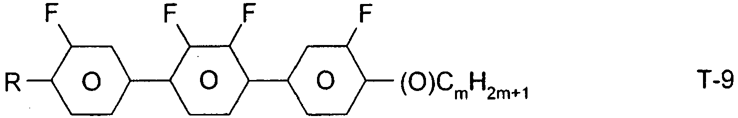 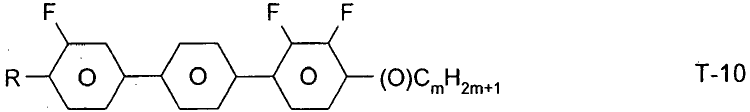 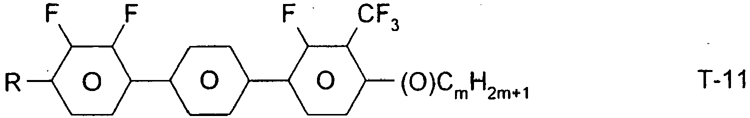 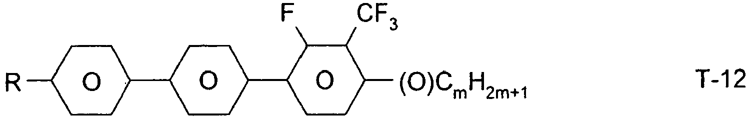 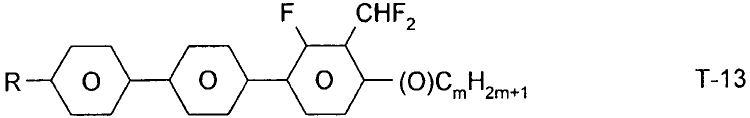 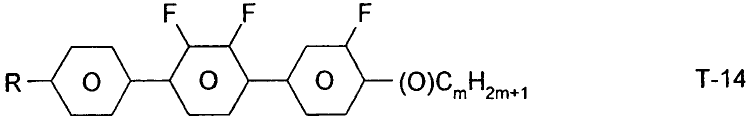 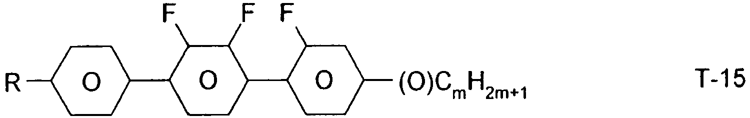 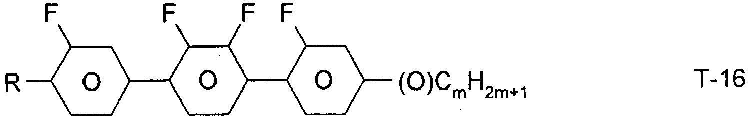 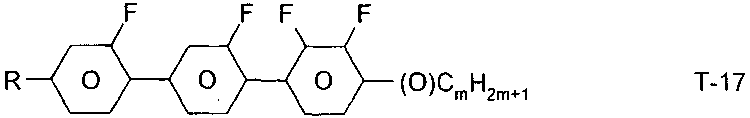 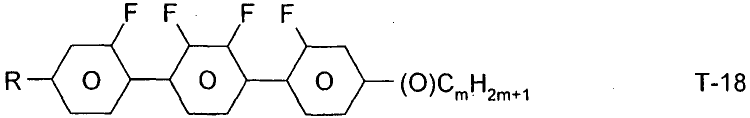 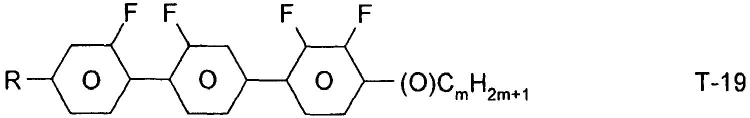 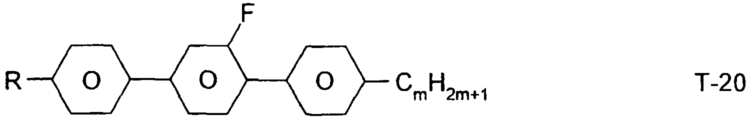 worin
   R geradkettiger Alkyl- oder Alkoxyrest mit 1-7 C-Atomen bedeutet, und m 1-6 ist,
   enthält.

Vorzugsweise bedeutet R Methyl, Ethyl, Propyl, Butyl, Pentyl, Hexyl Methoxy, Ethoxy, Propoxy, Butoxy, Pentoxy.

Das erfindungsgemäße Medium enthält die Terphenyle der Formeln T-1 bis T-20 vorzugsweise in Mengen von 2-30 Gew.%, insbesondere von 5-20 Gew.%.

Besonders bevorzugt sind Verbindungen der Formeln T-1, T-2 und T-20. In diesen Verbindungen bedeutet R vorzugsweise Alkyl, ferner Alkoxy jeweils mit 1-5 C-Atomen.
Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-20.
k) Flüssigkristallines Medium enthaltend zusätzlich ein oder mehrere Biphenyle der Formeln B-1 bis B-3, 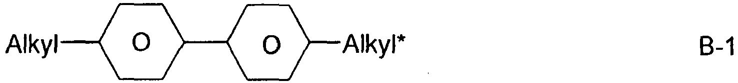 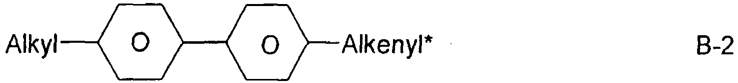 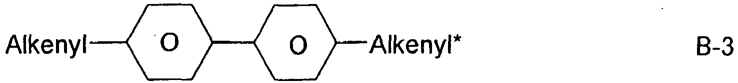 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen
   bedeuten.

Der Anteil der Biphenyle der Formeln B-1 bis B-3 in der Gesamtmischung beträgt vorzugsweise mindestens 3 Gew.%, insbesondere ≥ 5 Gew.%.

Von den Verbindungen der Formeln B-1 bis B-3 sind die Verbindungen der Formel B-2 insbesondere bevorzugt.

Besonders bevorzugte Biphenyle sind 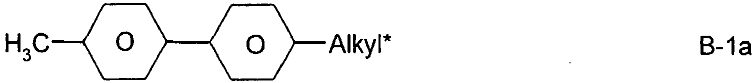 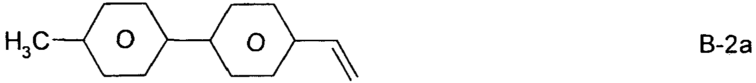 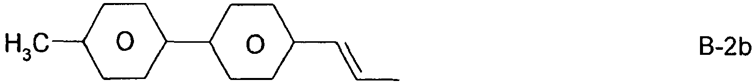 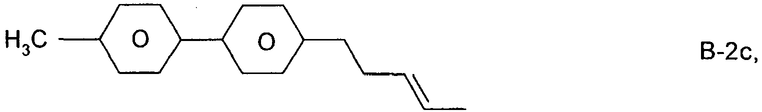 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
l) Flüssigkristallines Medium enthaltend mindestens eine Verbindung der Formeln Z-1 bis Z-7, 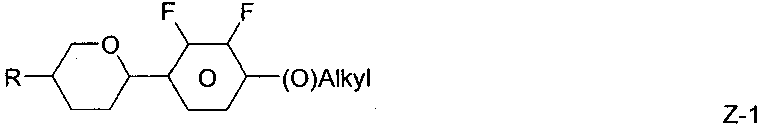 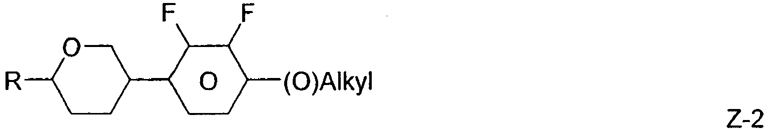 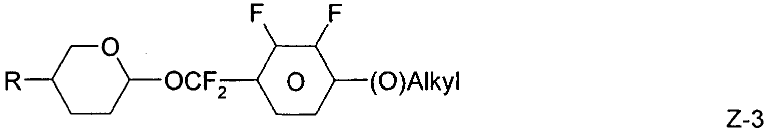 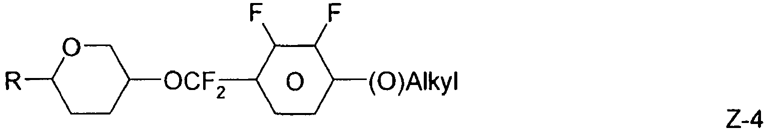 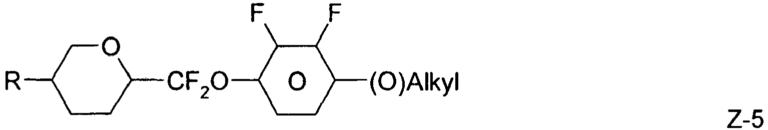 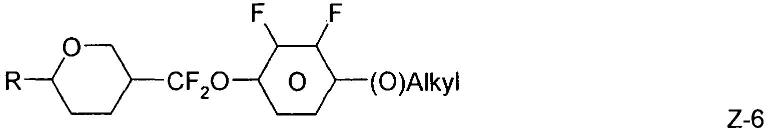 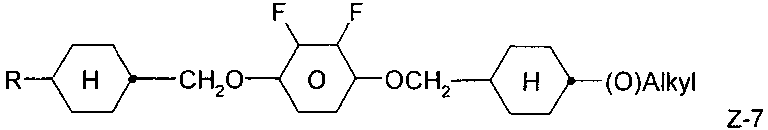 worin R und Alkyl die oben angegebenen Bedeutungen haben.
m) Flüssigkristallines Medium enthaltend mindestens eine Verbindung der Formeln O-1 bis O-18, 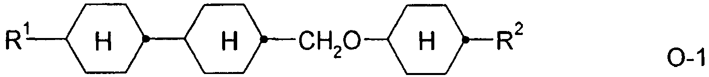 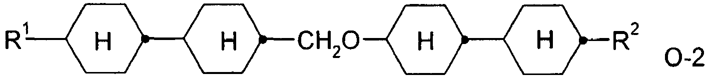 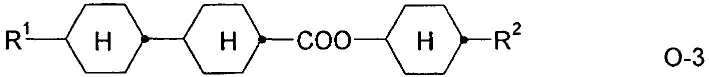 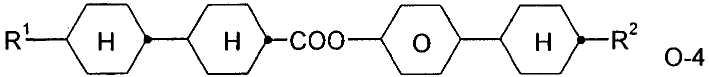 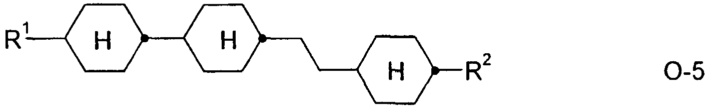 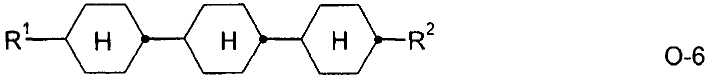 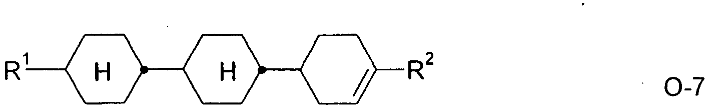 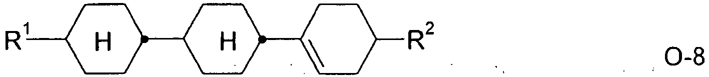 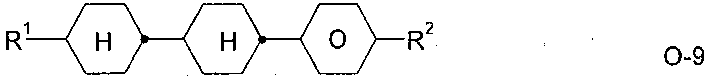 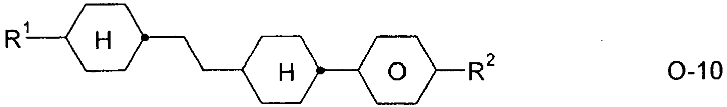 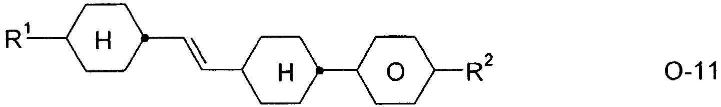 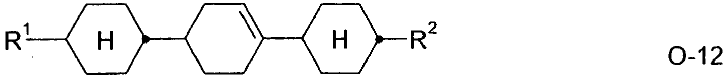 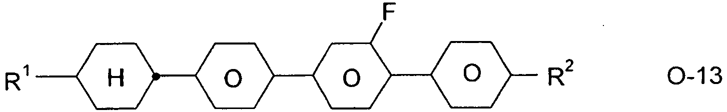 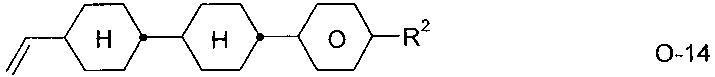 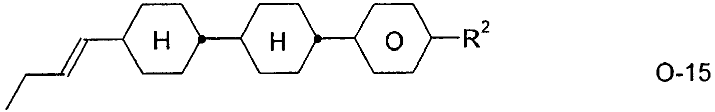 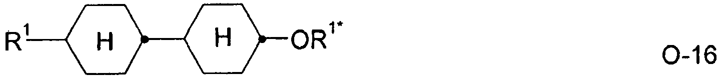 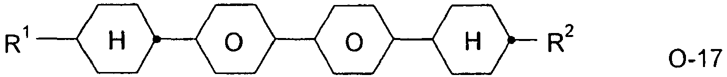 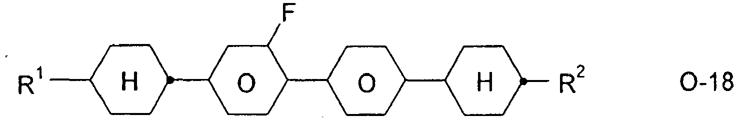 worin R¹ und R² die für R^{2A} angegebenen Bedeutungen haben. Vorzugsweise bedeuten R¹ und R² jeweils unabhängig voneinander geradkettiges Alkyl.

Bevorzugte Medien enthalten eine oder mehrere Verbindungen der Formeln O-1, O-3, O-4, O-9, O-13, O-14, O-15, O-16, O-17 und/oder O-18.
n) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 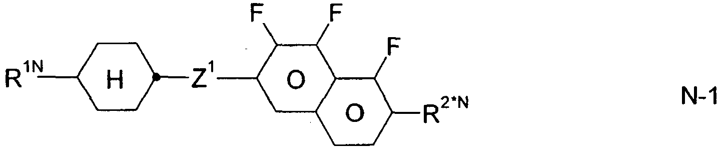 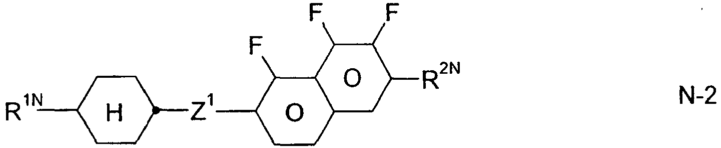 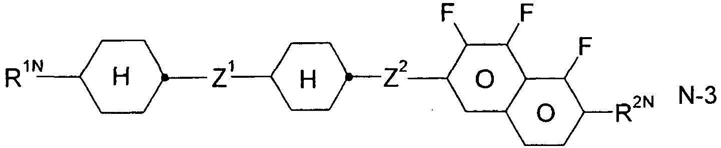 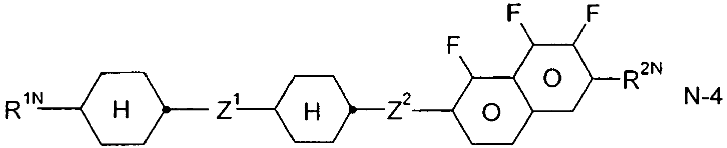 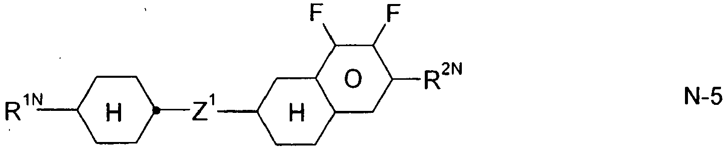 worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und
   - Z¹ und Z²: jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
o) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF, 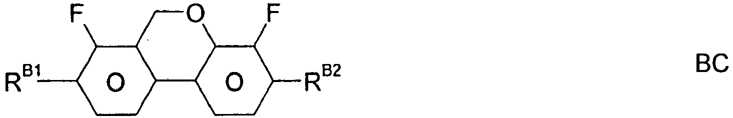 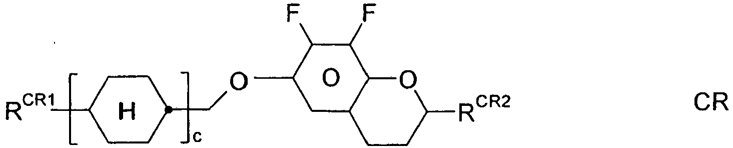 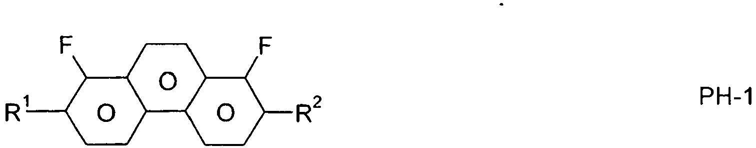 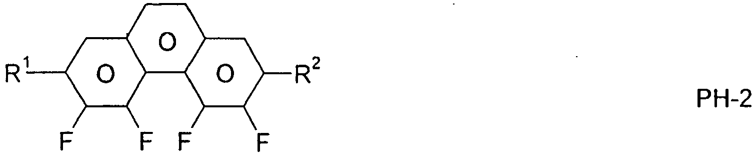 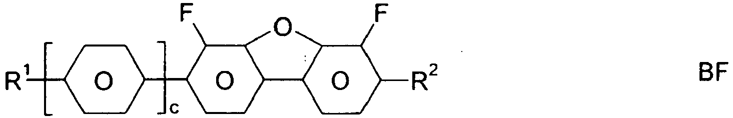 worin
   R^{B1}, R^{B2}, R^{CR1}, R^{CR2} R¹, R² jeweils unabhängig voneinander die Bedeutung von R^{2A} aufweisen. c ist 0, 1 oder 2.

Die erfindungsgemäßen Mischungen enthalten die Verbindungen der Formeln BC, CR, PH-1, PH-2 und/oder BF vorzugsweise in Mengen von 3 bis 20 Gew.%, insbesondere in Mengen von 3 bis 15 Gew.%. Besonders bevorzugte Verbindungen der Formeln BC und CR sind die Verbindungen BC-1 bis BC-7 und CR-1 bis CR-5, 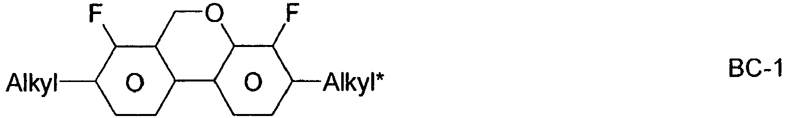 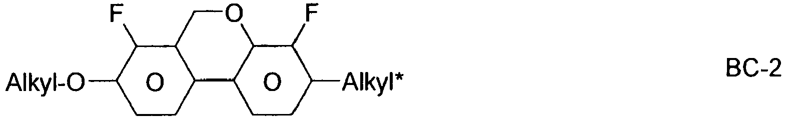 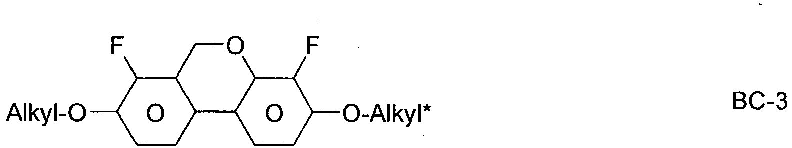 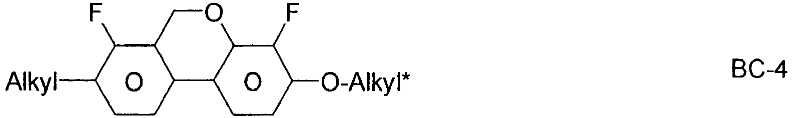 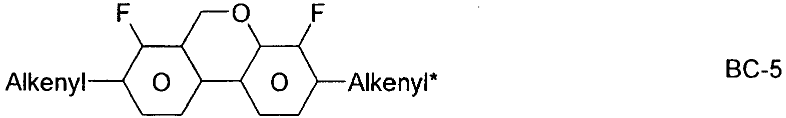 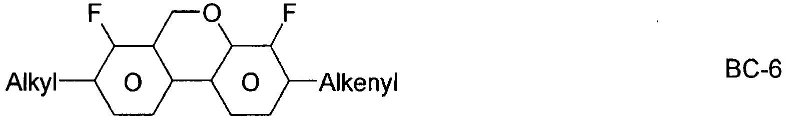 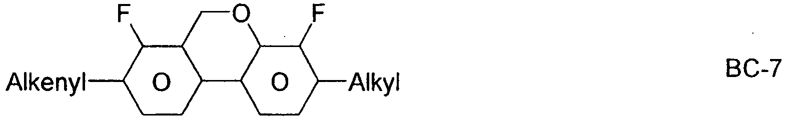 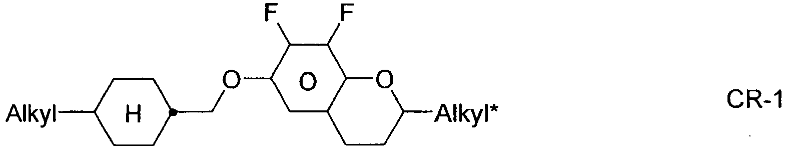 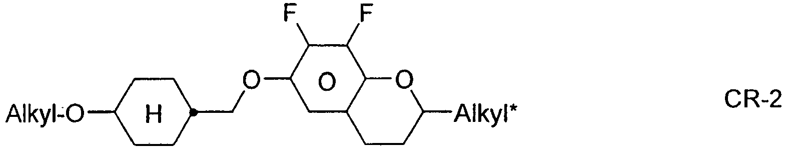 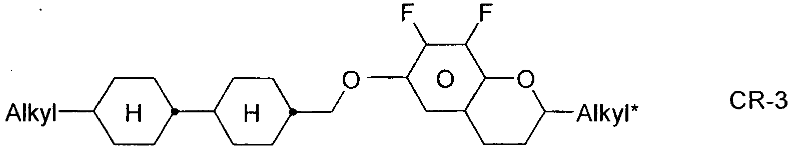 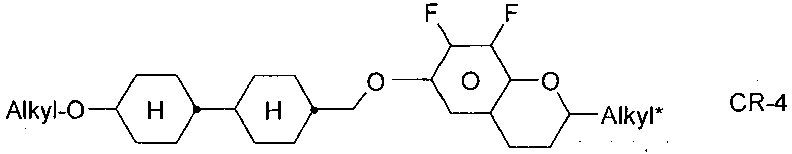 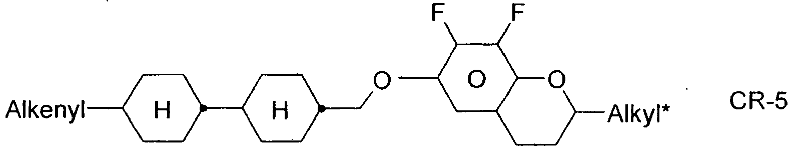 worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen,
bedeuten.

Ganz besonders bevorzugt sind Mischungen enthaltend eine, zwei oder drei Verbindungen der Formel BC-2.
p) Bevorzugte Mischungen enthalten ein oder mehrere Indan-Verbindungen der Formeln In, 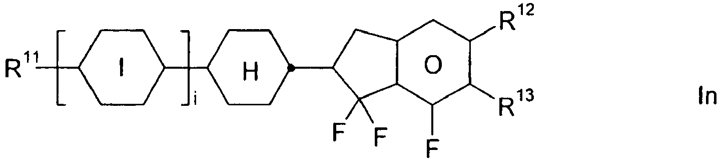 worin
   - R¹¹, R¹², R¹³: jeweils unabhängig voneinander einen geradkettigen Alkyl-, oder Alkoxy-, Alkoxyalkyl-, Alkenylrest mit 1-6 C-Atomen,
   - R¹² und R¹³: zusätzlich Halogen, vorzugsweise F, 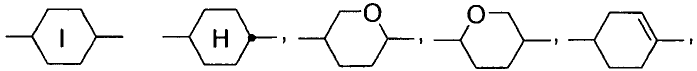 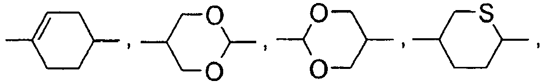 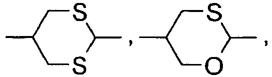
   - i: 0, 1 oder 2
   bedeuten.

Bevorzugte Verbindungen der Formel In sind die nachfolgend genannten Verbindungen der Formeln In-1 bis In-16,

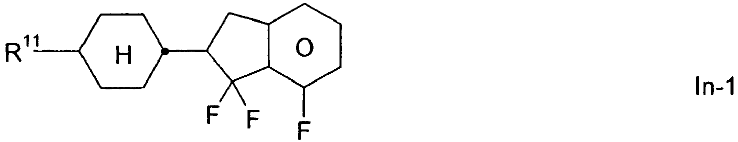

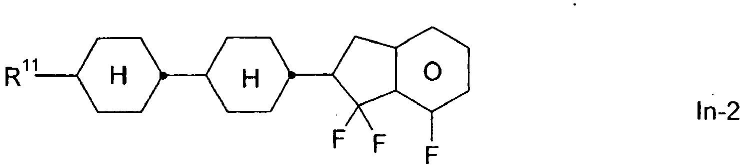

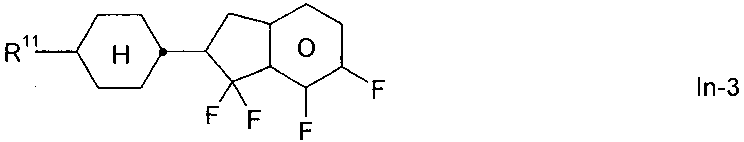

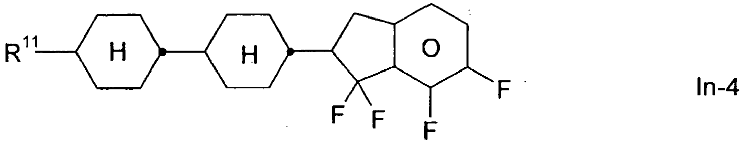

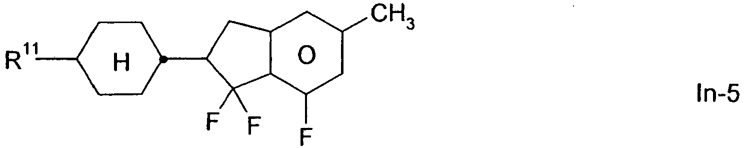

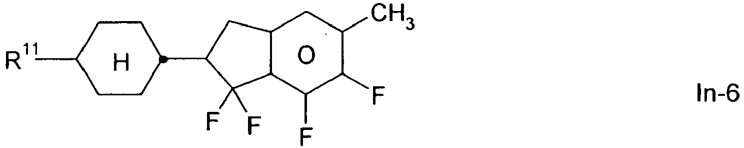

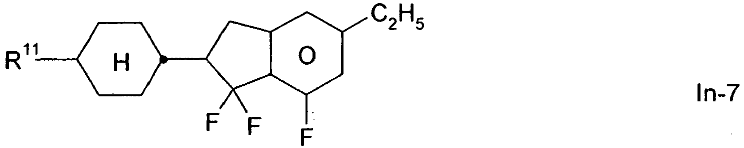

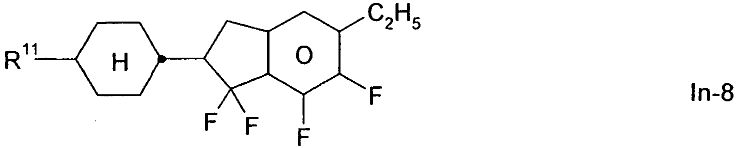

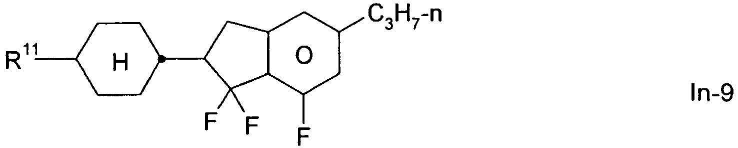

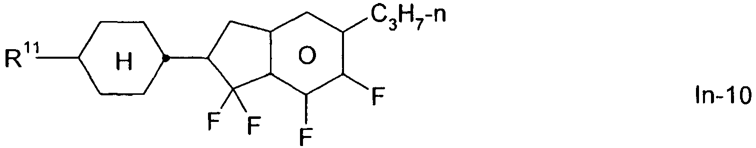

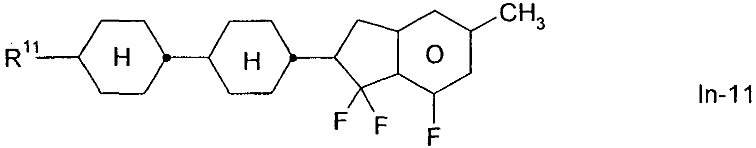

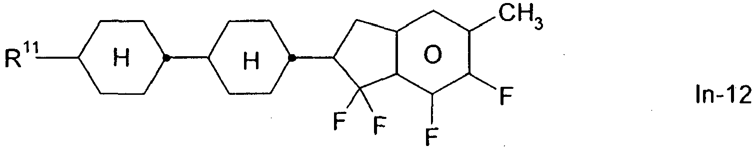

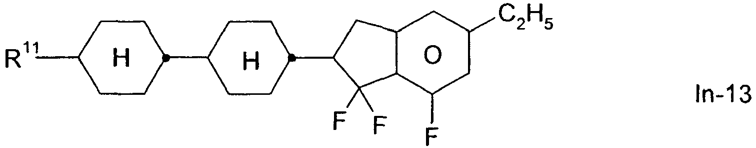

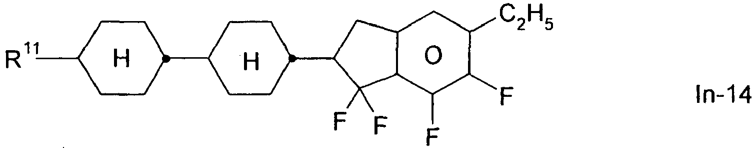

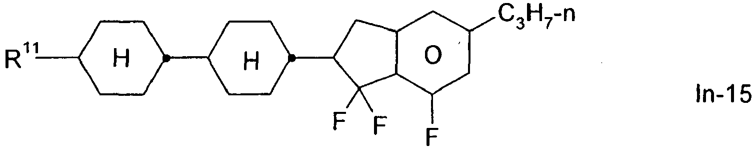

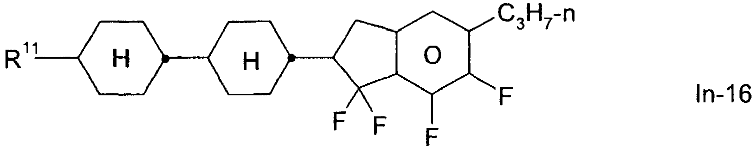

Besonders bevorzugt sind die Verbindungen der Formeln In-1, In-2, In-3.

Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
q) Bevorzugte Mischungen enthalten zusätzlich eine oder mehrere Verbindungen der Formeln L-1 bis L-11, 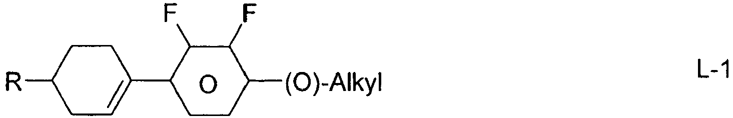 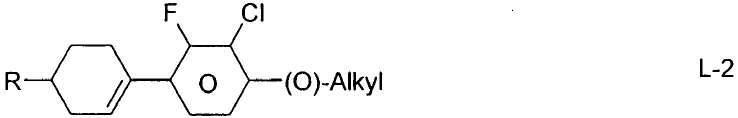 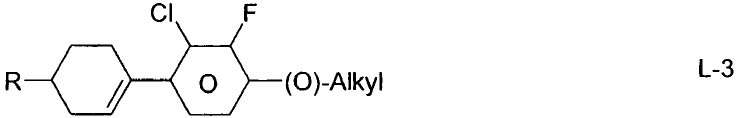 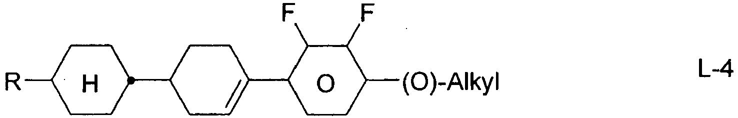 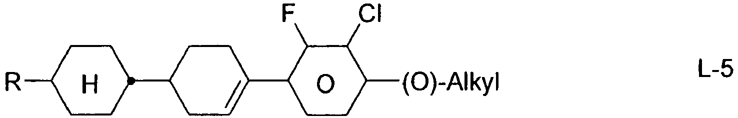 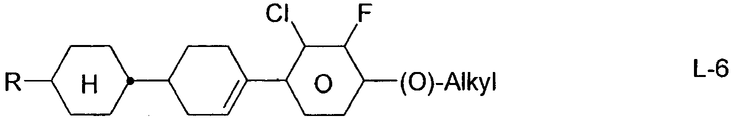 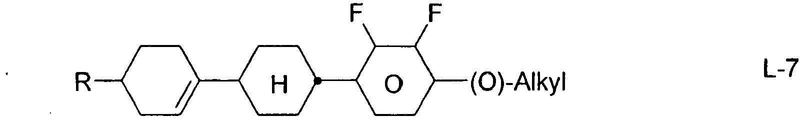 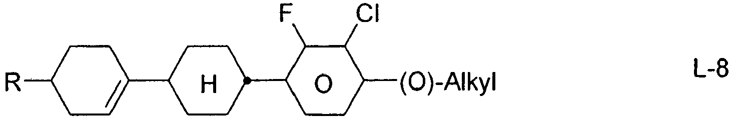 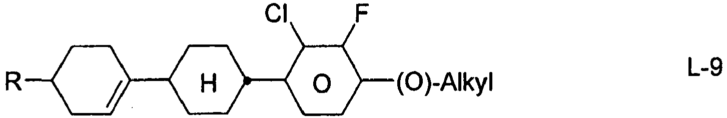 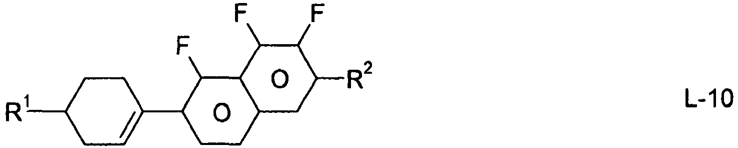 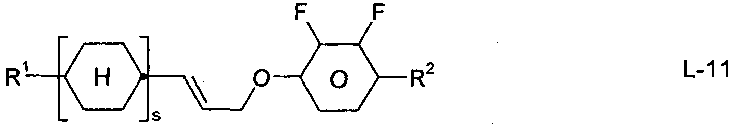 worin ,
   R, R¹ und R² jeweils unabhängig voneinander die für R^{2A} in Anspruch 2 angegebenen Bedeutungen haben und Alkyl ein Alkylrest mit 1-6 C-Atomen bedeutet. s bedeutet 1 oder 2.

Besonders bevorzugt sind die Verbindungen der Formeln L-1 und L-4, insbesondere L-4.

Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.

Ganz besonders bevorzugte Ausführungsformen werden nachfolgend genannt.

Das erfindungsgemäße Medium enthält mindestens drei Verbindungen ausgewählt aus der Gruppe der Verbindungen der Formel I-1, I-2, I*-3 bis I*-6, 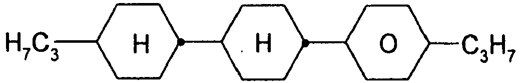 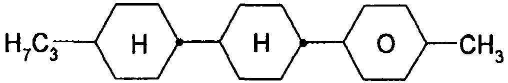 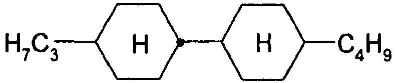 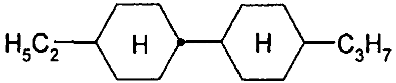 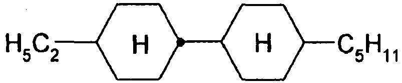 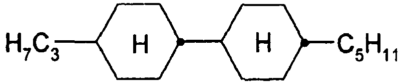 vorzugsweise in Mengen von 8-50 %.

Das erfindungsgemäße Medium enthält die Verbindungen der Formel I-1 und/oder I-2 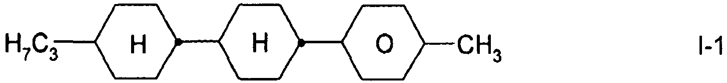 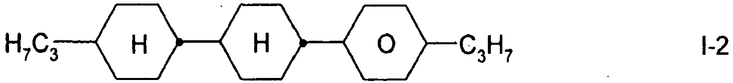 in Kombination mit einer oder mehreren Verbindungen der Formel 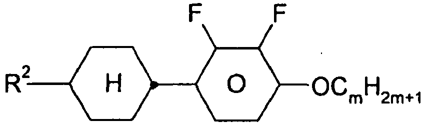 und/oder 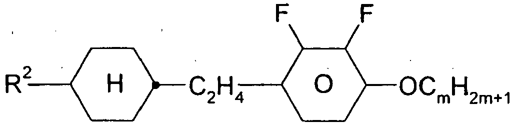 und/oder 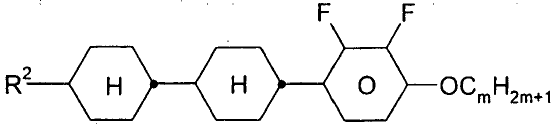 und/oder

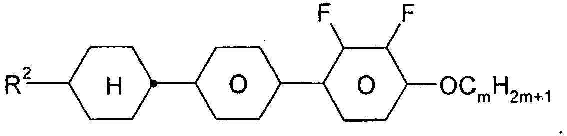

Besonders bevorzugte Mischungskonzepte werden nachfolgend genannt: (Die verwendeten Acronyme sind in Tabelle A erklärt. n um m bedeuten hier jeweils unabhängig voneinander 1-6.)

Die erfindungsgemäßen Mischungen enthalten vorzugsweise
- CPY-n-Om, insbesondere CPY-2-O2, CPY-3-O2 und/oder CPY-5-02, vorzugsweise in Konzentrationen > 5 %, insbesondere 10-30 %, bezogen auf die Gesamtmischung,
und/oder
- CY-n-Om, vorzugsweise CY-3-02, CY-3-O4, CY-5-O2 und/oder CY-5-O4, vorzugsweise in Konzentrationen > 5 %, insbesondere 15-50 %, bezogen auf die Gesamtmischung,
und/oder
- CCY-n-Om, vorzugsweise CCY-4-O2, CCY-3-O2, CCY-3-O3 und/oder CCY-5-O2, vorzugsweise in Konzentrationen > 5 %, insbesondere 10-30 %, bezogen auf die Gesamtmischung,
und/oder
- CLY-n-Om, vorzugsweise CLY-2-04, CLY-3-02 und/oder CLY-3-03, vorzugsweise in Konzentrationen > 5 %, insbesondere 10-30 %, bezogen auf die Gesamtmischung,
und/oder
- CK-n-F, vorzugsweise CK-3-F, CK-4-F und/oder CK-5-F, vorzugsweise > 5 %, insbesondere 5-25 %, bezogen auf die Gesamtmischung,
wobei der Anteil aller mesogenen Verbindungen in der erfindungsgemäßen flüssigkristallinen Mischung ≤ 100 % beträgt.

Weiterhin bevorzugt sind erfindungsgemäße Mischungen, die folgende Mischungskonzepte enthalten:
(n und m bedeuten jeweils unabhängig voneinander 1-6.)
- CPY-n-Om und CY-n-Om, vorzugsweise in Konzentrationen von 10-80 %
   bezogen auf die Gesamtmischung,
   und/oder
- CPY-n-Om und CK-n-F, vorzugsweise in Konzentraionen von 10-70 %
   bezogen auf die Gesamtmischung,
   und/oder
- CPY-n-Om und CK-n-F und CLY-n-Om, vorzugsweise in Konzentrationen von 10-80 % bezogen auf die Gesamtmischung, wobei der Anteil aller mesogenen Verbindungen in der erfindungsgemäßen flüssigkristallinen Mischung ≤ 100 % beträgt.

Ein weiterer Gegenstand der Erfindung ist eine elektrooptische Anzeige mit einer Aktivmatrix-Adressierung basierend auf dem ECB-, IPS- oder FFS-Effekt, dadurch gekennzeichnet, dass sie als Dielektrikum ein flüssigkristallines Medium nach einem oder mehreren der Ansprüche 1 bis 9 enthält.

Das erfindungsgemäße flüssigkristalline Medium weist bevorzugt eine nematische Phase vorn ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität ν₂₀ von maximal 30 mm²·s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,12.

Die erfindungsgemäße Flüssigkristallmischung weist ein Δε von -0,5 bis -8,0, insbesondere von -3,0 bis -6,0 auf, wobei Δε die dielektrische Anisotropie bedeutet. Die Rotationsviskosität γ₁ bei 20 °C ist vorzugsweise ≤ 165 mPa·s, insbesondere ≤ 140 mPa·s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,75 V und ganz besonders bevorzugt ≤ 2,4 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio, insbesondere nach Belastung mit Display-Backlights, in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PVE, ASV. Weiterhin sind sie für IPS (In plane switching) und FFS (Fringe field switching) mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel I, die Verbindungen der Formeln IIA, IIB und/oder IIC, ferner Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm²·s⁻¹, vorzugsweise nicht mehr als 25 mm²·s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm²·s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel I, 4 bis 15, insbesondere 5 bis 12, und besonders bevorzugt < 10, Verbindungen der Formeln IIA, IIB und/oder IIC und optional III.

Neben Verbindungen der Formeln I und den Verbindungen der Formel IIC oder den Verbindungen der Formeln L-1 bis L-11 und den Verbindungen der Formeln IIA und/oder IIB und optional III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰-L-G-E-R²¹ V I

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS- oder FFS- Mischung auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. Ciba, wird vorzugsweise der Mischung enthaltend polymerisierbare Verbindungen in Mengen von 0-1 % zugesetzt. Derartige Mischungen können für sogenannte Polymer Stabilized VA-Modes (PS-VA), bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten enthält. Geeignete polymerisierbare Verbindungen sind beispielsweise in Tabelle D gelistet.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln IIA und/oder IIB und/oder IIC, einer oder mehrerer Verbindungen der Formel I eine oder mehrere Verbindungen der nachfolgend genannten Verbindungen aus der Tabelle A.

**Tabelle A**

| Folgende Abkürzungen werden verwendet: |
|---|
| (n, m, z: jeweils unabhängig voneinander 1, 2, 3, 4, 5 oder 6; (O)CₘH₂ₘ₊₁ bedeutet OCₘH₂ₘ₊₁ oder CₘH₂ₘ₊₁) |
| |
| 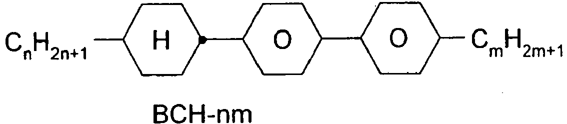 |
| 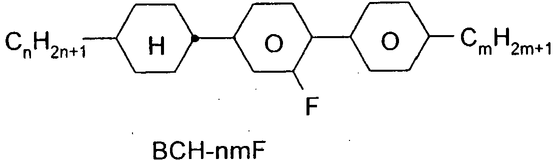 |
| 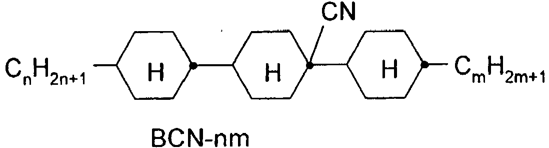 |
| 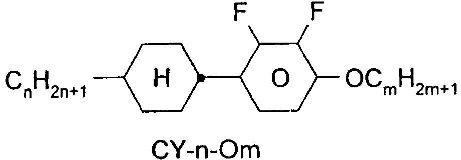 |
| 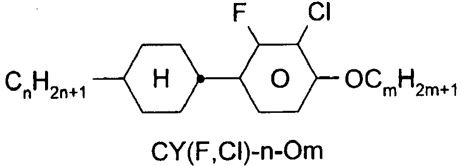 |
| 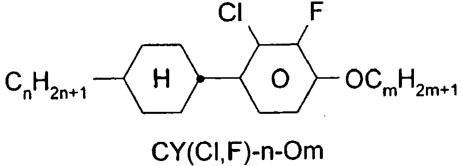 |
| 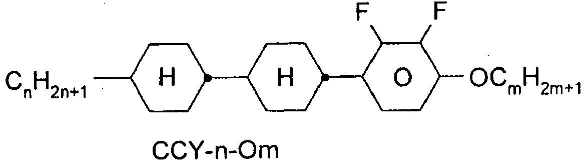 |
| 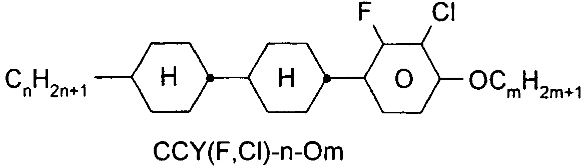 |
| 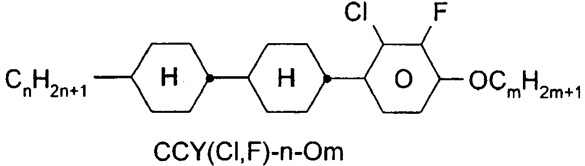 |
| 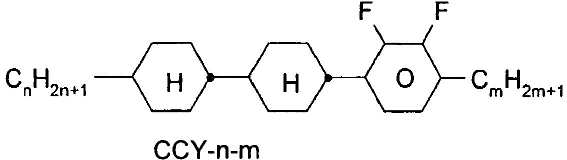 |
| 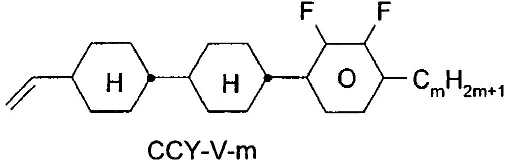 |
| 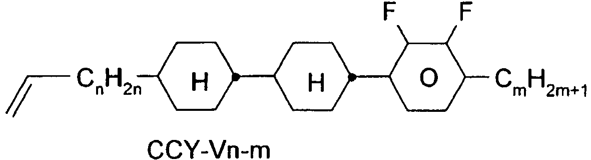 |
| 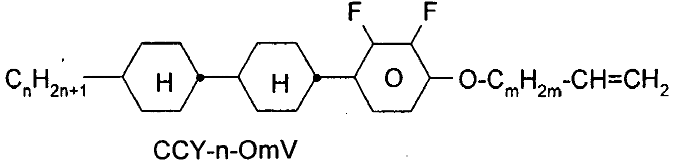 |
| 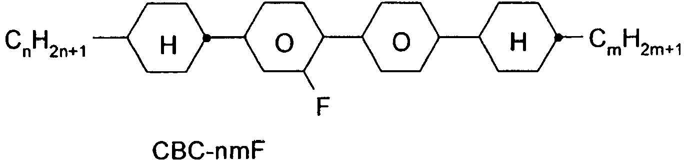 |
| 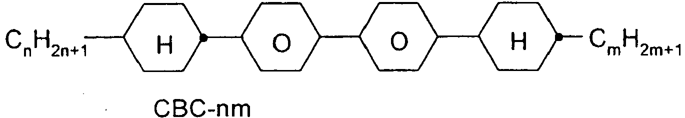 |
| 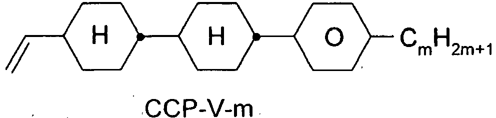 |
| 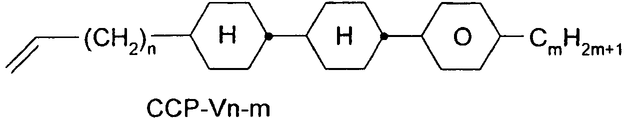 |
| 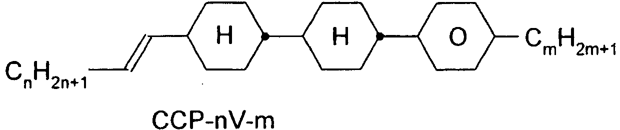 |
| 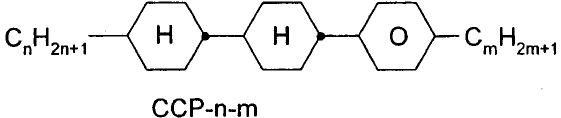 |
| 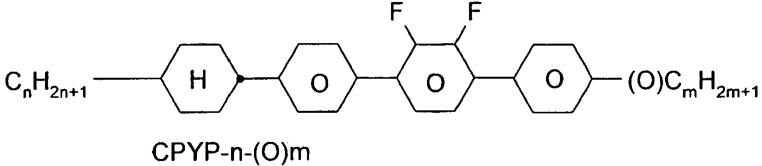 |
| 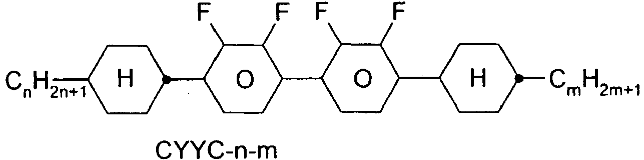 |
| 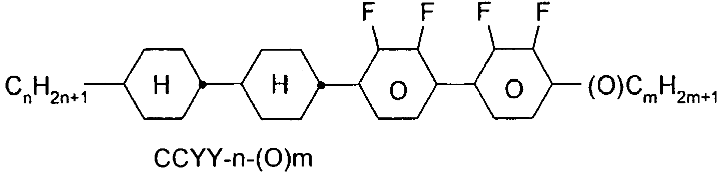 |
| 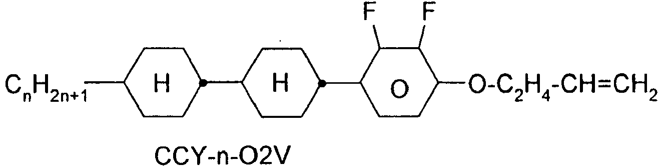 |
| 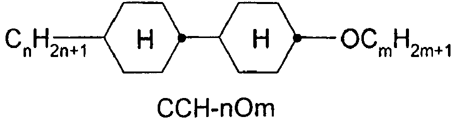 |
| 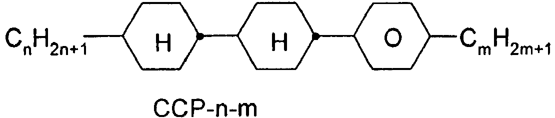 |
| 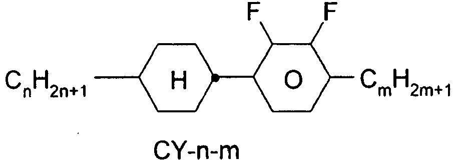 |
| 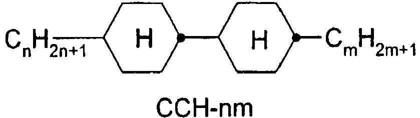 |
| 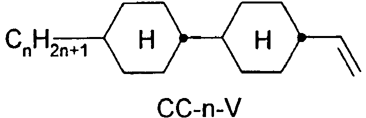 |
| 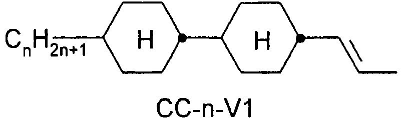 |
| 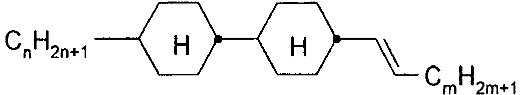 |
| 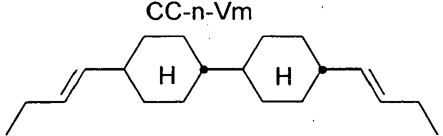 |
| 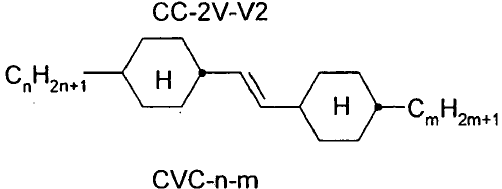 |
| 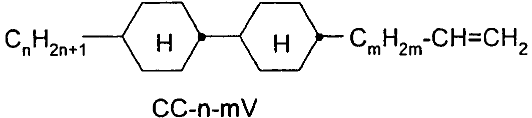 |
| 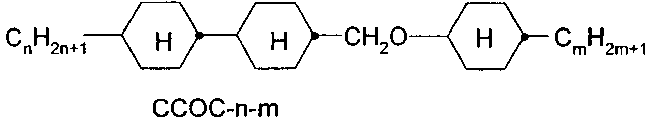 |
| 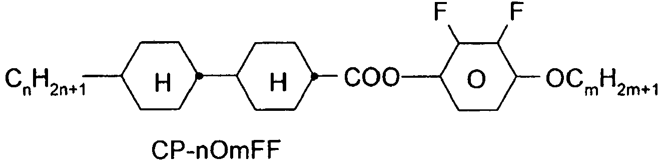 |
| 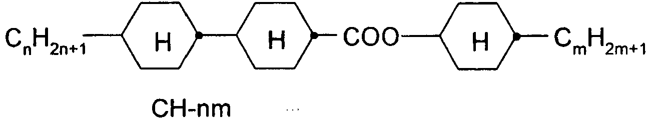 |
| 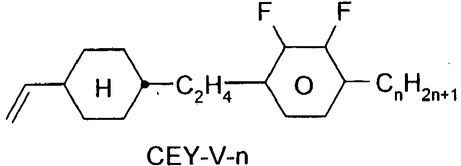 |
| 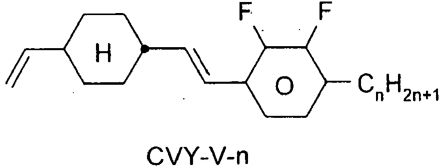 |
| 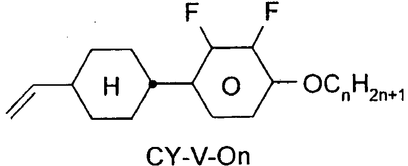 |
| 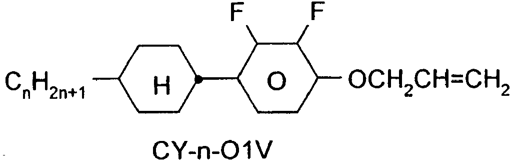 |
| 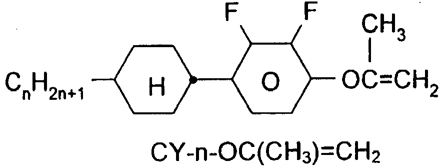 |
| 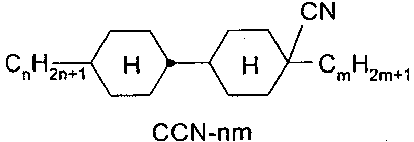 |
| 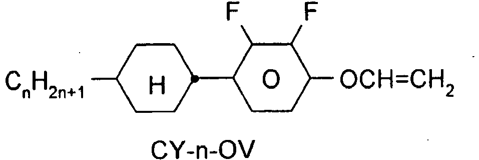 |
| 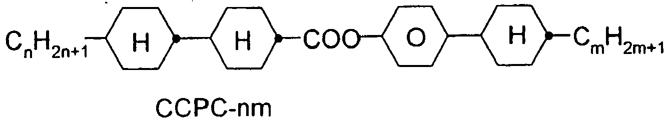 |
| 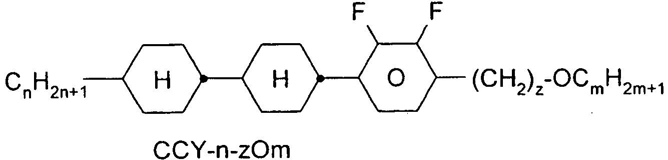 |
| 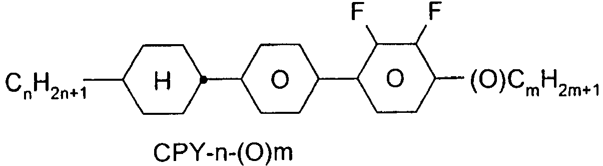 |
| 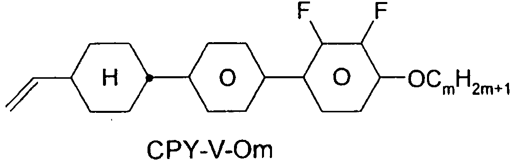 |
| 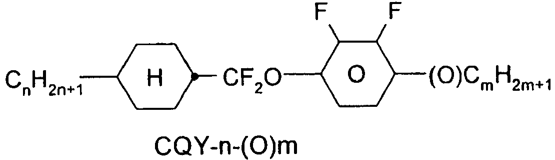 |
| 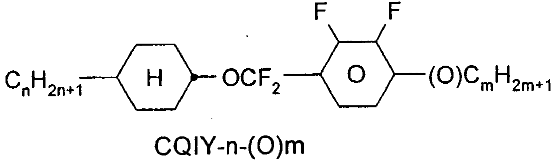 |
| 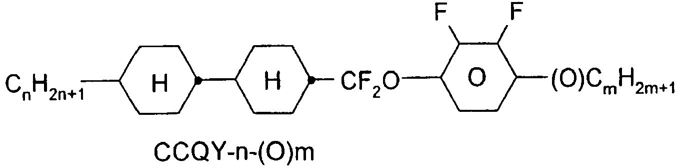 |
| 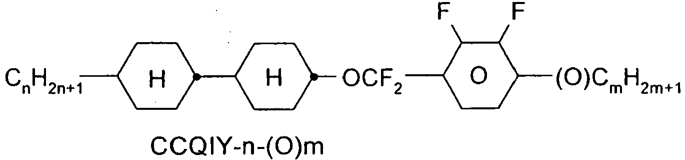 |
| 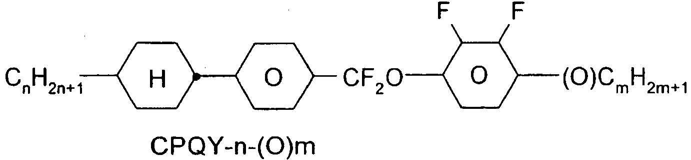 |
| 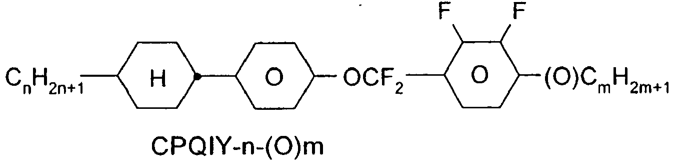 |
| 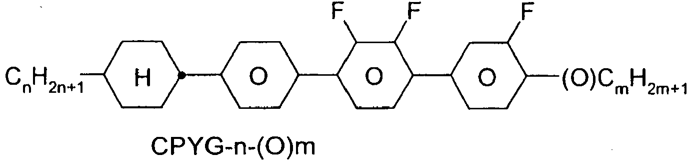 |
| 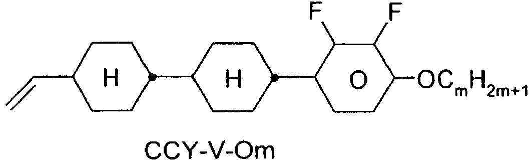 |
| 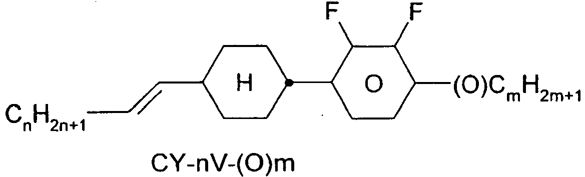 |
| 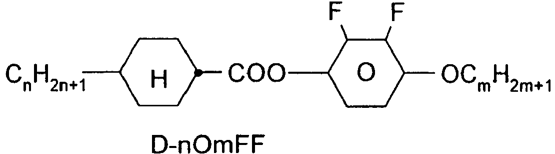 |
| 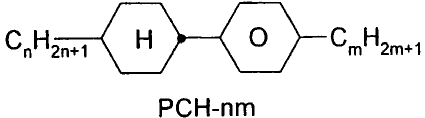 |
| 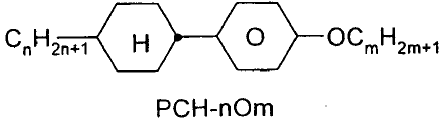 |
| 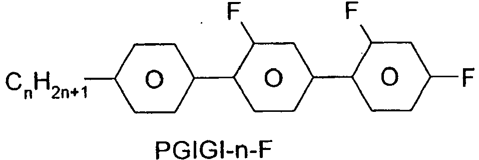 |
| 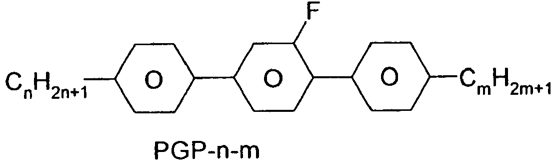 |
| 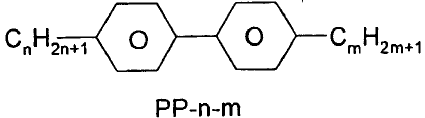 |
| 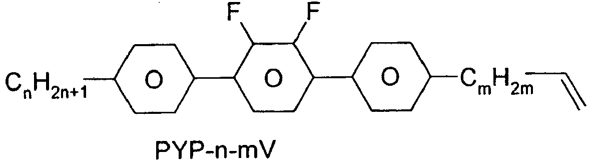 |
| 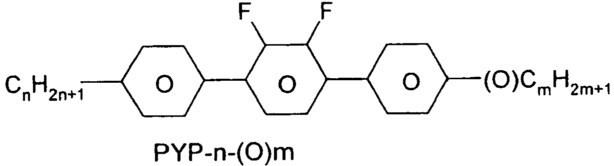 |
| 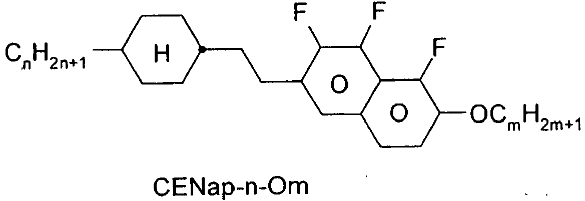 |
| 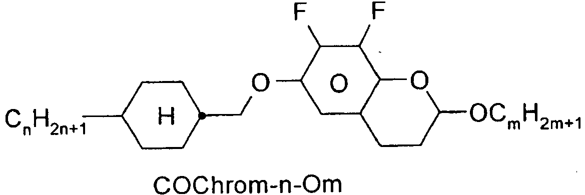 |
| 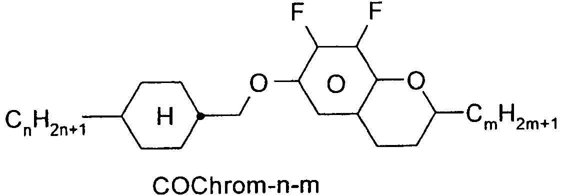 |
| 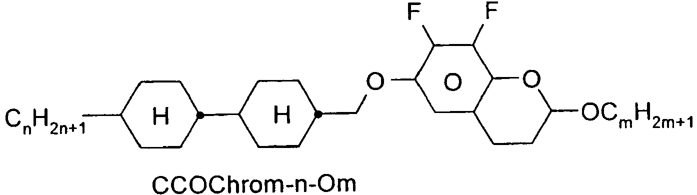 |
| 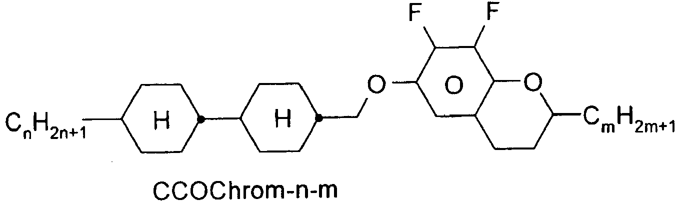 |
| 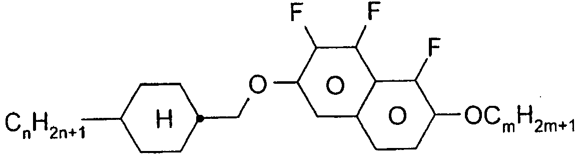 |
| 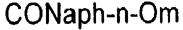 |
| 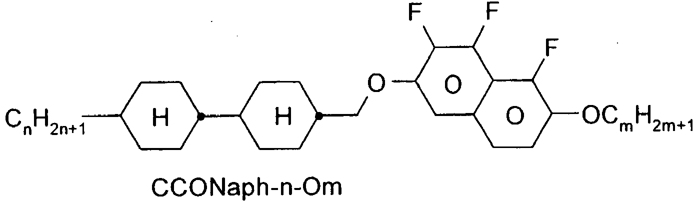 |
| 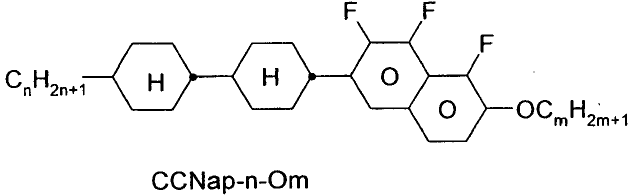 |
| 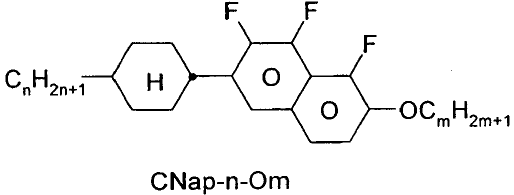 |
| 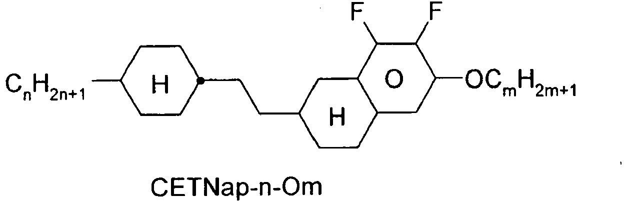 |
| 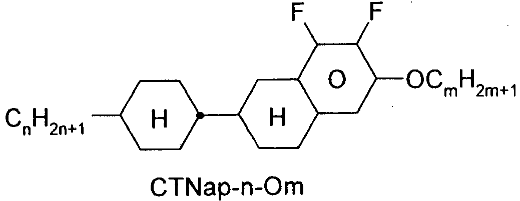 |
| 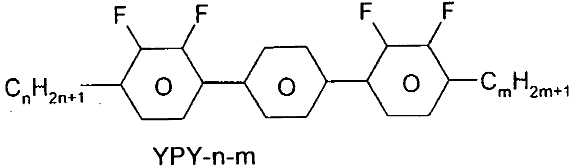 |
| 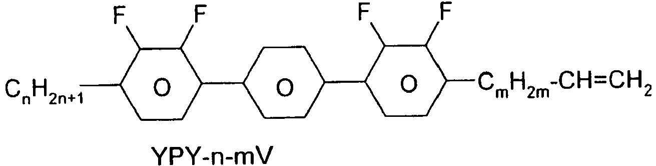 |
| 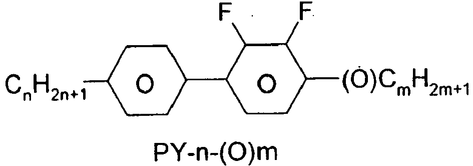 |
| 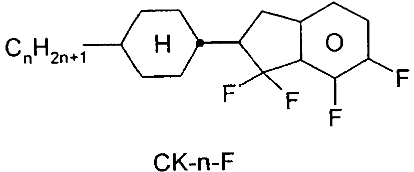 |
| 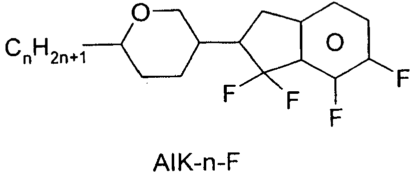 |
| 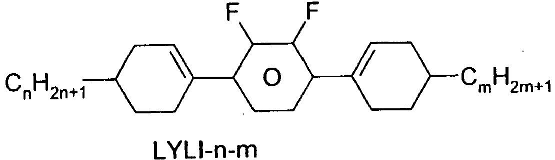 |
| 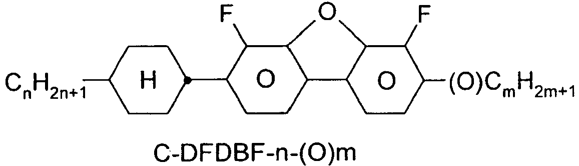 |
| 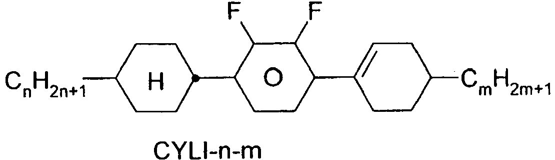 |
| 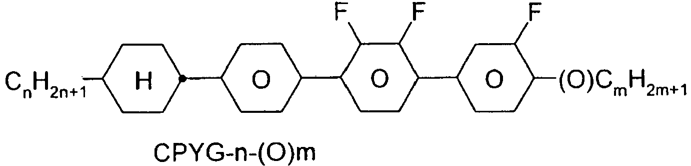 |
| 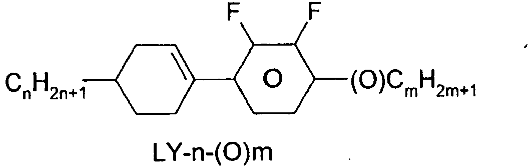 |
| 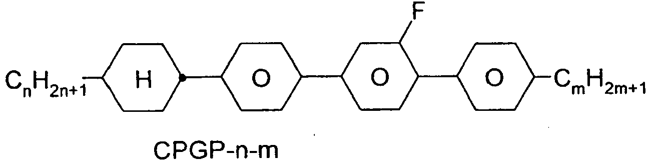 |
| 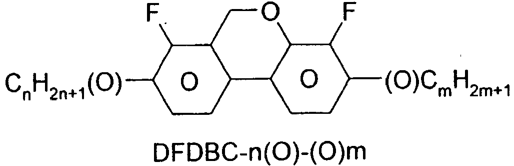 |
| 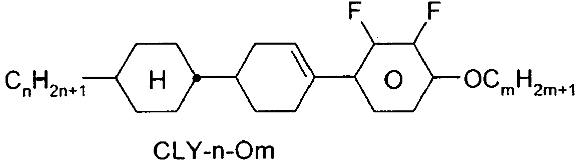 |
| 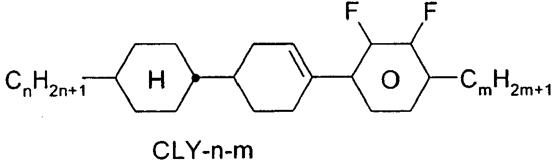 |
| 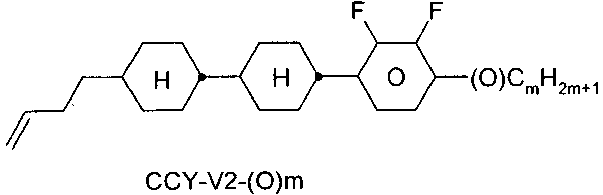 |
| 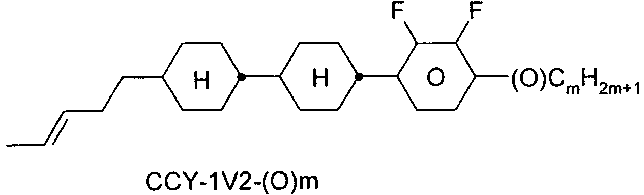 |
| 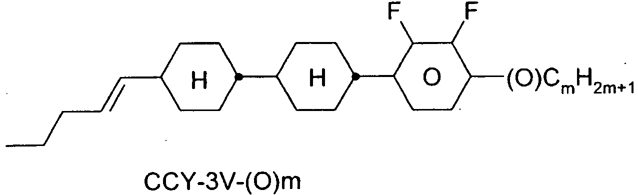 |
| 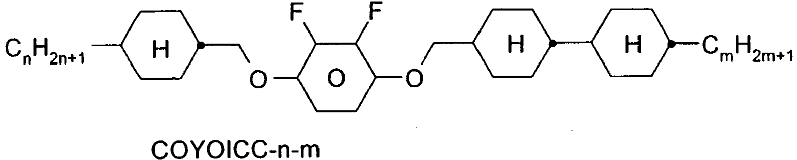 |
| 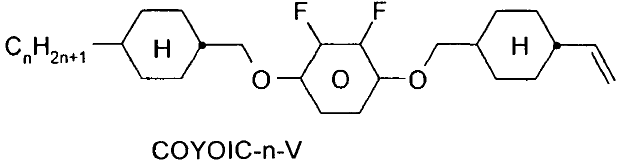 |
| 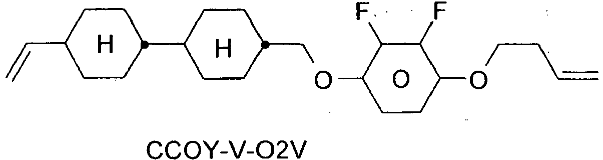 |
| 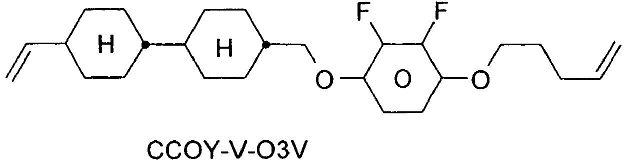 |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden. Geeignete Stabilisatoren für die erfindungsgemäßen Mischungen sind insbesondere solche die in Tabelle B gelistet sind. Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

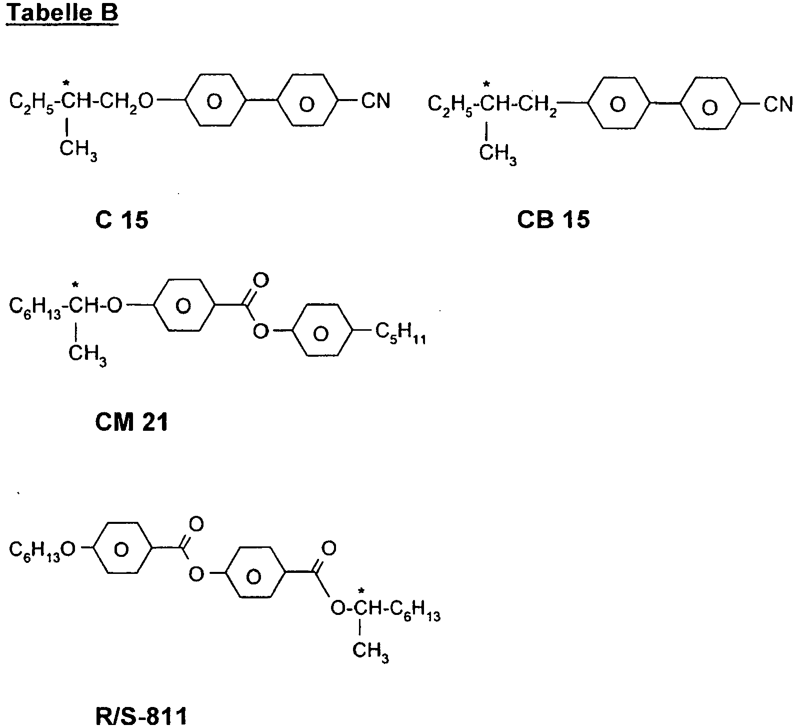

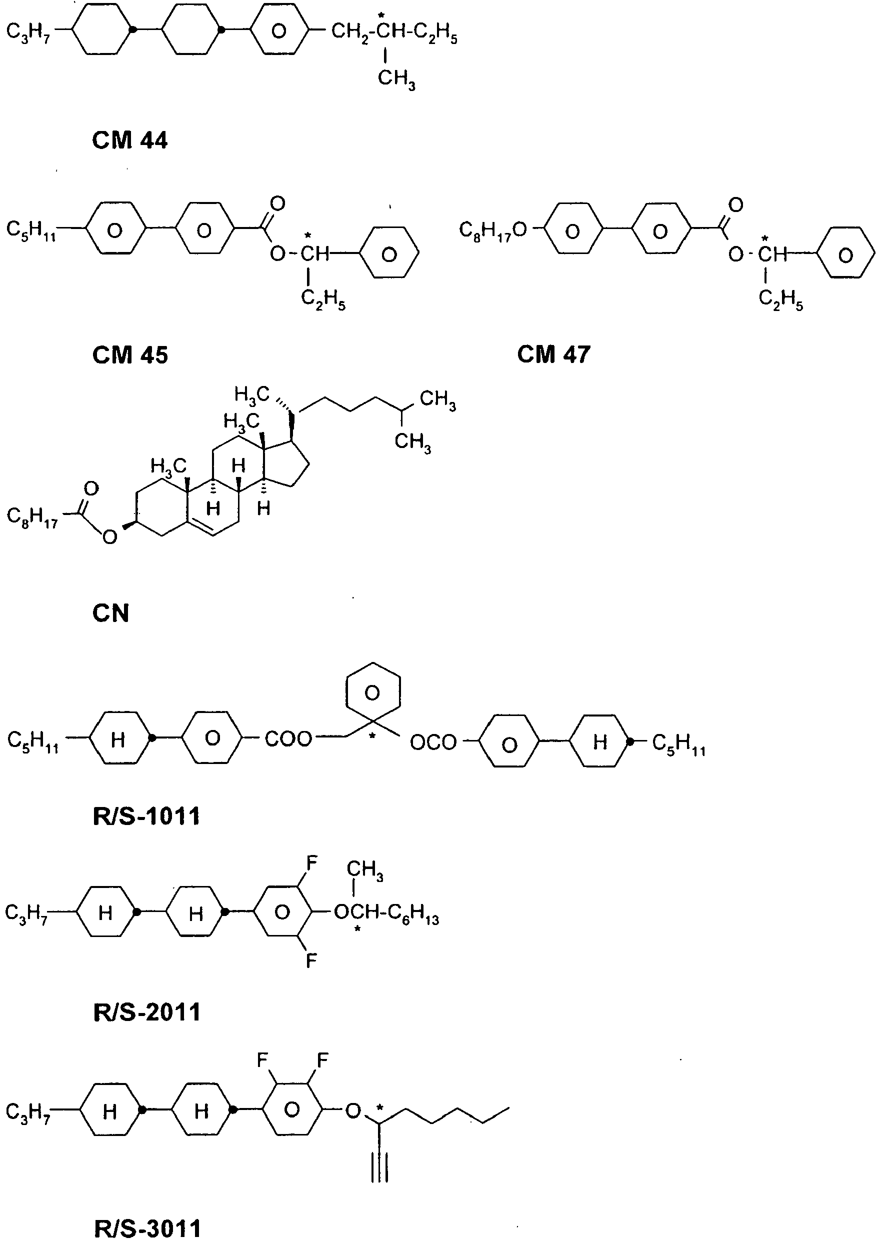

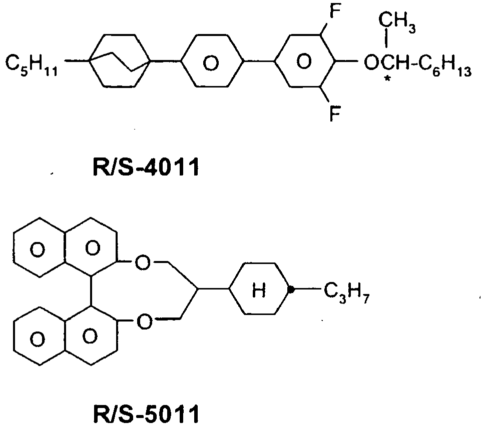

Stabilisatoren, die beispielsweise den erfindungsgemäßen Mischungen in Mengen von bis zu 10 Gew.%, bezogen auf die gesamte Menge der Mischung, bevorzugt 0,01 bis 6 Gew.%, insbesondere 0,1 bis 3 Gew.%, zugesetzt werden können, werden nachfolgend in Tabelle C genannt. Bevorzugte Stabilisatoren sind insbesondere BHT-Derivate, z.B. 2,6-Di-tert-butyl-4-alkylphenole) und Tinuvin 770.

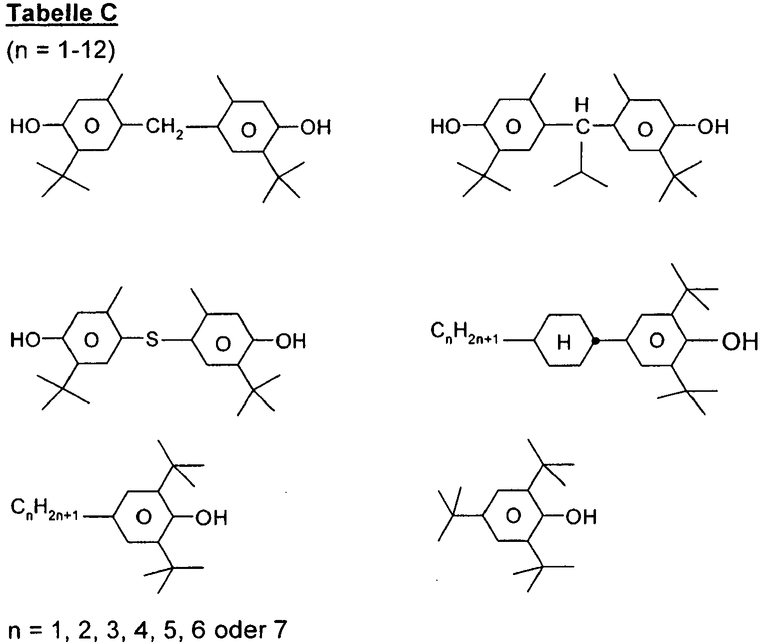

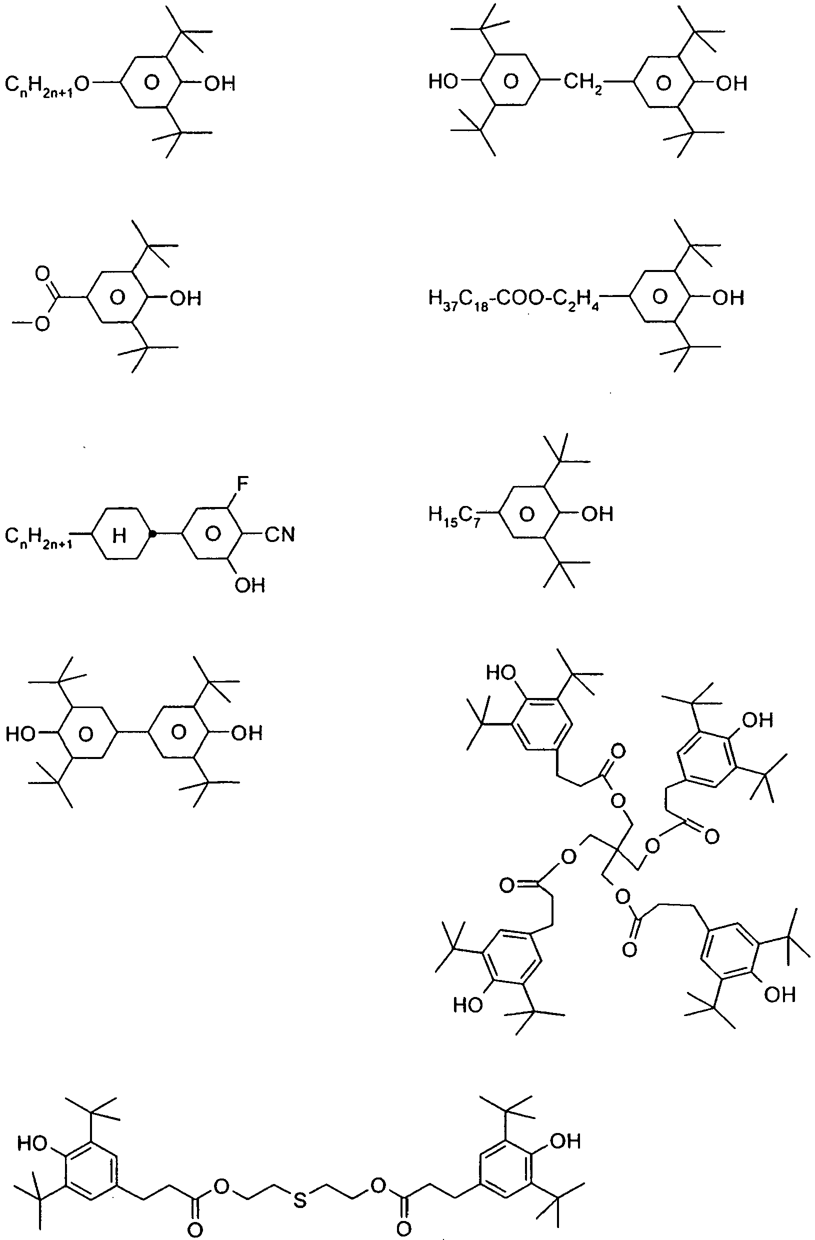

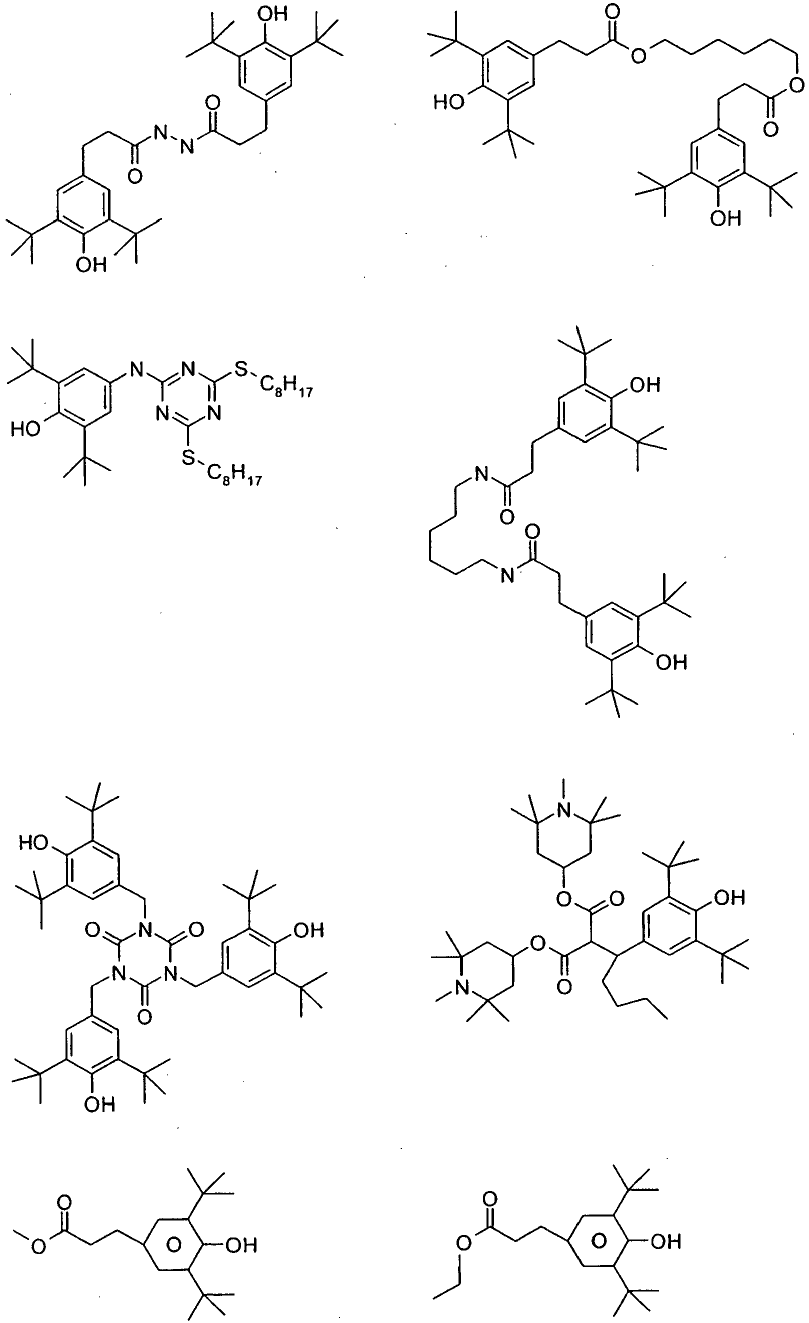

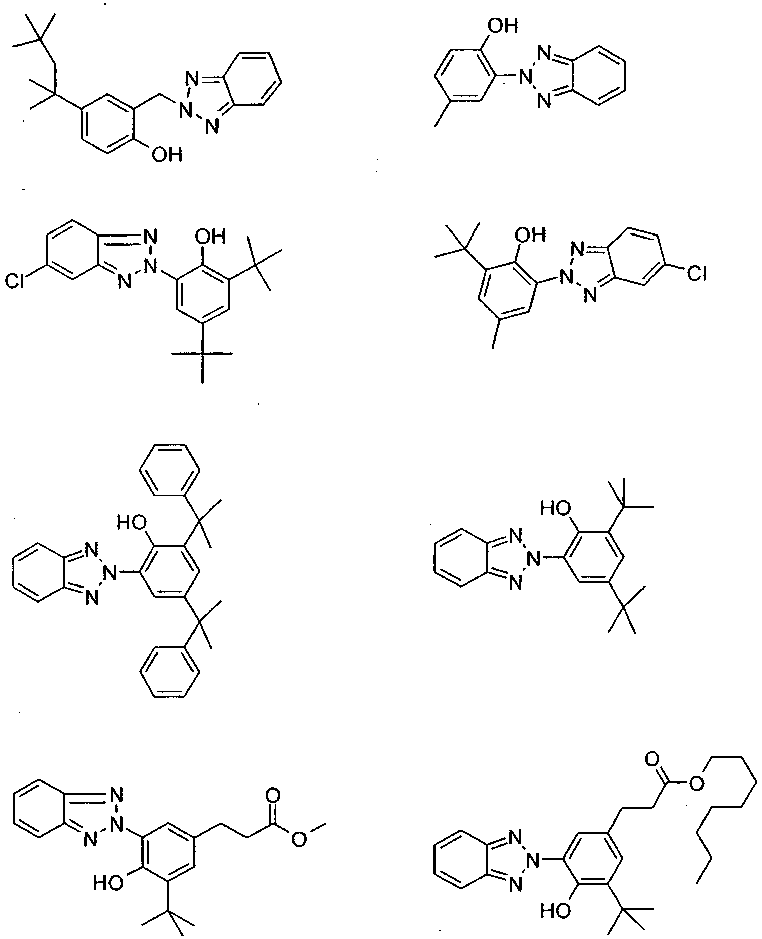

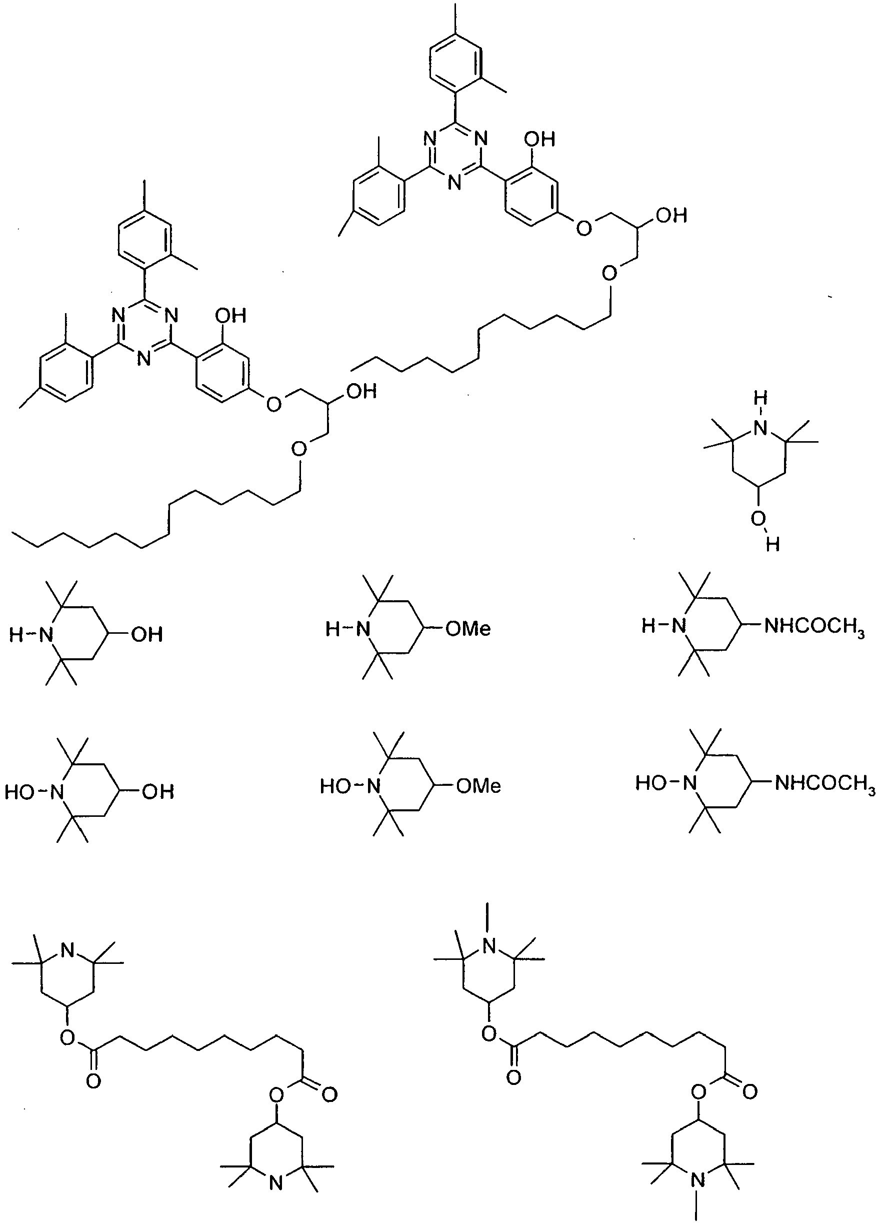

Geeignete reaktive Mesogene für den Einsatz der erfindungsgemäßen Mischungen in PS-VA-Anwendungen werden nachfolgend in Tabelle D genannt:

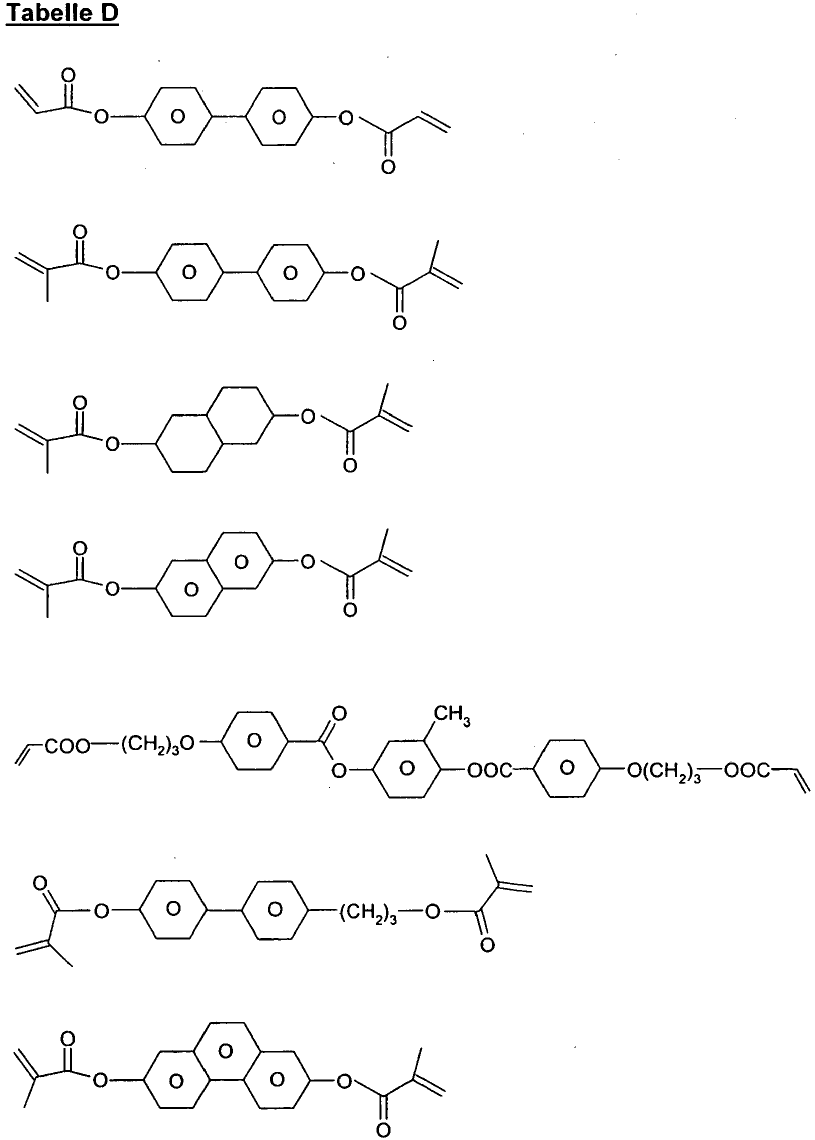

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Mischungsbeispiele

### Beispiel 1

| | | | |
|---|---|---|---|
| CY-3-O2 | 24,00 % | Klärpunkt [°C]: | 79,5 |
| CY-5-O2 | 6,00 % | Δn [589 nm, 20 °C]: | 0,0937 |
| CCY-2-O2 | 7,00 % | Δε [1 kHz, 20 °C]: | -3,0 |
| CPY-3-O2 | 3,00 % | ε_{∥} [1 kHz, 20 °C]: | 3,5 |
| CCP-3-3 | 8,50 % | ε_{⊥} [1 kHz, 20 °C]: | 6,6 |
| CCP-3-1 | 9,00 % | γ₁ [mPa·s, 20 °C]: | 119 |
| BCH-32 | 4,00 % | V₀ [V, 20 °C]: | 2,32 |
| CCH-34 | 11,00 % | LTS [Zelle, -20 °C]: | > 1000 h |
| CCH-25 | 11,00 % | | |
| PCH-301 | 4,50 % | | |
| CLY-2-04 | 4,00 % | | |
| CLY-3-02 | 4,00 % | | |
| CLY-3-03 | 4,00 % | | |

### Beispiel 2

| | | | |
|---|---|---|---|
| CY-3-O2 | 24,50 % | Klärpunkt [°C]: | 79 |
| CLY-2-O4 | 5,00 % | Δn [589 nm, 20 °C]: | 0,0942 |
| CLY-3-O2 | 5,00 % | Δε [1 kHz, 20 °C]: | -3,0 |
| CLY-3-O3 | 4,00 % | ε_{∥} [1 kHz, 20 °C]: | 3,4 |
| CPY-2-O2 | 4,00 % | ε_{⊥} [1 kHz, 20 °C]: | 6,4 |
| CPY-3-O2 | 9,50 % | γ₁ [mPa·s, 20 °C]: | 107 |
| CCH- 34 | 5,50 % | V₀ [V, 20 °C]: | 2,33 |
| CCH-23 | 23,50 % | LTS [bulk, -20 °C]: | > 1000 h |
| CCP-3-3 | 5,00 % | | |
| CCP-3-1 | 6,00 % | | |
| BCH-32 | 6,50 % | | |
| PCH-301 | 1,50 % | | |

### Beispiel 3

| | | | |
|---|---|---|---|
| LY-3-O2 | 24,00 % | Klärpunkt [°C]: | 80 |
| CPY-3-O2 | 9,00 % | Δn [589 nm, 20 °C]: | 0,1001 |
| PYP-2-3 | 2,50 % | Δε [1 kHz, 20 °C]: | -2,9 |
| CCP-3-3 | 7,00 % | ε_{∥} [1 kHz, 20 °C]: | 3,3 |
| CCP-3-1 | 7,00 % | ε_{⊥} [1 kHz, 20 °C]: | 6,2 |
| BCH-32 | 4,50 % | γ₁ [mPa·s, 20 °C]: | 105 |
| CCH-34 | 6,00 % | V₀ [V, 20 °C]: | 2,46 |
| CCH-23 | 25,00 % | LTS [bulk, -20 °C]: | > 1000 h |
| CLY-2-O4 | 5,00 % | | |
| CLY-3-O2 | 5,00 % | | |
| CLY-3-O3 | 5,00 % | | |

### Beispiel 4

| | | | |
|---|---|---|---|
| CY-3-O2 | 15,00 % | Klärpunkt [°C]: | 79,5 |
| CPY-3-O2 | 6,00 % | Δn [589 nm, 20 °C]: | 0,0891 |
| PYP-2-3 | 5,00 % | Δε [1 kHz, 20 °C]: | -3,6 |
| CCH-34 | 9,00 % | ε_{∥} [1 kHz, 20 °C]: | 3,9 |
| CCH-23 | 20,00 % | ε_{⊥} [1 kHz, 20 °C]: | 7,4 |
| CCP-3-1 | 9,00 % | γ₁ [mPa·s, 20 °C]: | 111 |
| CCP-3-3 | 6,00 % | V₀ [V, 20 °C]: | 2,13 |
| CLY-2-04 | 5,00 % | LTS [bulk, -20 °C]: | > 1000 h |
| CLY-3-O2 | 4,00 % | | |
| CLY-3-03 | 4,00 % | | |
| CK-3-F | 6,00 % | | |
| CK-4-F | 5,00 % | | |
| CK-5-F | 6,00 % | | |

### Beispiel 5

| | | | |
|---|---|---|---|
| CY-3-O2 | 7,50 % | Klärpunkt [°C]: | 78 |
| CCY-4-O2 | 7,00 % | Δn [589 nm, 20 °C]: | 0,0902 |
| CPY-2-O2 | 4,00 % | Δε [1 kHz, 20 °C]: | -3,4 |
| CPY-3-O2 | 4,00 % | ε_{∥} [1 kHz, 20 °C]: | 3,8 |
| PYP-2-3 | 4,50 % | ε_{⊥} [1 kHz, 20 °C]: | 7,1 |
| CCH-34 | 11,00 % | γ₁ [mPa·s, 20 °C]: | 114 |
| CCH-25 | 11,00 % | V₀ [V, 20 °C]: | 2,13 |
| CCH-301 | 7,00 % | LTS [bulk, -30 °C]: | > 1000 h |
| CCP-3-1 | 5,00 % | | |
| PCH-301 | 12,00 % | | |
| CLY-2-O4 | 5,00 % | | |
| CLY-3-O2 | 5,00 % | | |
| CLY-3-O3 | 5,00 % | | |
| CK-3-F | 4,00 % | | |
| CK-4-F | 4,00 % | | |
| CK-5-F | 4,00 % | | |

### Beispiel 6

| | | | |
|---|---|---|---|
| CY-3-O2 | 10,00 % | Klärpunkt [°C]: | 79,5 |
| CK-3-F | 4,00 % | Δn [589 nm, 20 °C]: | 0,0944 |
| CK-4-F | 4,00 % | Δε [1 kHz, 20 °C]: | -3,0 |
| CK-5-F | 4,00 % | ε_{∥} [1 kHz, 20 °C]: | 3,7 |
| PYP-2-3 | 1,50 % | ε_{⊥} [1 kHz, 20 °C]: | 6,7 |
| CCY-3-O2 | 4,50 % | γ₁ [mPa·s, 20 °C]: | 109 |
| CCY-4-02 | 5,00 % | V₀ [V, 20 °C]: | 2,28 |
| CPY-2-O2 | 8,00 % | LTS [bulk, -20 °C]: | > 1000 h |
| CPY-3-O2 | 9,50 % | | |
| CCH-34 | 6,00 % | | |
| CCH-23 | 22,00 % | | |
| CCP-3-3 | 7,50 % | | |
| BCH-32 | 6,00 % | | |
| PCH-301 | 8,00 % | | |

### Beispiel 7

| | | | |
|---|---|---|---|
| CCH-23 | 23,00 % | Klärpunkt [°C]: | 81 |
| CCH-34 | 8,00 % | Δn [589 nm, 20 °C]: | 0,0905 |
| CCY-3-O2 | 6,00 % | Δε [1 kHz, 20 °C]: | -3,8 |
| CCY-3-03 | 6,00 % | ε_{∥} [1 kHz, 20 °C]: | 3,9 |
| CPY-2-O2 | 8,00 % | ε_{⊥} [1 kHz, 20 °C]: | 7,7 |
| CPY-3-O2 | 8,00 % | V₀ [V, 20 °C]: | 2,08 |
| CY-3-O2 | 13,00 % | | |
| PYP-2-3 | 3,00 % | | |
| CK-3-F | 5,00 % | | |
| CK-4-F | 5,00 % | | |
| CK-5-F | 5,00 % | | |
| CCP-3-1 | 10,00 % | | |

### Beispiel 8

| | | | |
|---|---|---|---|
| CY-3-O2 | 18,00 % | Klärpunkt [°C]: | 80,6 |
| CY-5-O2 | 10,00 % | Δn [589 nm, 20 °C]: | 0,0948 |
| CCY-3-O2 | 7,00 % | Δε [1 kHz, 20 °C]: | -3,1 |
| CPY-3-02 | 9,00 % | ε_{∥} [1 kHz, 20 °C]: | 3,4 |
| PYP-2-3 | 5,00 % | ε_{⊥} [1 kHz, 20 °C]: | 6,5 |
| CLY-3-O2 | 8,00 % | K₁ [pN, 20 °C] | 14,8 |
| CCP-3-3 | 17,00 % | K₃ [pN, 20 °C] | 16,0 |
| CCH-34 | 4,00 % | V₀ [V, 20 °C]: | 2,37 |
| CCH-23 | 22,00 % | γ₁ [mPa·s, 20 °C]: | 122 |

### Beispiel 9

| | | | |
|---|---|---|---|
| CY-3-O2 | 18,00 % | Klärpunkt [°C]: | 79,7 |
| CY-5-O2 | 10,00 % | Δn [589 nm, 20 °C]: | 0,1065 |
| CCY-3-O2 | 2,50 % | Δε [1 kHz, 20 °C]: | -3,1 |
| CPY-3-O2 | 9,00 % | ε_{∥} [1 kHz, 20 °C]: | 3,4 |
| PYP-2-3 | 12,00 % | ε_{⊥} [1 kHz, 20 °C]: | 6,5 |
| CLY-3-O2 | 8,00 % | K₁ [pN, 20 °C] | 15,0 |
| CCP-3-3 | 18,00 % | K₃ [pN, 20 °C] | 15,8 |
| CCH-23 | 21,00 % | V₀ [V, 20 °C]: | 2,38 |
| CCH-34 | 1,50 % | γ₁ [mPa·s, 20 °C]: | 128 |

### Beispiel 10

| | | | |
|---|---|---|---|
| CY-3-O2 | 16,00 % | Klärpunkt [°C]: | 79,8 |
| CY-5-02 | 11,00 % | Δn [589 nm, 20 °C]: | 0,1063 |
| CCY-3-O2 | 5,00 % | Δε [1 kHz, 20 °C]: | -3,0 |
| CPY-2-O2 | 8,00 % | ε_{∥} [1 kHz, 20 °C]: | 3,4 |
| CPY-3-O2 | 8,00 % | ε_{⊥} [1 kHz, 20 °C]: | 6,4 |
| PYP-2-3 | 10,50 % | K₁ [pN, 20 °C] | 14,5 |
| CCP-3-3 | 18,50 % | K₃ [pN, 20 °C] | 15,1 |
| CCH-34 | 4,00 % | V₀ [V, 20 °C]: | 2,35 |
| CCH-23 | 19,00 % | γ₁ [mPa·s, 20 °C]: | 127 |

### Beispiel 11

| | | | |
|---|---|---|---|
| CY-3-O2 | 9,50 % | Klärpunkt [°C]: | 75 |
| PY-3-O2 | 8,00 % | Δn [589 nm, 20 °C]: | 0,1008 |
| CCY-3-02 | 8,00 % | Δε [1 kHz, 20 °C]: | -3,0 |
| CCY-4-O2 | 10,00 % | ε_{⊥} [1 kHz, 20 °C]: | 3,4 |
| CPY-2-02 | 5,50 % | ε_{⊥} [1 kHz, 20 °C]: | 6,4 |
| CPY-3-O2 | 10,00 % | K₁ [pN, 20 °C] | 13,3 |
| CCH-34 | 10,00 % | K₃ [pN, 20 °C] | 13,5 |
| CCH-23 | 22,00 % | V₀ [V, 20 °C]: | 2,24 |
| PYP-2-3 | 6,50 % | γ₁ [mPa·s, 20 °C]: | 106 |
| CCP-3-1 | 3,00 % | | |
| PCH-301 | 7,50 % | | |

### Beispiel 12

| | | | |
|---|---|---|---|
| PY-3-O2 | 11,00 % | Klärpunkt [°C]: | 79,5 |
| PY-3-O4 | 10,00 % | Δn [589 nm, 20 °C]: | 0,1176 |
| CCY-3-O2 | 7,50 % | Δε [1 kHz, 20 °C]: | -3,1 |
| CCY-4-O2 | 4,00 % | ε_{∥} [1 kHz, 20 °C]: | 3,5 |
| CPY-2-O2 | 10,00 % | ε_{⊥} [1 kHz, 20 °C]: | 6,5 |
| CPY-3-O2 | 10,00 % | K₁ [pN, 20 °C] | 15,1 |
| CCH-34 | 6,00 % | K₃ [pN, 20 °C] | 14,7 |
| CCH-23 | 22,00 % | V₀ [V, 20 °C]: | 2,31 |
| PYP-2-3 | 4,00 % | γ₁ [mPa·s, 20 °C]: | 121 |
| CCP-3-1 | 7,00 % | | |
| BCH-32 | 5,00 % | | |
| PCH-301 | 3,50 % | | |

## Patentansprüche

1. Flüssigkristallines Medium mit negativer dielektrischer Anisotropie auf der Basis eines Gemisches von polaren Verbindungen, **dadurch gekennzeichnet, dass** es mindestens eine Verbindung der Formel I, 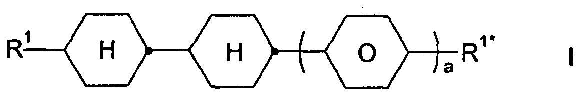 worin
R¹, R^{1*} jeweils unabhängig voneinander einen Alkylrest mit 1-6 C-Atomen, und
a 1
bedeuten,
enthält,
und
zusätzlich eine oder mehrere Verbindungen ausgewählt aus der Gruppe der Verbindungen der Formel IIC, 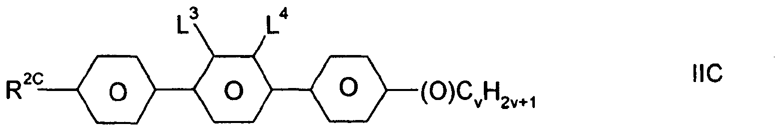 worin
R^{2C} H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 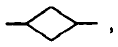 -C≡C-, -CF₂O-, -OCF₂-, -OC-O- oder -O-CO- so ersetzt sein können, dass O-Atome nicht direkt miteinander verknüpft sind, L³⁻⁴ jeweils unabhängig voneinander F oder Cl, und
v 1 bis 6
bedeuten,
oder
zusätzlich eine oder mehrere Verbindungen der Formeln L-1 bis L-11, 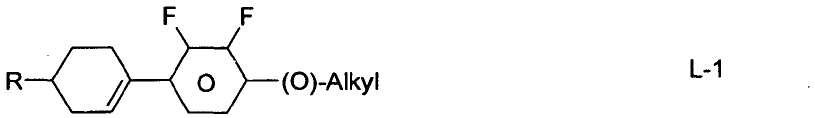 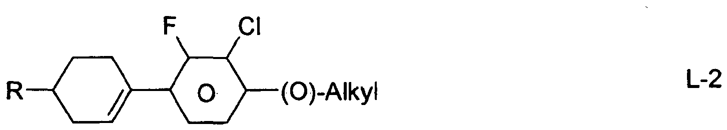 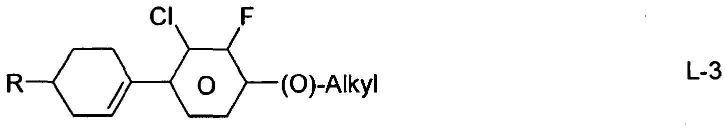 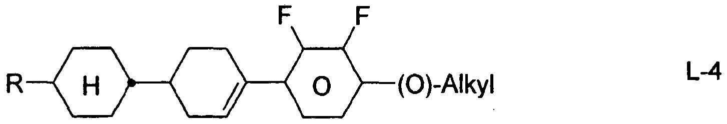 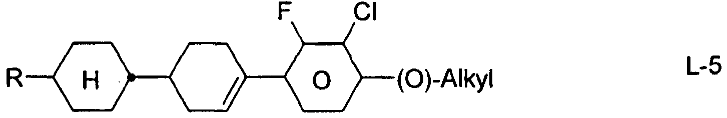 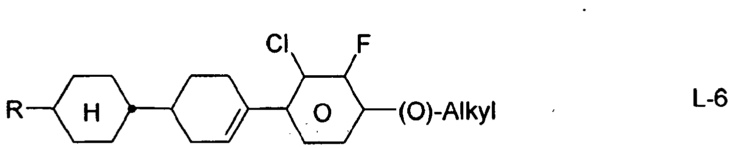 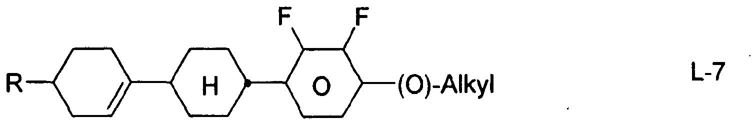 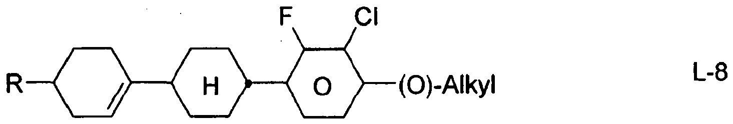 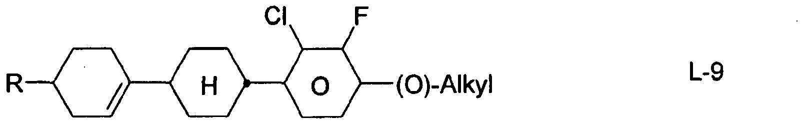 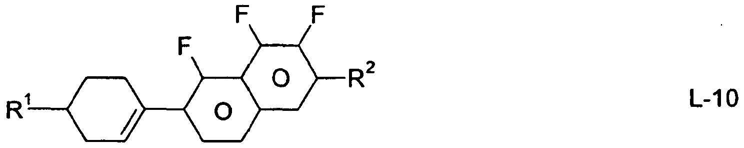 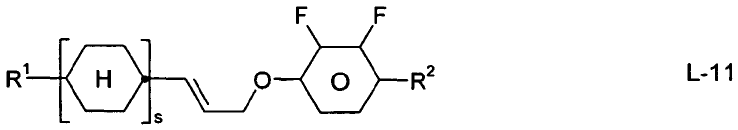 worin
R, R¹ und R² jeweils unabhängig voneinander die für R^{2C} in Anspruch 1 angegebenen Bedeutungen haben und Alkyl ein Alkylrest mit 1-6 C-Atomen, und
s 1 oder 2
bedeuten, enthält.

2. Flüssigkristallines Medium nach Anspruch 1, **dadurch gekennzeichnet, dass** es zusätzlich eine oder mehrere Verbindungen ausgewählt aus der Gruppe der Verbindungen der Formeln IIA und IIB, 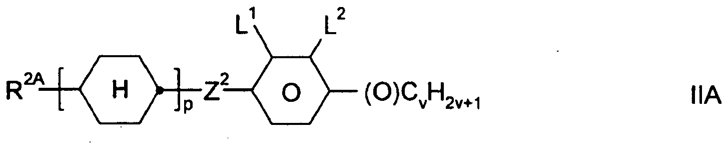 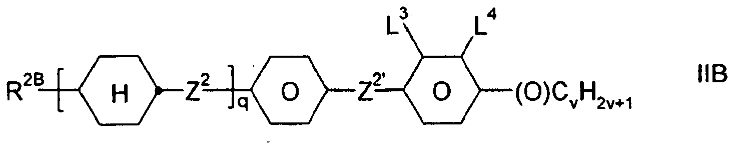 worin
R^{2A} und R^{2B} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 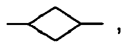 -C≡C-, -CF₂O-, -OCF₂-, -OC-O- oder -O-CO- so ersetzt sein können, dass O-Atome nicht direkt miteinander verknüpft sind, L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 1 oder 2,
q 0 oder 1, und
v 1 bis 6
bedeuten.
enthält.

3. Flüssigkristallines Medium nach Anspruch 1 oder 2, **dadurch gekennzeichnet, dass** es zusätzlich eine oder mehrere Verbindungen der Formel III, 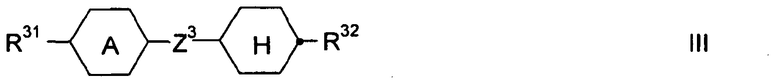 worin
R³¹ und R³² jeweils unabhängig voneinander einen geradkettigen Alkyl-, Alkoxyalkyl- oder Alkoxyrest mit bis zu 12 C-Atomen, und 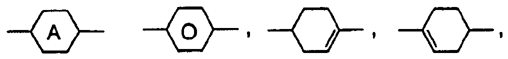 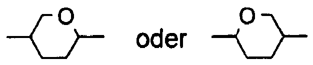
Z³ Einfachbindung, -CH₂CH₂-, -CH=CH-, -CF₂O-, -OCF₂-, -CH₂O-, -OCH₂-, -COO-, -OCO-, -C₂F₄-, -C₄H₉-, -CF=CF-
bedeuten, enthält.

4. Flüssigkristallines Medium nach einem oder mehreren der Ansprüche 1 bis 3, **dadurch gekennzeichnet, dass** das Medium mindestens eine Verbindung der Formeln I-1 bis I-6, 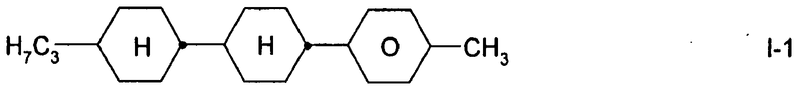 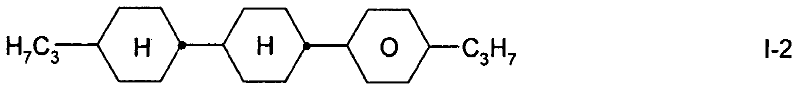 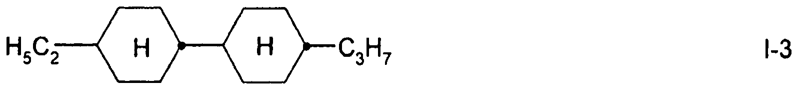 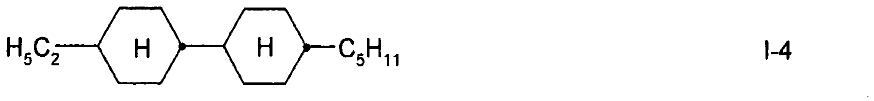 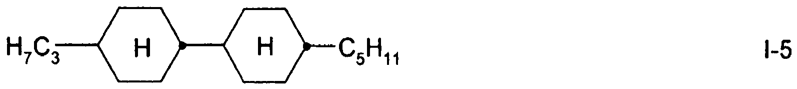 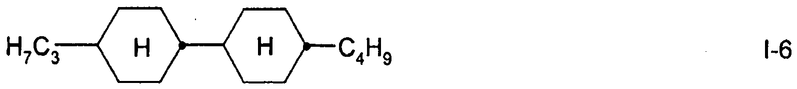 enthält.

5. Flüssigkristallines Medium nach einem oder mehreren der Ansprüche 1 bis 4, **dadurch gekennzeichnet, dass** es mindestens eine Verbindung der Formel I*, 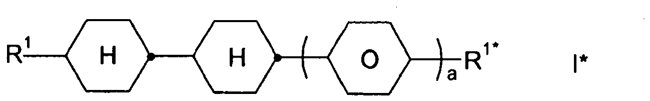 worin
R¹, R^{1*} jeweils unabhängig voneinander einen Alkylrest mit 1-6 C-Atomen, und
a 0
bedeuten,
enthält.

6. Flüssigkristallines Medium nach einem oder mehreren der Ansprüche 1 bis 5, **dadurch kennzeichnet, dass** das Medium zusätzlich eine oder mehrere Terphenyle der Formeln T-1 bis T-20, 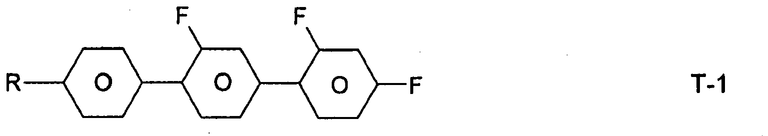 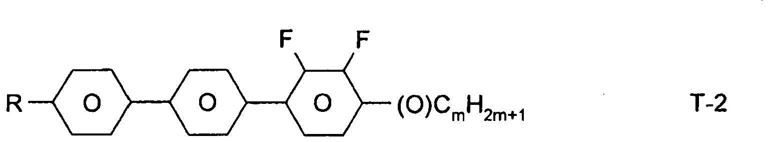 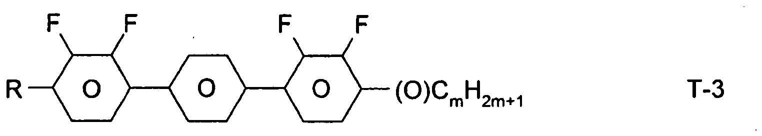 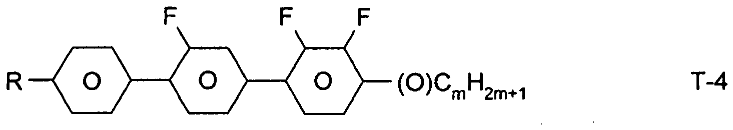 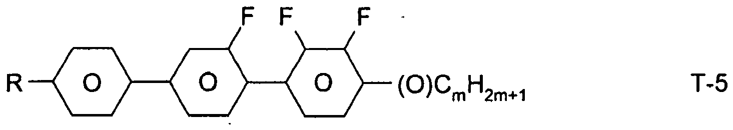 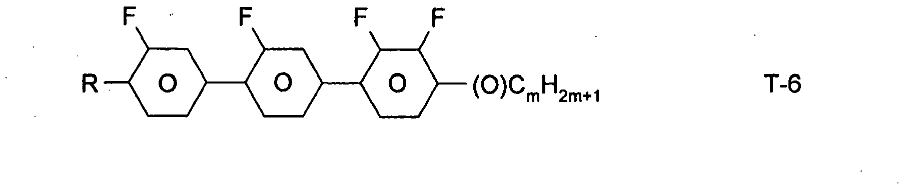 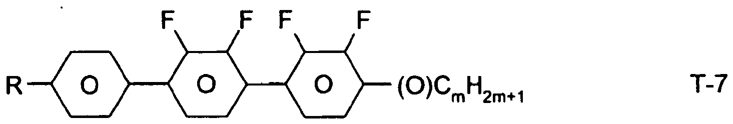 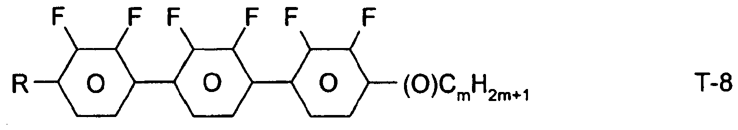 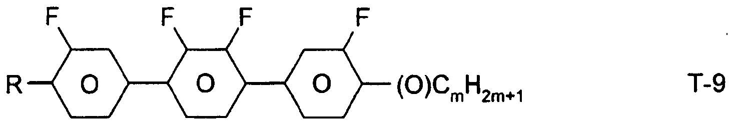 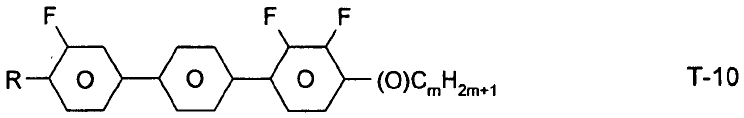 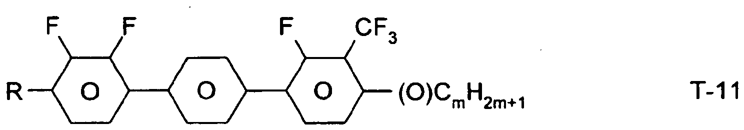 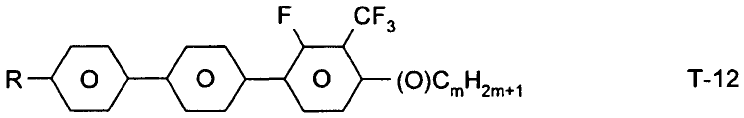 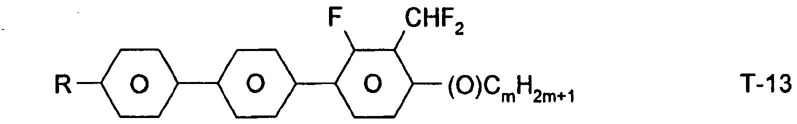 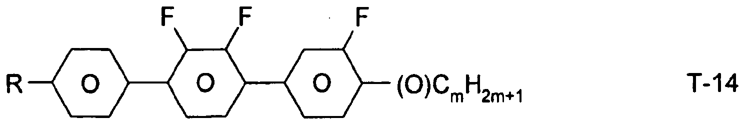 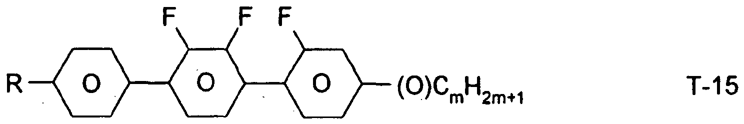 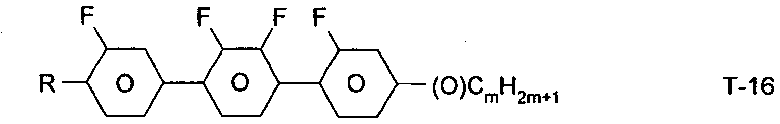 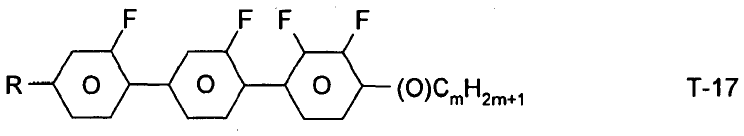 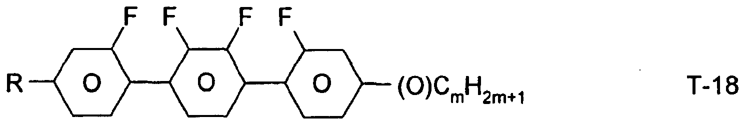 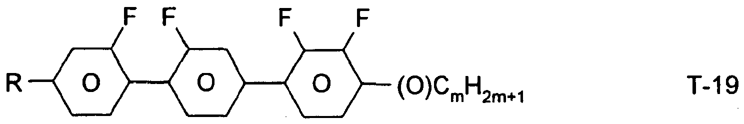 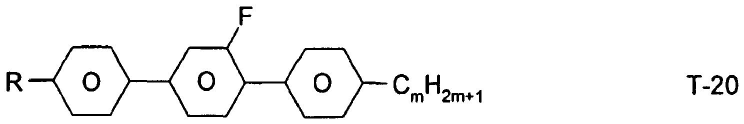 worin
R geradkettiger Alkyl- oder Alkoxyrest mit 1-7 C-Atomen bedeutet, und
m 1-6
bedeuten, enthält.

7. Flüssigkristallines Medium nach einem oder mehreren der Ansprüche 1 bis 6, **dadurch gekennzeichnet, dass** das Medium zusätzlich eine oder mehrere Verbindungen der Formeln O-1 bis O-18, 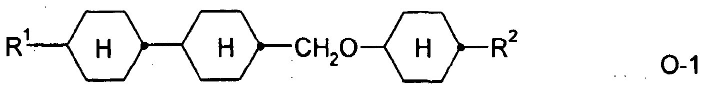 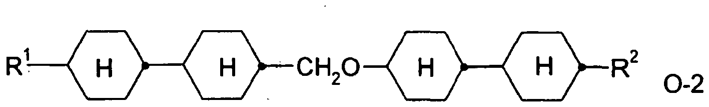 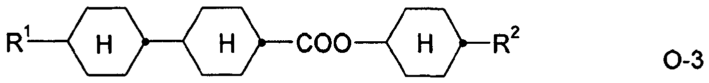 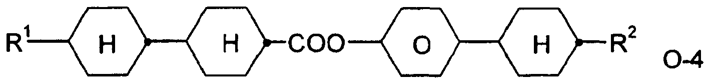 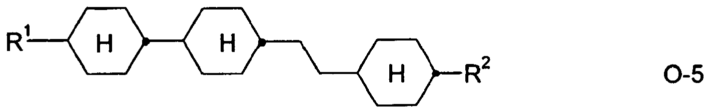 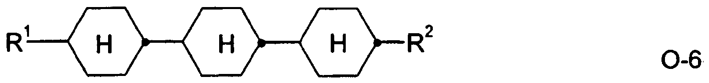 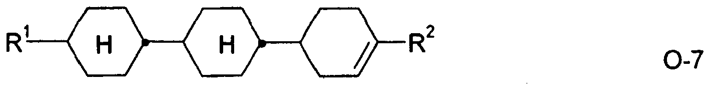 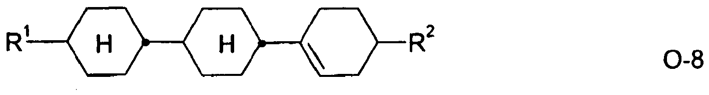 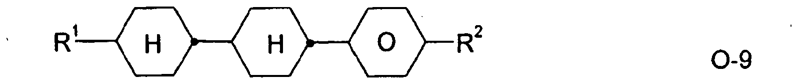 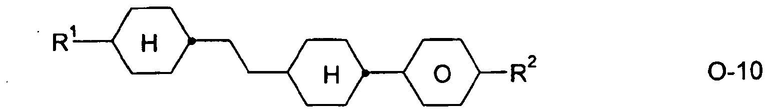 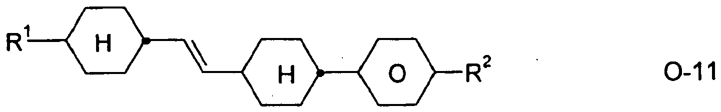 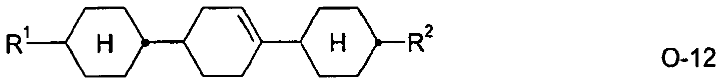 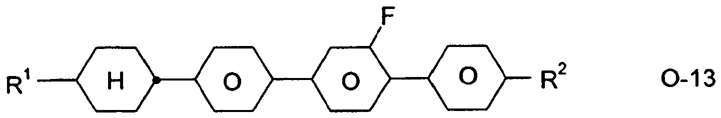 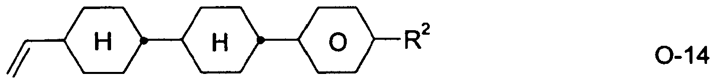 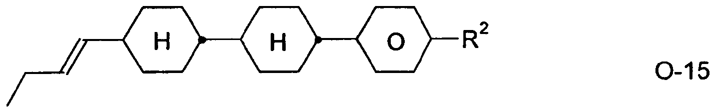 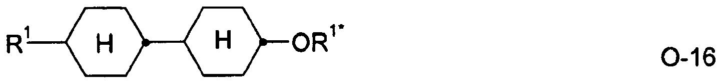 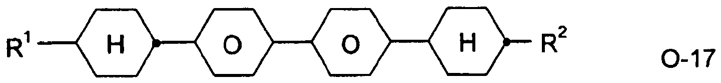 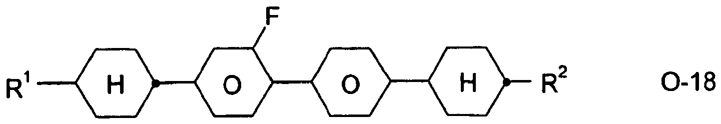 worin R¹ und R² jeweils unabhängig voneinander die für R^{2A} in Anspruch 2 angegebenen Bedeutungen haben,
enthält.

8. Flüssigkristallines Medium nach einem oder mehreren der Ansprüche 1 bis 7, **dadurch gekennzeichnet, dass** das Medium zusätzlich eine oder mehrere Indan-Verbindungen der Formel In, 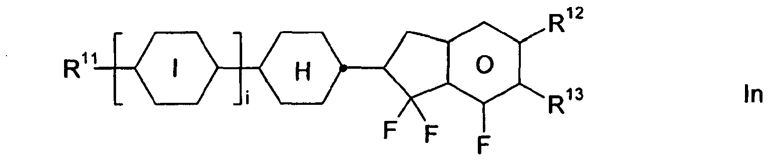 worin
R¹¹, R¹², R¹³ ein geradkettiger Alkyl-, oder Alkoxy-, Alkoxyalkyl-, Alkenylrest und 1-5 C-Atomen,
R¹² und R¹³ zusätzlich Halogen, 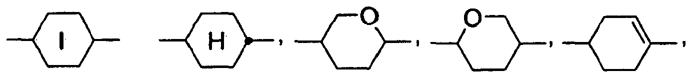 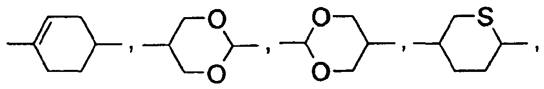 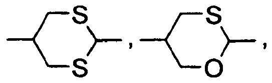
i 0, 1 oder 2
bedeuten, enthält.

9. Flüssigkristallines Medium nach einem oder mehreren der Ansprüche 1 bis 8, **dadurch gekennzeichnet, dass** der Anteil an Verbindungen der Formel I im Gesamtgemisch ≥ 3 Gew.% beträgt.

10. Verfahren zur Herstellung eines flüssigkristallinen Mediums nach einem oder mehreren der Ansprüche 1 bis 9, **dadurch gekennzeichnet, dass** man mindestens eine Verbindung der Formel I mit mindestens einer weiteren flüssigkristallinen Verbindung mischt und gegebenenfalls Additive zusetzt.

11. Verwendung des flüssigkristallinen Mediums nach einem oder mehreren der Ansprüche 1 bis 9 in elektrooptischen Anzeigen.

12. Elektrooptische Anzeige mit einer Aktivmatrix-Addressierung,
**dadurch gekennzeichnet, dass** sie als Dielektrikum ein flüssigkristallines Medium nach einem oder mehreren der Ansprüche 1 bis 9 enthält.

13. Elektrooptische Anzeige nach Anspruch 12, **dadurch gekennzeichnet, dass** es sich um eine VA-, PS-VA-, PALC-, FFS- oder IPS- Anzeige handelt.

## Claims

1. Liquid-crystalline medium having negative dielectric anisotropy based on a mixture of polar compounds, **characterised in that** it comprises at least one compound of the formula I, 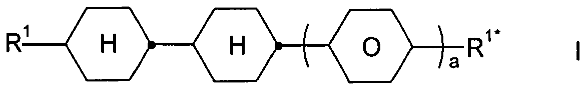 in which
R¹, R^{1*} each, independently of one another, denote an alkyl radical having 1-6 C atoms, and
a denotes 1,
and
additionally one or more compounds selected from the group of the compounds of the formula IIC, 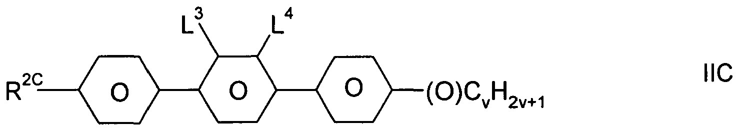 in which
R^{2C} denotes H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 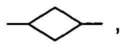 -C≡C-, -CF₂O-, -OCF₂-, -OC-O- or -O-CO- in such a way that O atoms are not linked directly to one another,
L³⁻⁴ each, independently of one another, denote F or Cl, and
v denotes 1 to 6,
or
additionally one or more compounds of the formulae L-1 to L-11, 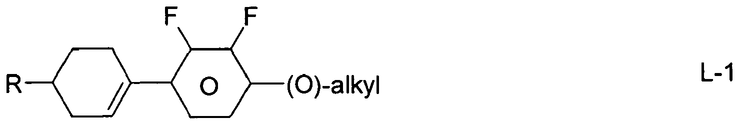 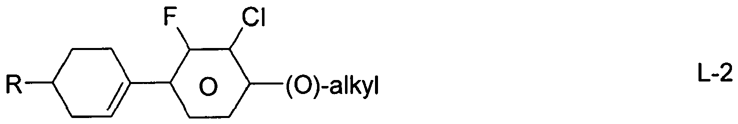 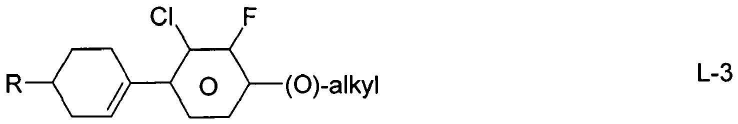 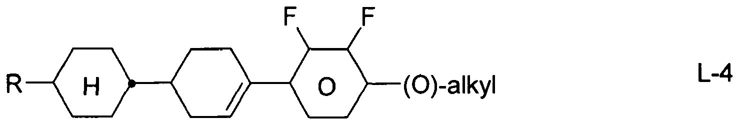 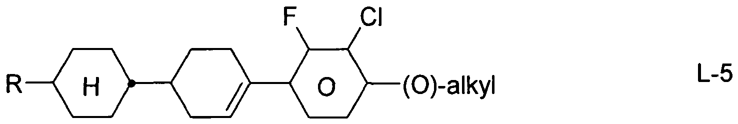 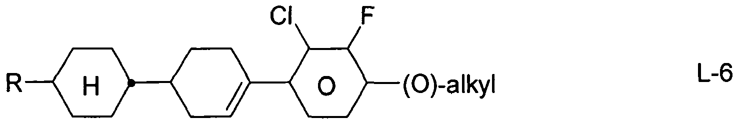 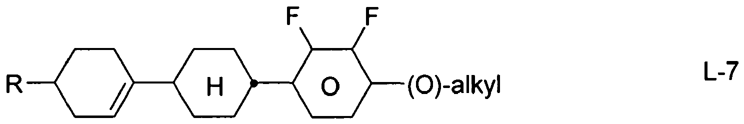 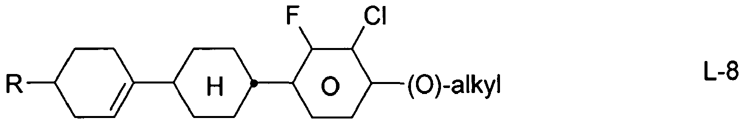 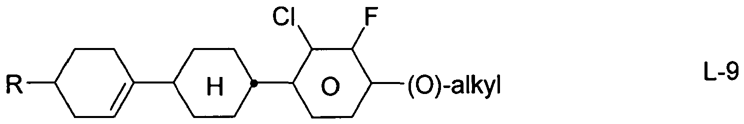 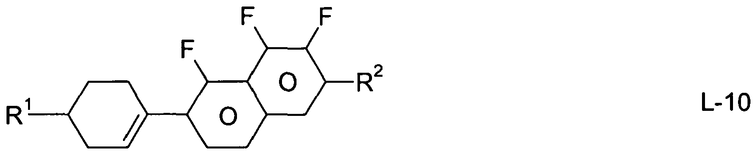 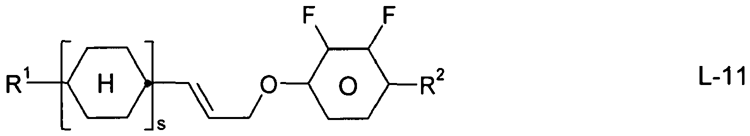 in which
R, R¹ and R² each, independently of one another, have the meanings indicated for R^{2C} in Claim 1 and alkyl denotes an alkyl radical having 1-6 C atoms, and
s denotes 1 or 2.

2. Liquid-crystalline medium according to Claim 1, **characterised in that** it additionally comprises one or more compounds selected from the group of the compounds of the formulae IIA and IIB, 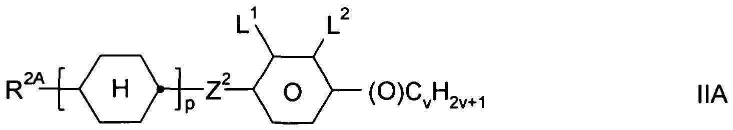 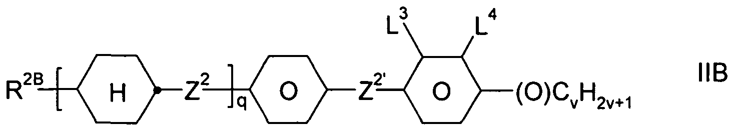 in which
R^{2A} and R^{2B} each, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 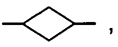 -C≡C-, -CF₂O-, -OCF₂-, -OC-O- or -O-CO- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 1 or 2,
q denotes 0 or 1, and
v denotes 1 to 6.

3. Liquid-crystalline medium according to Claim 1 or 2, **characterised in that** it additionally comprises one or more compounds of the formula III, 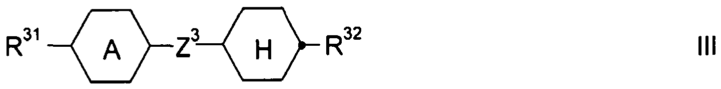 in which
R³¹ and R³² each, independently of one another, denote a straight-chain alkyl, alkoxyalkyl or alkoxy radical having up to 12 C atoms, and 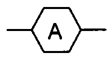 denotes 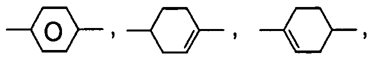 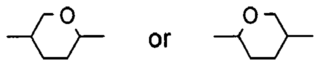
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

4. Liquid-crystalline medium according to one or more of Claims 1 to 3, **characterised in that** the medium comprises at least one compound of the formulae I-1 to I-6,

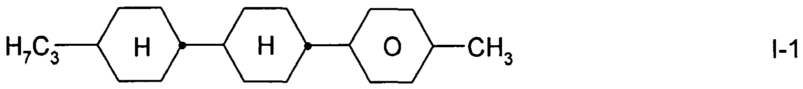

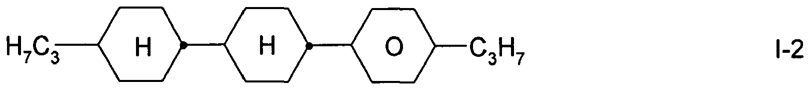

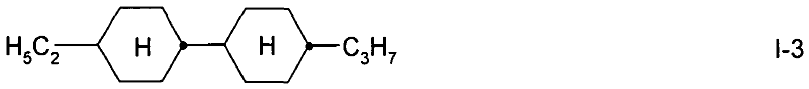

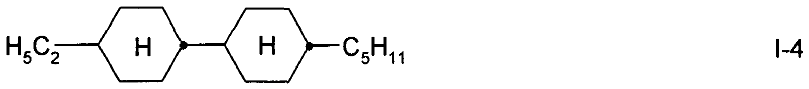

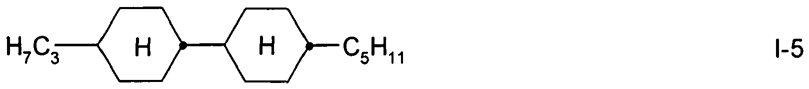

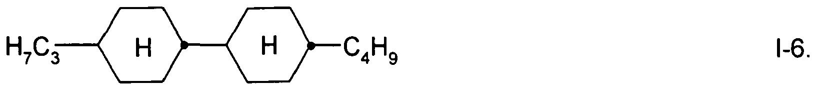

5. Liquid-crystalline medium according to one or more of Claims 1 to 4, **characterised in that** it comprises at least one compound of the formulae I*, 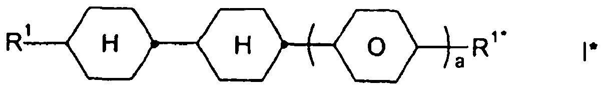 in which
R¹, R^{1'} each, independently of one another, denote an alkyl radical having 1-6 C atoms, and
a denotes 0.

6. Liquid-crystalline medium according to one or more of Claims 1 to 5, **characterised in that** the medium additionally comprises one or more terphenyls of the formulae T-1 to T-20, 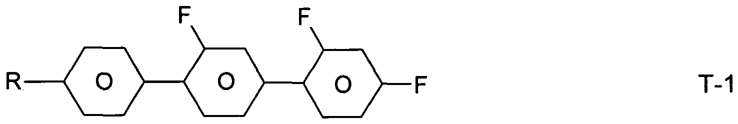 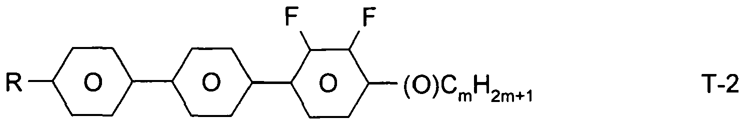 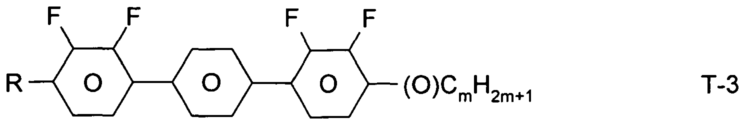 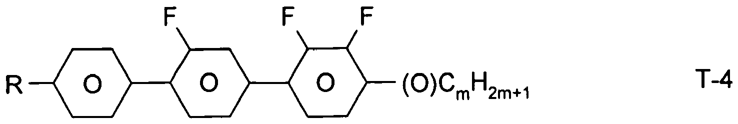 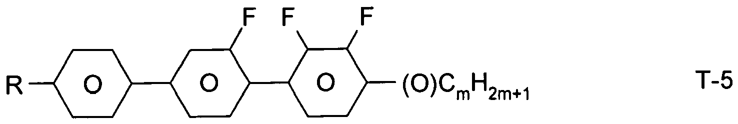 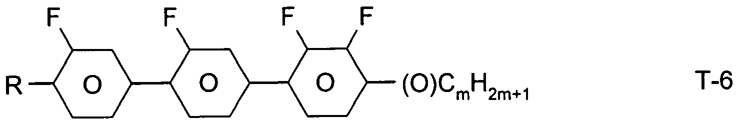 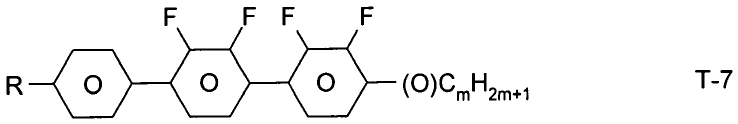 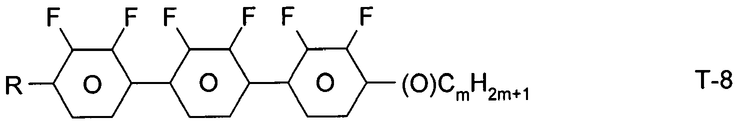 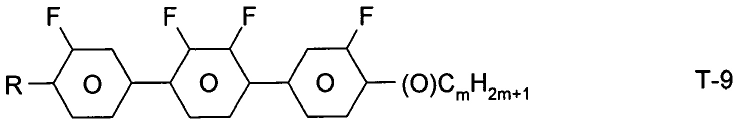 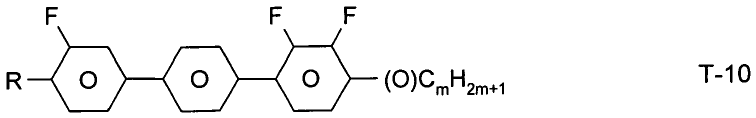 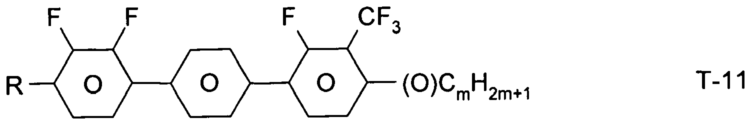 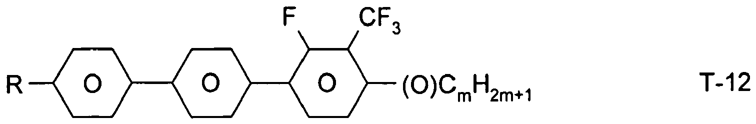 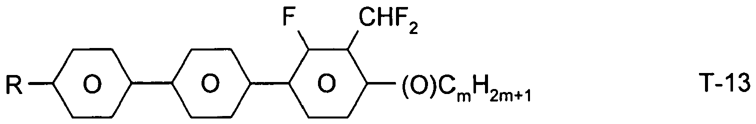 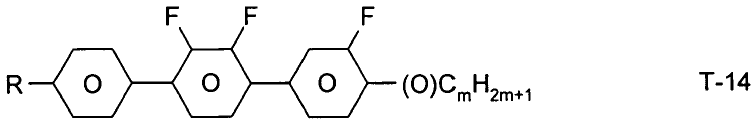 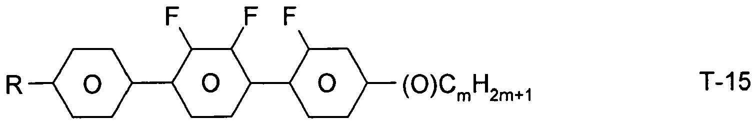 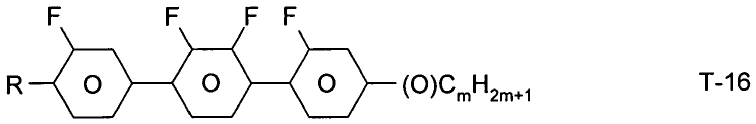 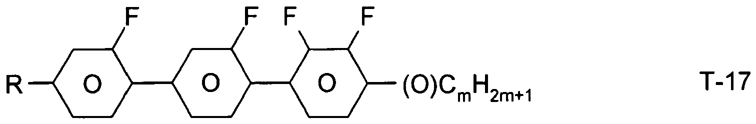 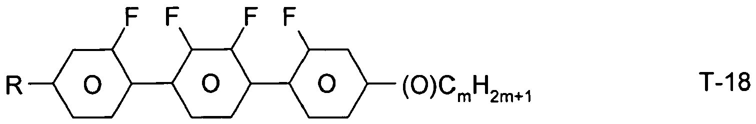 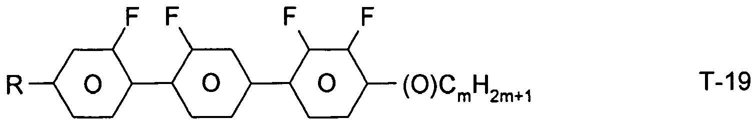 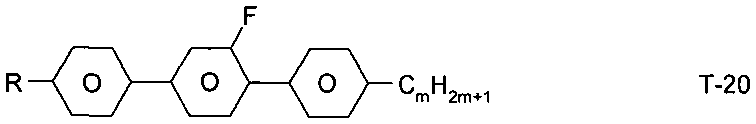 in which
R denotes a straight-chain alkyl or alkoxy radical having 1-7 C atoms, and
m denotes 1-6.

7. Liquid-crystalline medium according to one or more of Claims 1 to 6, **characterised in that** the medium additionally comprises one or more compounds of the formulae O-1 to O-18, 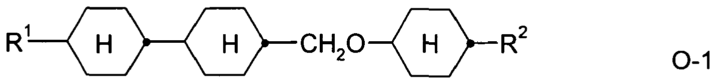 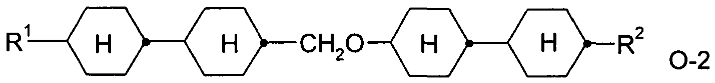 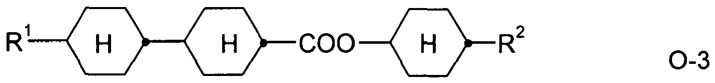 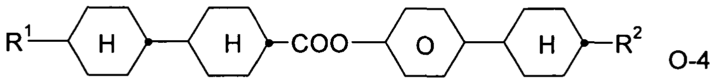 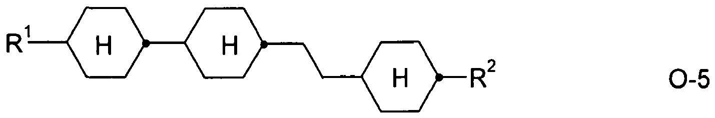 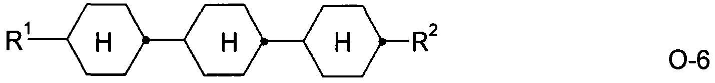 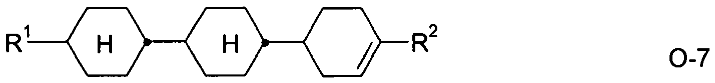 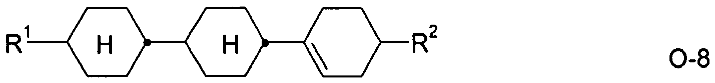 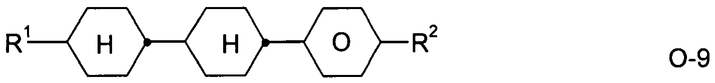 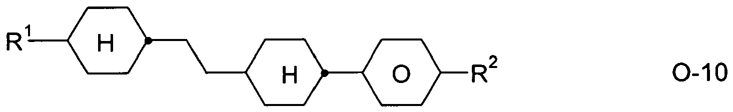 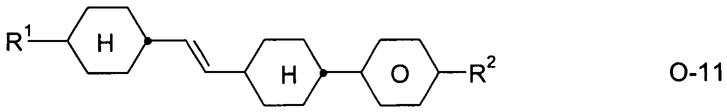 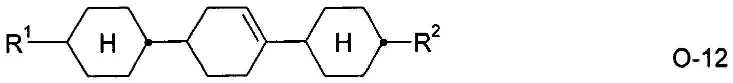 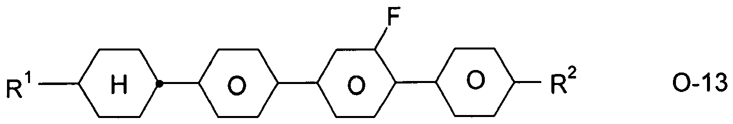 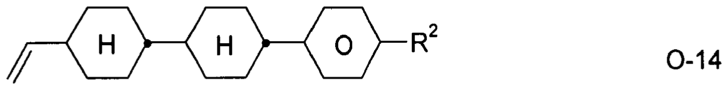 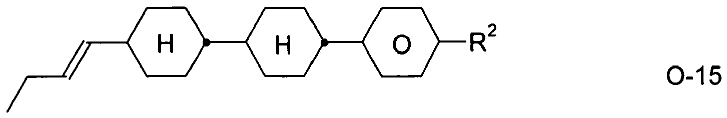 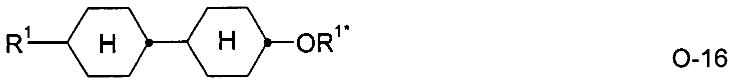 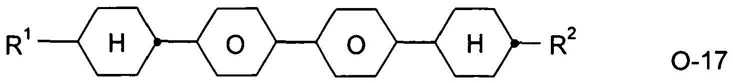 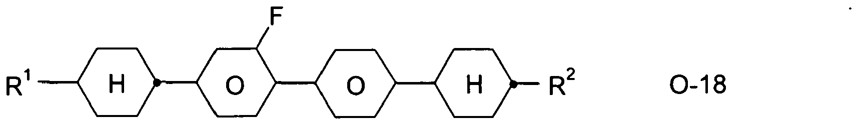 in which
R¹ and R² each, independently of one another, have the meanings indicated for R^{2A} in Claim 2.

8. Liquid-crystalline medium according to one or more of Claims 1 to 7, **characterised in that** the medium additionally comprises one or more indane compounds of the formula In, 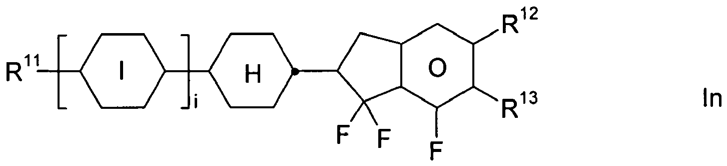 in which
R¹¹, R¹², R¹³ denote a straight-chain alkyl, alkoxy, alkoxyalkyl or alkenyl radical having 1-5 C atoms,
R¹² and R¹³ additionally denote halogen, 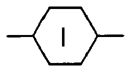 denotes 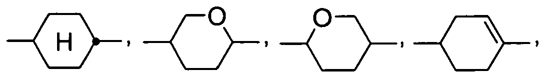 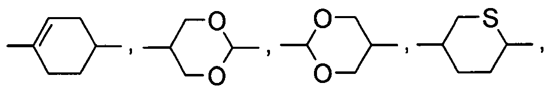 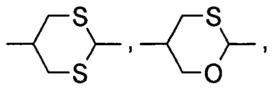
i denotes 0, 1 or 2.

9. Liquid-crystalline medium according to one or more of Claims 1 to 8, **characterised in that** the proportion of compounds of the formula I in the mixture as a whole is ≥ 3% by weight.

10. Process for the preparation of a liquid-crystalline medium according to one or more of Claims 1 to 9, **characterised in that** at least one compound of the formula I is mixed with at least one further liquid-crystalline compound, and additives are optionally added.

11. Use of the liquid-crystalline medium according to one or more of Claims 1 to 9 in electro-optical displays.

12. Electro-optical display having active-matrix addressing, **characterised in that** it contains, as dielectric, a liquid-crystalline medium according to one or more of Claims 1 to 9.

13. Electro-optical display according to Claim 12, **characterised in that** it is a VA, PS-VA, PALC, FFS or IPS display.

## Revendications

1. Milieu cristallin liquide présentant une anisotropie diélectrique négative basé sur un mélange de composés polaires, **caractérisé en ce qu'**il comprend au moins un composé de la formule I, 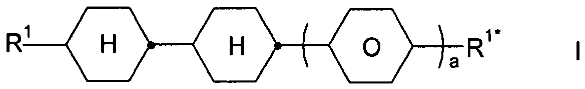 dans laquelle
R¹, R^{1*} représentent, chacun indépendamment de l'autre, un radical alkyle comportant 1-6 atomes de C, et
a représente 1,
et
additionnellement, un ou plusieurs composé(s) choisi(s) parmi le groupe des composés de la formule IIC, 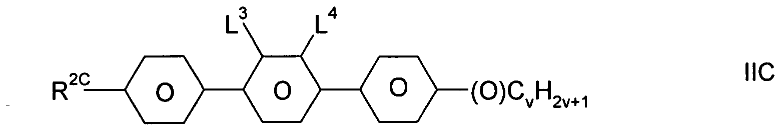 dans laquelle
R^{2C} représente H, un radical alkyle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 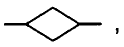 -C≡C-, -CF₂O-, -OCF₂-, -OC-O- ou -O-CO- de telle sorte que des atomes de O ne soient pas liés directement les uns aux autres,
L³⁻⁴ représentent, chacun indépendamment des autres, F ou Cl, et
v représente 1 à 6,
ou
additionnellement, un ou plusieurs composé(s) des formules L-1 à L-11, 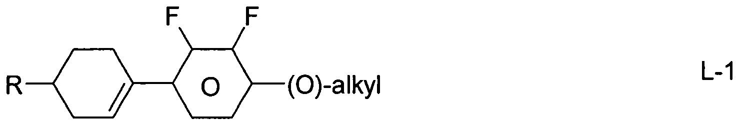 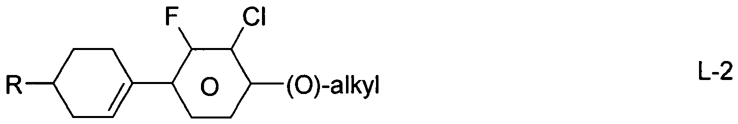 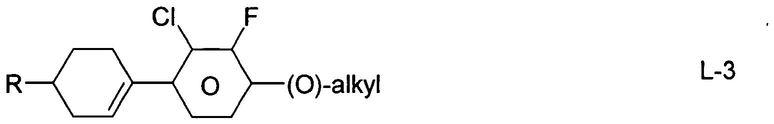 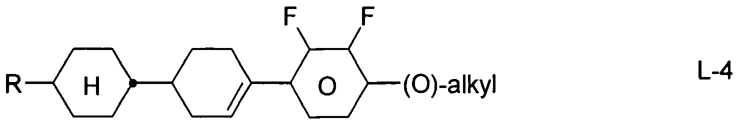 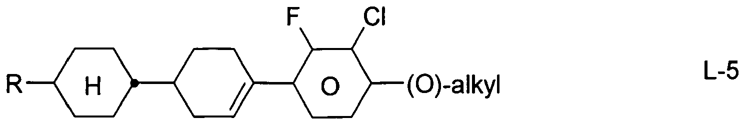 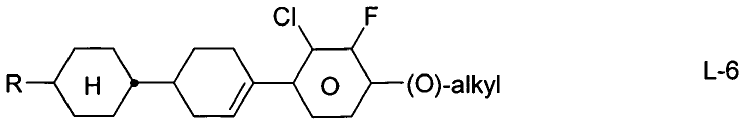 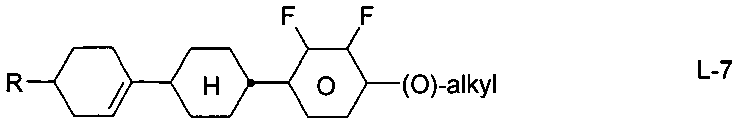 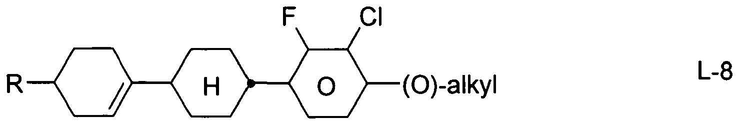 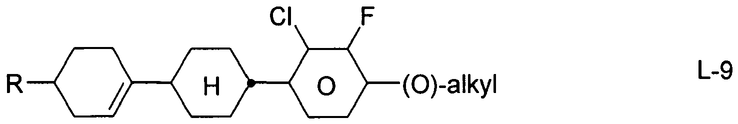 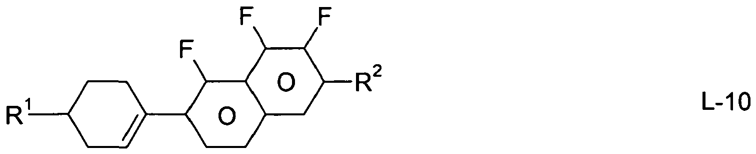 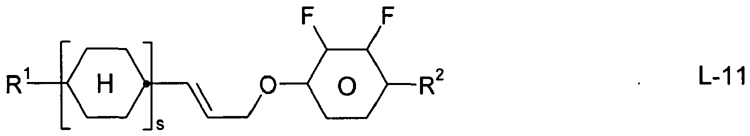 dans lesquelles
R, R¹ et R² présentent, chacun indépendamment des autres, les significations indiquées pour R^{2C} selon la revendication 1 et alkyl représente un radical alkyle comportant 1-6 atomes de C, et
s représente 1 ou 2.

2. Milieu cristallin liquide selon la revendication 1, **caractérisé en ce qu'**il comprend additionnellement un ou plusieurs composé(s) choisi(s) parmi le groupe des composés des formules IIA et IIB, 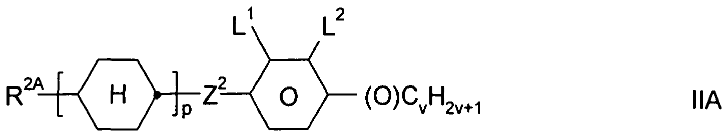 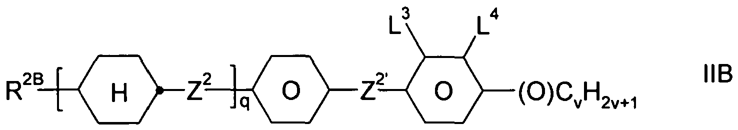 dans lesquelles
R^{2A} et R^{2B} représentent, chacun indépendamment de l'autre, H, un radical alkyle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 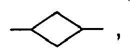 -C≡C-, -CF₂O-, -OCF₂-, -OC-O- ou -O-CO- de telle sorte que des atomes de O ne soient pas liés directement les uns aux autres,
L¹⁻⁴ représentent, chacun indépendamment des autres, F ou Cl,
Z² et Z^{2'} représentent, chacun indépendamment de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p représente 1 ou 2,
q représente 0 ou 1, et
v représente 1 à 6.

3. Milieu cristallin liquide selon la revendication 1 ou 2, **caractérisé en ce qu'**il comprend additionnellement un ou plusieurs composé(s) de la formule III, 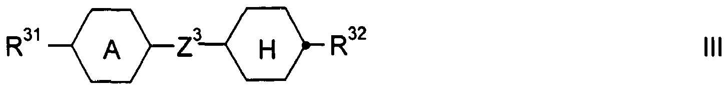 dans laquelle
R³¹ et R³² représentent, chacun indépendamment de l'autre, un radical alkyle, alcoxyalkyle ou alcoxy en chaîne droite comportant jusqu'à 12 atomes de C, et 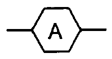 représente 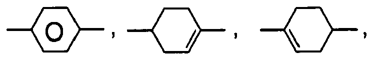 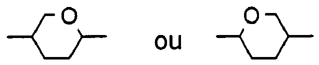
Z³ représente une liaison simple, -CH₂CH₂-, -CH=CH-, -CF₂O- -OCF₂-, -CH₂O-, -OCH₂-, -COO-, -OCO-, -C₂F₄-, -C₄H₉-, -CF=CF-.

4. Milieu cristallin liquide selon une ou plusieurs des revendications 1 à 3, **caractérisé en ce que** le milieu comprend au moins un composé des formules I-1 à I-6,

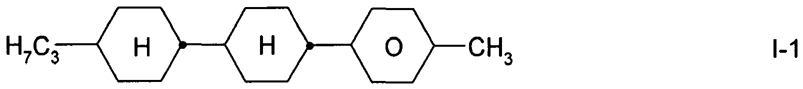

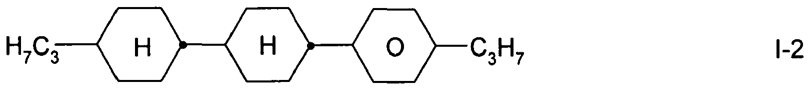

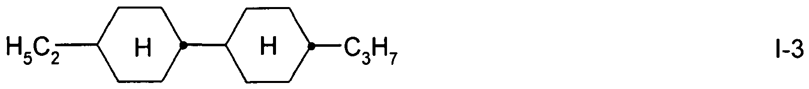

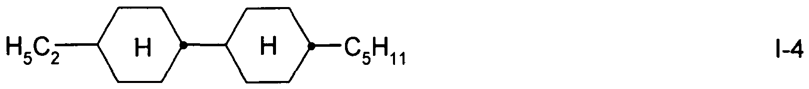

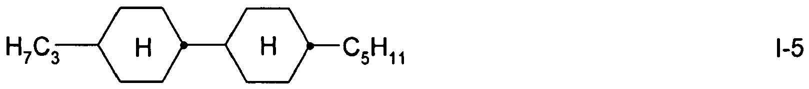

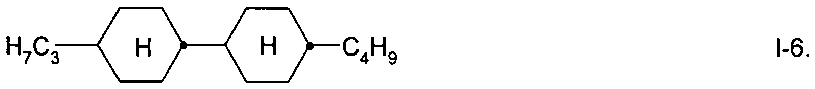

5. Milieu cristallin liquide selon une ou plusieurs des revendications 1 à 4, **caractérisé en ce qu'**il comprend au moins un composé de la formule I*, 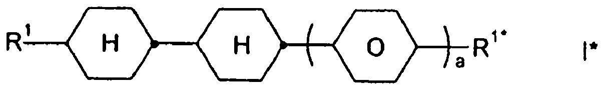 dans laquelle
R¹ et R^{1'} représentent, chacun indépendamment de l'autre, un radical alkyle, comportant 1-6 atomes de C, et
a représente 0.

6. Milieu cristallin liquide selon une ou plusieurs des revendications 1 à 5, **caractérisé en ce que** le milieu comprend additionnellement un ou plusieurs terphényl(s) des formules T-1 à T-20, 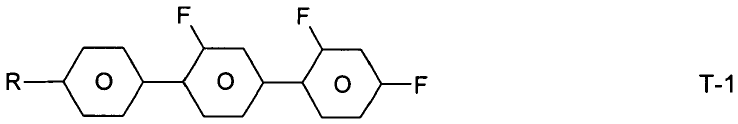 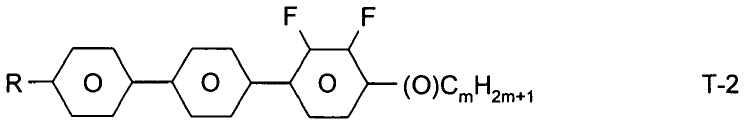 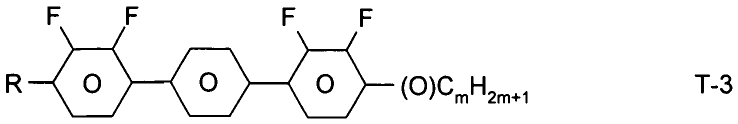 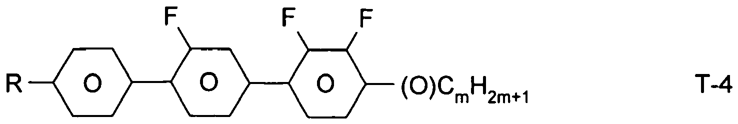 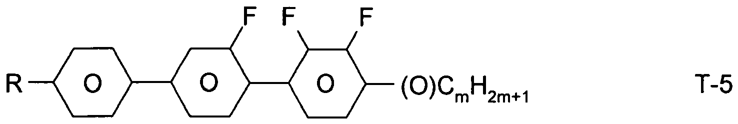 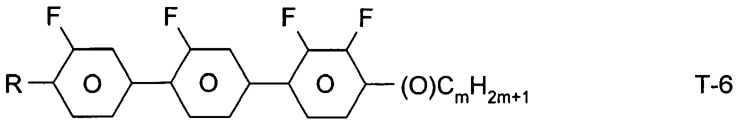 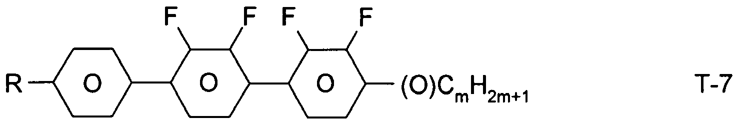 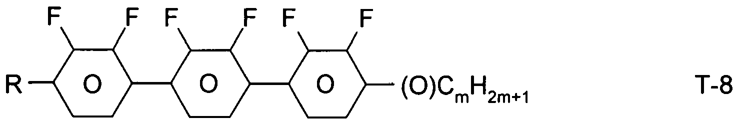 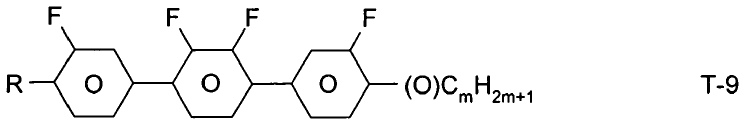 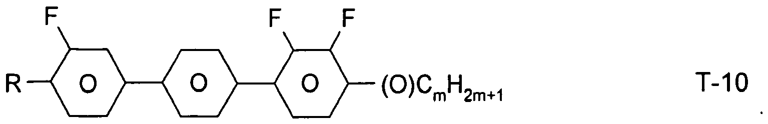 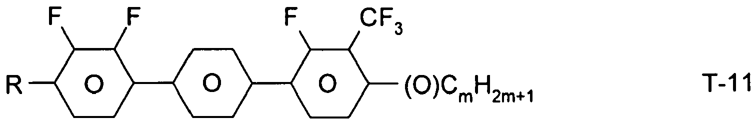 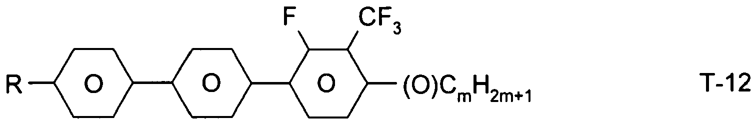 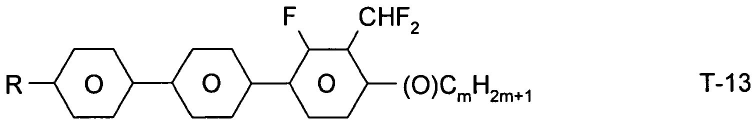 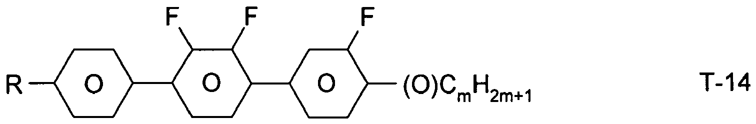 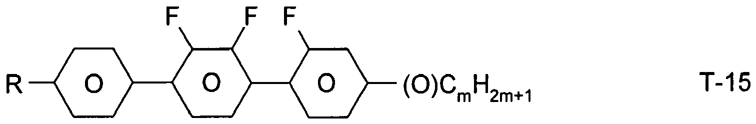 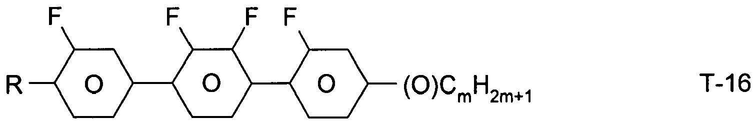 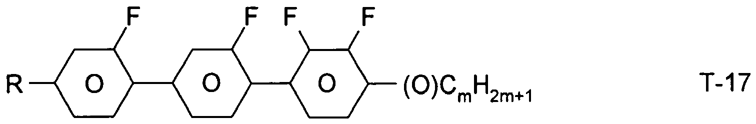 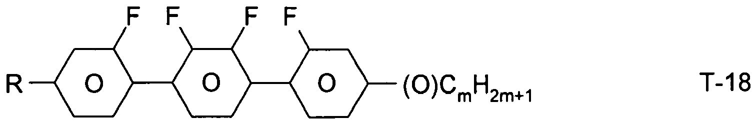 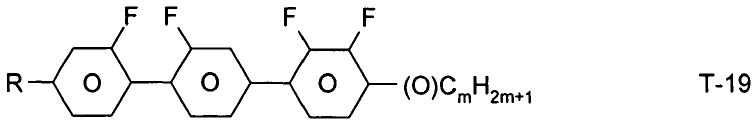 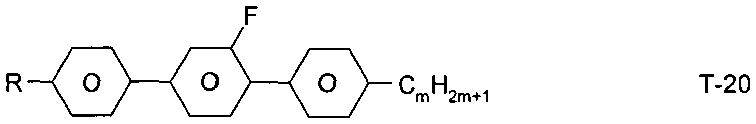 dans lesquelles
R représente un radical alkyle ou alcoxy en chaîne droite comportant 1-7 atomes de C, et
m représente 1-6.

7. Milieu cristallin liquide selon une ou plusieurs des revendications 1 à 6, **caractérisé en ce que** le milieu comprend additionnellement un ou plusieurs composé(s) des formules O-1 à O-18, 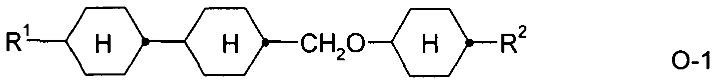 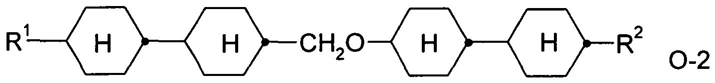 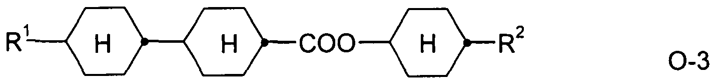 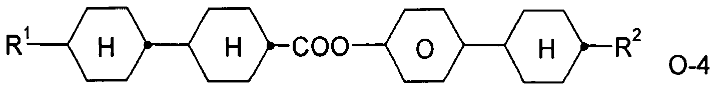 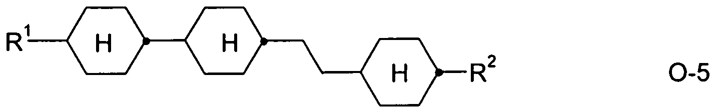 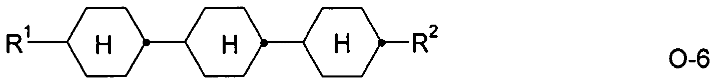 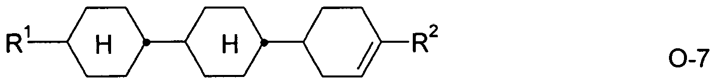 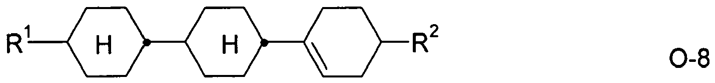 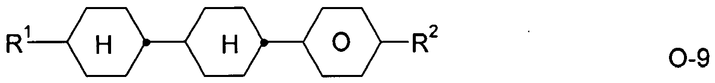 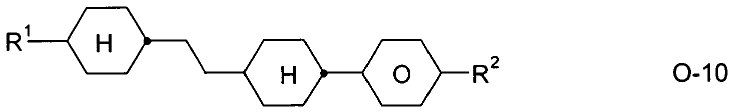 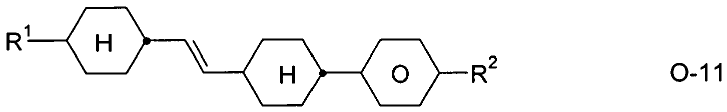 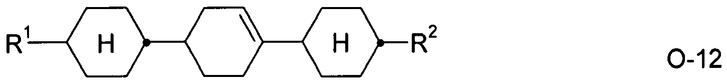 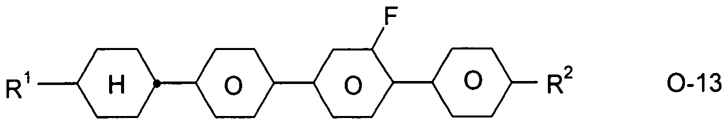 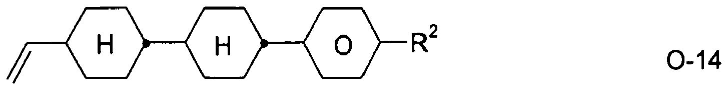 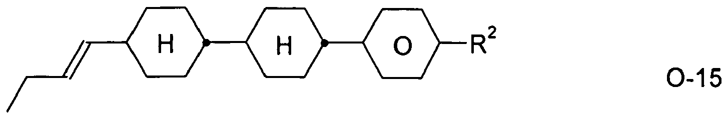 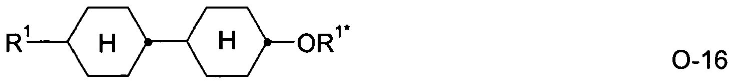 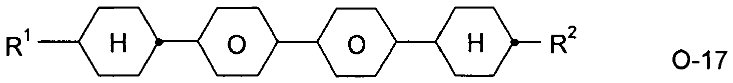 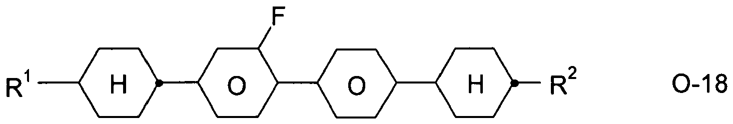 dans lesquelles
R¹ et R² présentent, chacun indépendamment de l'autre, les significations indiquées pour R^{2A} selon la revendication 2.

8. Milieu cristallin liquide selon une ou plusieurs des revendications 1 à 7, **caractérisé en ce que** le milieu comprend additionnellement un ou plusieurs composé(s) indane de la formule In, 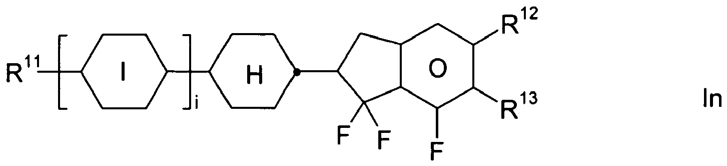 dans laquelle
R¹¹, R¹², R¹³ représentent un radical alkyle, alcoxy, alcoxyalkyle ou alkényle en chaîne droite comportant 1-5 atomes de C,
R¹² et R¹³ représentent additionnellement halogène, 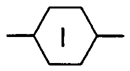 représente 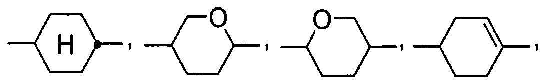 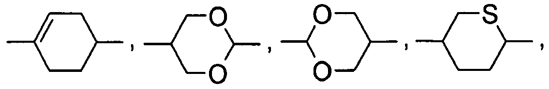 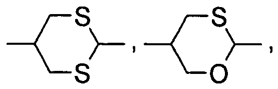
i représente 0, 1 ou 2.

9. Milieu cristallin liquide selon une ou plusieurs des revendications 1 à 8, **caractérisé en ce que** la proportion de composés de la formule I dans le mélange pris dans sa globalité est ≥ 3% en poids.

10. Procédé pour la préparation d'un milieu cristallin liquide selon une ou plusieurs des revendications 1 à 9, **caractérisé en ce qu'**au moins un composé de la formule I est mélangé avec au moins un autre composé cristallin liquide, et des additifs sont en option ajoutés.

11. Utilisation du milieu cristallin liquide selon une ou plusieurs des revendications 1 à 9 dans des affichages électro-optiques.

12. Affichage électro-optique présentant un adressage par matrice active, **caractérisé en ce qu'**il contient, en tant que diélectrique, un milieu cristallin liquide selon une ou plusieurs des revendications 1 à 9.

13. Affichage électro-optique selon la revendication 12, **caractérisé en ce qu'**il s'agit d'un affichage VA, PS-VA, PALC, FFS ou IPS.
